# EUROPÄISCHE PATENTSCHRIFT

(11) **EP 0 998 541 B1**
(45) Veröffentlichungstag und Bekanntmachung des Hinweises auf die Patenterteilung: **13.03.2002**
(21) Anmeldenummer: 98943752.0
(22) Anmeldetag: 21.07.1998
(51) Int. Cl.: C09K 19/02, C09K 19/46, G06K 19/077

(54) **CHIPKARTE MIT BISTABILER ANZEIGE**
CHIP CARD WITH A BISTABLE LIQUID CRYSTAL DISPLAY
CARTE A PUCE DOTEE D'UN AFFICHEUR BISTABLE

(30) Priorität: 25.07.1997 DE 19732162
(43) Veröffentlichungstag der Anmeldung: 10.05.2000
(73) Patentinhaber: Aventis Research & Technologies GmbH & Co. KG, 65926 Frankfurt am Main (DE)
(72) Erfinder: DÜBAL, Hans-Rolf, D-65343 Eltville (DE); SCHMIDT, Wolfgang, D-51143 Köln (DE)
(74) Vertreter: Isenbruck, Günter
(86) Internationale Anmeldenummer: EP9804546
(87) Internationale Veröffentlichungsnummer: WO9905237

(56) Entgegenhaltungen:
- EP-A- 0 291 259
- EP-A- 0 694 599

## Beschreibung

Unter einer Chipkarte versteht man eine Karte, üblicherweise aus Kunststoff und im Kreditkartenformat, versehen mit einem integrierten Schaltkreis, welcher Informationen elektronisch speichern und/oder verarbeiten kann, und Mitteln zur Informationsübertragung zwischen der Karte und einem elektronischen Lese- und/oder Schreibsystem.
Eine Smartcard ist eine Chipkarte, die zusätzlich Mittel zur Überprüfung /Kontrolle des Zugriffs auf die Karte enthält. Beispielsweise kann dieses Mittel ein integrierter Schaltkreis sein, durch den kontrolliert wird, wer die gespeicherten Informationen zu welchem Zweck verwendet. Dadurch kann die Datensicherheit erhöht werden.

Chip- bzw. Smartkarten sind, beispielsweise als Telefon- und Kreditkarten "Medicards", "Cashcards" und als Ausweise zur Zugangskontrolle, bereits in vielfältigem Einsatz.
Für die nahe Zukunft erwartet man ein weiteres Vordringen dieser Technologie in Bereiche wie die "elektronische Brieftasche", d.h. Ersatz von Bargeld, Fahrkarten und Pay-TV.

Wünschenswert und bereits vorgeschlagen für Chipkarten ist eine permanent, sichtbare elektronische Anzeige (Display) auf der Karte, die Informationen, beispielsweise über Füllstand, Restbetrag oder Datumsangaben, liefert.

Eine solche Anzeige sollte auch ohne das Anlegen einer elektrischen Spannung lesbar sein, da weder die Dicke noch die Herstellkosten einer Karte den Einbau einer Batterie erlauben. Die Anzeige muß also eine optische Speicherfähigkeit besitzen.

Aus Gründen der optischen Bistabilität wurden für solche Anwendungen bisher oberflächenstabilisierte-ferroelektrische-Flüssigkristall-Displays (Surface Stabilized Ferroelectric Liquid Crystal Displays, SSFLCD) und Bistabil-Nematische-Anzeigen (siehe E. Lüder et al. 1997 International Symposium, Seminar & Exhibition, Society of Information Display, Boston, Massachusetts, Artikel 9.4, SID 97 DIGEST, S. 109-112) sowie oberflächen- oder polymerstabilisierte-cholesterische-Texturen (SSCT oder PSCT) vorgeschlagen.

SSFLCD's sind bereits als Computerdisplays im Einsatz, die Verwendung in Chipkarten erfordert jedoch ein beträchtlich anderes Eigenschaftsprofil, das beispielsweise nach ISO 7816 neben der optischen Speicherfähigkeit Druck- und Stoßfestigkeit, Biegsamkeit, eine niedrige Adressierspannung, Lesbarkeit bei Tageslicht und besonders geringe Dicke und Gewicht umfaßt.

Es besteht daher ein hoher Bedarf an SSFLC-Displays bzw. an ferroelektrischen Flüssigkristallmischungen (FLC) für solche Displays, die speziell den Anforderungen an Chip- oder Smartcards gewachsen sind.

Es wurde nun überraschend gefunden, daß FLC-Mischungen, die mesogene Verbindungen mit teil- oder perfluorierten Seitenketten enthalten, in besonderer Weise für die Verwendung in Displays für Chipkarten geeignet sind.

Gegenstand der Erfindung ist daher eine Chipkarte, enthaltend ein ferroelektrisches Flüssigkristalldisplay mit einem ferroelektrischen Flüssigkristall, wobei der Flüssigkristall eine oder mehrere mesogene Verbindungen enthält und wobei diese mesogenen Verbindungen eine Kernstruktur aus zwei oder mehr Ringverbindungen und eine oder zwei Seitenketten enthalten, dadurch gekennzeichnet, daß mindestens eine mesogene Verbindung mindestens eine teil- oder perfluorierte Seitenkette aufweist.

Die erfindungsgemäße Chipkarte ist in hohem Maße praxistauglich, da das aufgebrachte Display bei Spannungen ≤ 15 V, vorzugsweise ≤ 5 V geschaltet werden kann, in einem breiten Temperaturbereich beschreibbar. Überraschenderweise weisen Display und damit Chipkarte eine erhöhte Toleranz gegenüber alltagsüblichen Belastungen, wie Druck, Biegung oder thermische Deformation, auf.

Weiterhin weist das erfindungsgemäße Display einen hohen Schaltwinkel, eine niedrige Schaltspannung und eine geringe Temperaturabhängigkeit auf. Defektlinien sind unterdrückt. Es entstehen keine "zig-zag"-Deformationen, oder wenn, dann von derart geringe Ausprägung, daß sie nicht ins Gewicht fallen.

Erfindungsgemäß eingesetzte Displays, weisen eine weitgehend aufrechte, d.h. nicht geknickte ("non-chevron") smektische Lagenstruktur und einen hohen effektiven Tiltwinkel von mehr als 15° auf, und damit eine hohe Helligkeit und einen hohen Kontrast. Darüber hinaus können solche Displays vorteilhaft Elektrodenabstände von im allgemeinen 1 bis 3 µm, bevorzugt mindestens 1,5 µm, besonders bevorzugt mindestens 1,8 µm, aufweisen und lassen sich dennoch bei Spannungen von ≤ 5 Volt, in jedem Fall aber ≤ 15 V schalten. Der große Elektrodenabstand ermöglicht eine hohe Ausbeute bei der Fertigung.

Bevorzugt ist die erfindungsgemäße Chipkarte eine Smartcard.
Mesogen bedeutet im Sinne der Erfindung, daß die Verbindung allein oder in Mischung mit anderen mesogenen Verbindungen eine Flüssigkristallphase, vorzugsweise eine ferroelektrische, ausbildet.

Bevorzugt mesogene Verbindungen mit teil- oder perfluorierter Seitenkette sind solche der Formel (I),

R(-A¹-M¹)ₐ(-A²-M²)_{b}(-A³-M³)_{c}-A⁴-B-R_{f} (I)

in der die Symbole und Indizes folgende Bedeutungen haben:
R ist
   a) Wasserstoff, -F, -Cl, -CF₃, -OCF₃ oder -CN,
   b) ein geradkettiger oder verzweigter Alkylrest (mit oder ohne asymmetrisches C-Atom) mit 1 bis 20 C-Atomen, wobei
      b1) eine oder mehrere nicht benachbarte und nicht terminale CH₂-Gruppen durch -O-, -S-, -CO-, -CO-O-, -O-CO-, -O-CO-O- oder -Si(CH₃)₂- ersetzt sein können und/oder
      b2) eine oder mehrere CH₂-Gruppen durch -CH=CH-, -C≡C-, Cyclopropan-1,2-diyl, 1,4-Phenylen, 1,4-Cyclohexylen oder 1,3-Cyclopentylen ersetzt sein können und/oder
      b3) ein oder mehrere H-Atome durch F, CN und/oder Cl ersetzt sein können und/oder
      b4) die terminale CH₃-Gruppe durch eine der folgenden chiralen Gruppen (optisch aktiv oder racemisch) ersetzt sein kann: 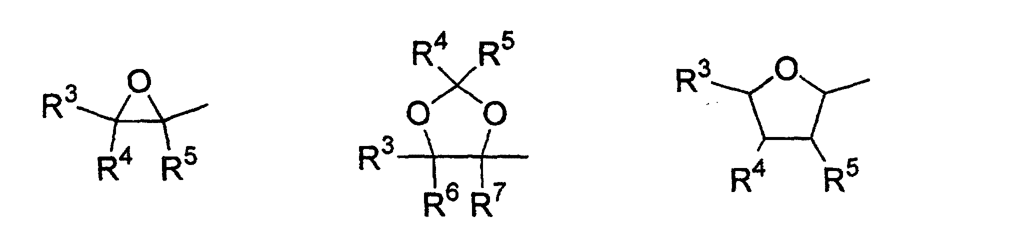 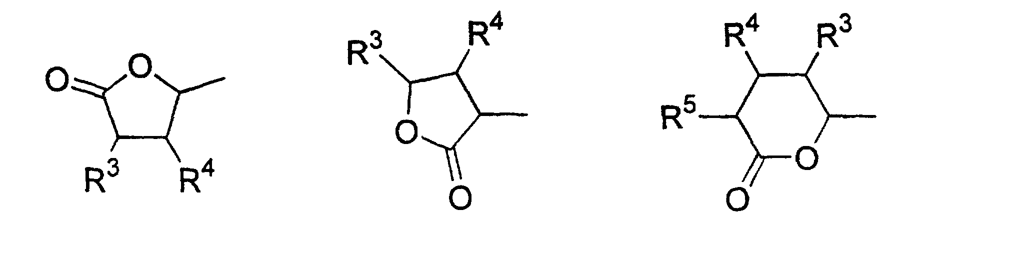 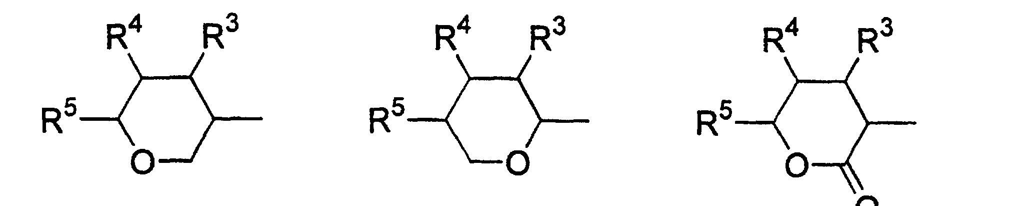 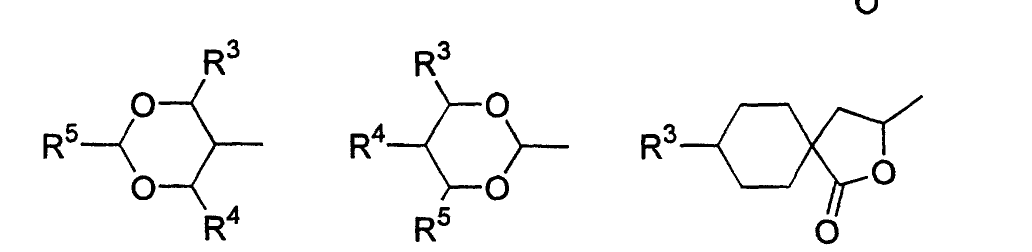 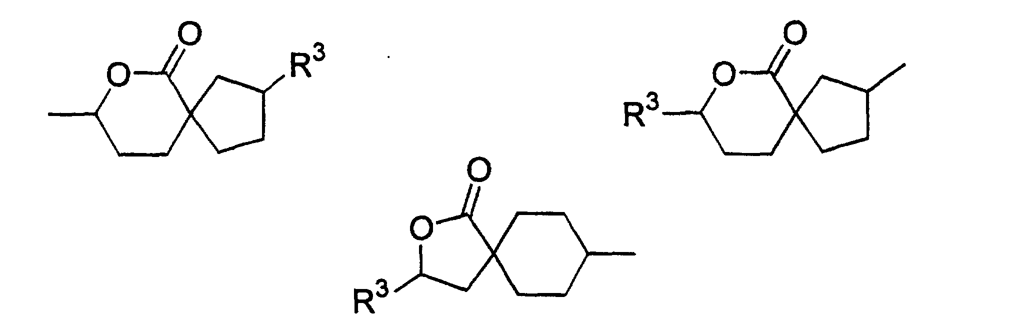 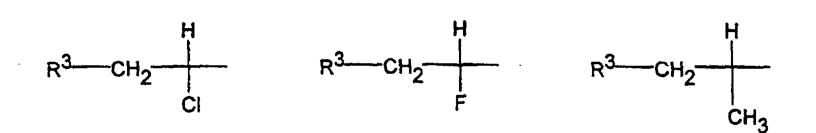 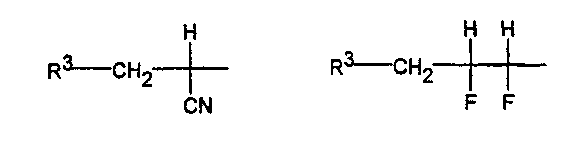
   c) B-R_{f}
R³, R⁴, R⁵, R⁶, R⁷ sind gleich oder verschieden
   a) Wasserstoff
   b) ein geradkettiger oder verzweigter Alkylrest (mit oder ohne asymmetrisches Kohlenstoffatom) mit 1 bis 16 C-Atomen, wobei
      b1) eine oder mehrere nicht benachbarte und nicht terminale CH₂-Gruppen durch -O- ersetzt sein können undloder
      b2) eine oder zwei CH₂-Gruppen durch -CH=CH- ersetzt sein können,
   c) R⁴ und R⁵ zusammen auch -(CH₂)₄- oder -(CH₂)₅-, wenn sie an ein Oxiran-, Dioxolan-, Tetrahydrofuran-, Tetrahydropyran-, Butyrolacton- oder Valerolacton-System gebunden sind;
R_{f} ist
   ein geradkettiger oder verzweigter teil- oder perfluorierter Alkylrest (mit oder ohne asymmetrisches C-Atom) mit 1 bis 20 C-Atomen, wobei
   a) eine oder mehrere nicht benachbarte und nicht terminale CH₂- oder CF₂-Gruppen durch -O-, -S-, -CO-, -CO-O-, -O-CO-, -O-CO-O- oder -Si(CH₃)₂-ersetzt sein können und/oder
   b) eine oder mehrere CH₂- oder CF₂-Gruppen durch -CH=CH-, -C≡C-, Cyclopropan-1,2-diyl, 1,4-Phenylen, 1,4-Cyclohexylen oder 1,3-Cyclopentylen ersetzt sein können;
B ist
   -O-, -S-, -(CH₂)ₙ₊₁-O-, -O-(CH₂)ₙ₊₁-, -(CH₂)ₙ₊₁-S-, -S-(CH₂)ₙ₊₁-, -CO-(CH₂)ₙ-, -CO-O-(CH₂)ₙ-, -O-CO-(CH₂)ₙ-, -CO-S-(CH₂)ₙ-, -S-CO-(CH₂)ₙ-, -CS-O-(CH₂)ₙ-, -O-CS-(CH₂)ₙ-, -SO₂-(CH₂)ₙ-, -OSO₂-(CH₂)ₙ-, -CH=CH-, -C≡C-, -(CH₂)ₙ₊₁-, -CH=N-, -N(CₖH₂ₖ₊₁)-, -(CH₂)ₙ-N(CₖH₂ₖ₊₁)-CO-, -(CH₂)ₙ-N(CₖH₂ₖ₊₁)-SO₂-, -O-[(CH₂)ₘ₊₁-O]ₗ-(CH₂)ₙ-, -[(CH₂)ₘ₊₁-O]ₗ-(CH₂)ₙ- oder eine Einfachbindung;
m, n sind gleich oder verschieden unabhängig voneinander eine ganze Zahl von 0 bis 15, k ist eine ganze Zahl von 0 bis 4 und I ist eine ganze Zahl von 1 bis 6, mit der Maßgabe, daß m+n ≤ 15 ist;
M¹, M², M³ sind gleich oder verschieden
   -CO-O-, -O-CO-, -CO-S-, -S-CO-, -CS-O-, -O-CS-, -CS-S-, -S-CS-, -CH₂-O-, -O-CH₂-, -CH₂-S-, -S-CH₂-, -CH₂-CH₂-, -CH=CH-, -C≡C-, -CH₂-CH₂-CO-O-, -O-CO-CH₂-CH₂-, -CH=N- oder eine Einfachbindung;
A¹, A², A³, A⁴ sind gleich oder verschieden
   1,4-Phenylen, wobei ein oder mehrere H-Atome durch F, Cl, CH₃, C₂H₅, OCH₃, CF₃, OCF₃ und/oder CN ersetzt sein können, 1,3-Phenylen, wobei eine oder zwei CH-Gruppen durch N ersetzt sein können, Pyrazin-2,5-diyl, wobei ein oder zwei H-Atome durch F, Cl und/oder CN ersetzt sein können, Pyridazin-3,6-diyl, wobei ein oder zwei H-Atome durch F, Cl und/oder CN ersetzt sein können, Pyridin-2,5-diyl, wobei ein oder mehrere H-Atome durch F, Cl und/oder CN ersetzt sein können, Pyrimidin-2,5-diyl, wobei ein oder zwei H-Atome durch F, Cl und/oder CN ersetzt sein können, 1,4-Cyclohexylen, wobei ein oder zwei H-Atome durch CN und/oder CH₃ und/oder F ersetzt sein können, (1,3,4)-Thiadiazol-2,5-diyl, 1,3-Dioxan-2,5-diyl, 1,3-Dithian-2,5-diyl, 1,3-Thiazol-2,4-diyl, wobei ein H-Atom durch F, Cl und/oder CN ersetzt sein kann, 1,3-Thiazol-2,5-diyl, wobei ein H-Atom durch F, Cl und/oder CN ersetzt sein kann, Thiophen-2,4-diyl, wobei ein H-Atom durch F, Cl und/oder CN ersetzt sein kann, Thiophen-2,5-diyl, wobei ein oder zwei H-Atome durch F, Cl und/oder CN ersetzt sein können, Naphthalin-2,6-diyl, Naphtalin-1,4-diyl oder Naphtalin-1,5-diyl, wobei jeweils ein oder mehrere H-Atome durch F, Cl und/oder CN ersetzt sein können und/oder eine oder zwei CH-Gruppen durch N ersetzt sein können, Phenanthren-2,7-diyl oder 9,10-Dihydrophenanthren-2,7-diyl, wobei jeweils ein, zwei oder mehrere H-Atome durch F ersetzt sein können und/oder eine oder zwei CH-Gruppen durch N ersetzt sein können, Indan-2,5-diyl, Indan-1-on-2,5-diyl, Benzothiazol-2,6-diyl, Benzothiazol-2,5-diyl, Benzoxazol-2,6-diyl, Benzoxazol-2,5-diyl, Benzofuran-2,5-diyl, Benzofuran-2,6-diyl, 2,3-Dihydrobenzofuran-2,5-diyl, Piperazin-1,4-diyl, Piperazin-2,5-diyl, 1-Alkyl-1-silacyclohexylen-1,4-diyl oder 1,3-Dioxaborinan-2,5-diyl;
a, b, c sind null oder eins,
   mit der Maßgabe, daß die Verbindung der Formel (I) nicht mehr als vier fünf- oder mehrgliedrige Ringsysteme enthalten darf.
   Bevorzugt haben die Symbole und Indizes in der Formel (I) folgende Bedeutungen:

R ist bevorzugt gleich oder verschieden
   a) Wasserstoff, -F, -OCF₃, oder -CN,
   b) ein geradkettiger oder verzweigter Alkylrest (mit oder ohne asymmetrisches C-Atom) mit 1 bis 18 C-Atomen, wobei
      b1) eine oder mehrere nicht benachbarte und nicht terminale CH₂-Gruppen durch -O-, -CO-O-, -O-CO-, -O-CO-O- oder -Si(CH₃)₂-ersetzt sein können und/oder
      b2) eine CH₂-Gruppe durch Cyclopropan-1,2-diyl, 1,4-Phenylen oder trans-1,4-Cyclohexylen ersetzt sein kann und/oder
      b3) ein oder mehrere H-Atome durch F ersetzt sein können und/oder
      b4) die terminale CH₃-Gruppe durch eine der folgenden chiralen Gruppen (optisch aktiv oder racemisch) ersetzt sein kann: 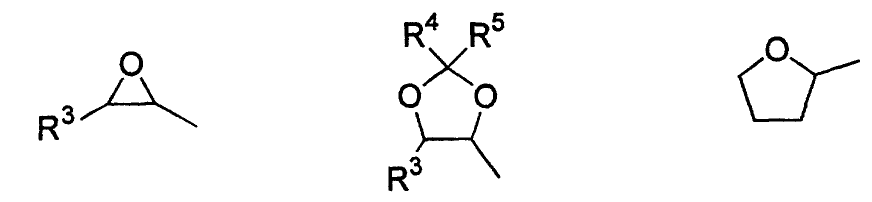 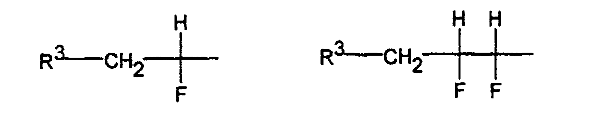
R ist besonders bevorzugt gleich oder verschieden
   a) Wasserstoff,
   b) ein geradkettiger oder verzweigter Alkylrest (mit oder ohne asymmetrisches C-Atom) mit 1 bis 16 C-Atomen, wobei
      b1) eine oder zwei nicht benachbarte und nicht terminale CH₂-Gruppen durch -O-, -CO-O-, -O-CO-, -O-CO-O- oder -Si(CH₃)₂-ersetzt sein können und/oder
      b2) eine CH₂-Gruppe durch 1,4-Phenylen oder trans-1,4-Cyclohexylen ersetzt sein kann und/oder
      b3) ein oder mehrere H-Atome durch F ersetzt sein können und/oder
      b4) die terminale CH₃-Gruppe durch eine der folgenden chiralen Gruppen (optisch aktiv oder racemisch) ersetzt sein kann: 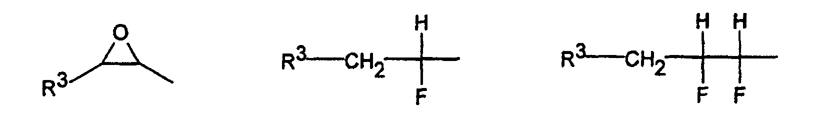
R³, R⁴, R⁵, R⁶, R⁷ sind bevorzugt gleich oder verschieden
   a) Wasserstoff,
   b) ein geradkettiger oder verzweigter Alkylrest (mit oder ohne asymmetrisches Kohlenstoffatom) mit 1 bis 14 C-Atomen, wobei
      b1) eine oder zwei nicht benachbarte und nicht terminale CH₂-Gruppen durch -O- ersetzt sein können und/oder
      b2) eine CH₂-Gruppe durch -CH=CH- ersetzt sein kann,
   c) R⁴ und R⁵ zusammen auch -(CH₂)₄- oder -(CH₂)₅-, wenn sie an ein Oxiran-, Dioxolan-, Tetrahydrofuran-, Tetrahydropyran-, Butyrolacton- oder Valerolacton-System gebunden sind.
R³, R⁴, R⁵, R⁶, R⁷ sind besonders bevorzugt gleich oder verschieden
   a) Wasserstoff,
   b) ein geradkettiger oder verzweigter Alkylrest (mit oder ohne asymmetrisches Kohlenstoffatom) mit 1 bis 14 C-Atomen, wobei
      b1) eine nicht terminale CH₂-Gruppe durch -O- ersetzt sein kann,
   c) R⁴ und R⁵ zusammen auch -(CH₂)₄- oder -(CH₂)₅-, wenn sie an ein Oxiran-, Dioxolan-, Tetrahydrofuran-, Tetrahydropyran-, Butyrolacton- oder Valerolacton-System gebunden sind.
R_{f} ist bevorzugt
   ein geradkettiger teil- oder perfluorierter Alkylrest mit 2 bis 18 C-Atomen, wobei
   a) eine oder mehrere nicht benachbarte und nicht terminale CH₂- oder CF₂-Gruppen durch -O-, -CO-O- oder -O-CO- ersetzt sein können und/oder
   b) eine CH₂- oder CF₂-Gruppe durch -CH=CH-, -C≡C-, Cyclopropan-1,2-diyl, 1,4-Phenylen, *trans*-1,4-Cyclohexylen oder 1,3-Cyclopentylen ersetzt sein kann.
R^{f} ist besonders bevorzugt
   ein geradkettiger perfluorierter Alkylrest mit 4 bis 16 C-Atomen, wobei
   a) eine oder zwei nicht benachbarte und nicht terminale CF₂-Gruppen durch -O- ersetzt sein können.
B ist bevorzugt
   -O-, -(CH₂)ₙ₊₁-O-, -O-(CH₂)ₙ₊₁-, -CO-O-(CH₂)ₙ-, -O-CO-(CH₂)ₙ-, -CH=CH-, -C≡C-, -(CH₂)ₙ₊₁-, -O-[(CH₂)ₘ₊₁-O]ₗ-(CH₂)ₙ-, -[(CH₂)ₘ₊₁-O]ₗ-(CH₂)ₙ- oder eine Einfachbindung.
B ist besonders bevorzugt
   -O-, -O-(CH₂)ₙ-, -CO-O-(CH₂)ₙ₋₁-, -O-CO-(CH₂)ₙ₋₁-, -(CH₂)ₙ-, -O-[(CH₂)ₘ₊₁-O]ₗ-(CH₂)ₙ- oder eine Einfachbindung.
M¹, M², M³ sind bevorzugt gleich oder verschieden
   -CO-O-, -O-CO-, -CH₂-O-, -O-CH₂-, -CH=CH-, -C≡C-, -CH₂-CH₂-CO-O-, -O-CO-CH₂-CH₂- oder eine Einfachbindung.
M¹, M², M³ sind besonders bevorzugt gleich oder verschieden
   -CO-O-, -O-CO-, -CH₂-O-, -O-CH₂- oder eine Einfachbindung.
A¹, A², A³, A⁴ sind bevorzugt gleich oder verschieden
   1,4-Phenylen, wobei ein oder zwei H-Atome durch F, Cl, CH₃ und/oder CN ersetzt sein können, 1,3-Phenylen, Pyridin-2,5-diyl, wobei ein oder zwei H-Atome durch F und/oder CN ersetzt sein können, Pyrimidin-2,5-diyl, wobei ein oder zwei H-Atome durch F und/oder CN ersetzt sein können, trans-1,4-Cyclohexylen, wobei ein oder zwei H-Atome durch CN und/oder F ersetzt sein können, (1,3,4)-Thiadiazol-2,5-diyl, 1,3-Dioxan-2,5-diyl, 1,3-Thiazol-2,4-diyl, wobei ein H-Atom durch F ersetzt sein kann, 1,3-Thiazol-2,5-diyl, wobei ein H-Atom durch F ersetzt sein kann, Thiophen-2,5-diyl, wobei ein oder zwei H-Atome durch F ersetzt sein können, Naphthalin-2,6-diyl, wobei jeweils ein oder zwei H-Atome durch F und/oder CN ersetzt sein können und/oder eine oder zwei CH-Gruppen durch N ersetzt sein können, Phenanthren-2,7-diyl oder 9,10-Dihydrophenanthren-2,7-diyl, wobei jeweils ein, zwei oder mehrere H-Atome durch F ersetzt sein können und/oder eine oder zwei CH-Gruppen durch N ersetzt sein können, Indan-2,5-diyl, Benzothiazol-2,6-diyl oder Benzothiazol-2,5-diyl.
A¹, A², A³, A⁴ sind besonders bevorzugt gleich oder verschieden
   1,4-Phenylen, wobei ein oder zwei H-Atome durch F, Cl und/oder CN ersetzt sein können, 1,3-Phenylen, Pyridin-2,5-diyl, wobei ein H-Atom durch F ersetzt sein kann, Pyrimidin-2,5-diyl, trans-1,4-Cyclohexylen, wobei ein oder zwei H-Atome durch CN und/oder F ersetzt sein können, (1,3,4)-Thiadiazol-2,5-diyl, 1,3-Thiazol-2,5-diyl, Thiophen-2,5-diyl, Naphthalin-2,6-diyl, wobei eine oder zwei CH-Gruppen durch N ersetzt sein können, Phenanthren-2,7-diyl oder 9,10-Dihydrophenanthren-2,7-diyl, wobei jeweils ein oder zwei H-Atome durch F ersetzt sein können und/oder eine oder zwei CH-Gruppen durch N ersetzt sein können oder Indan-2,5-diyl.
   Ganz besonders bevorzugte Verbindungen der Formel (I) sind solche der Formeln (I-1) bis (I-64): 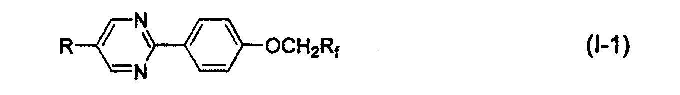 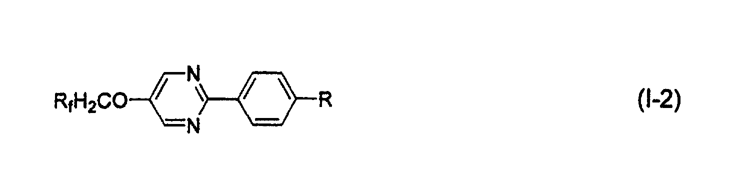 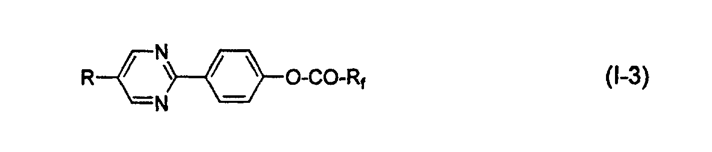 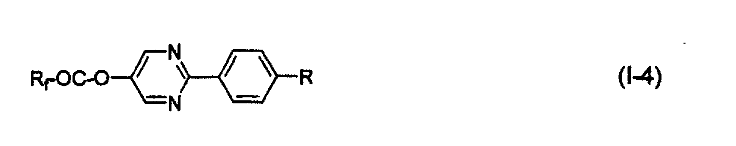 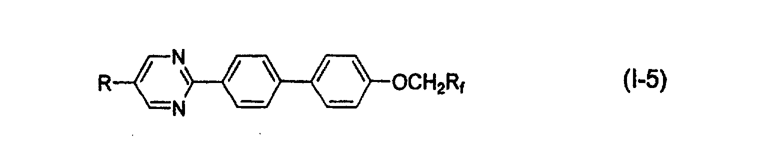 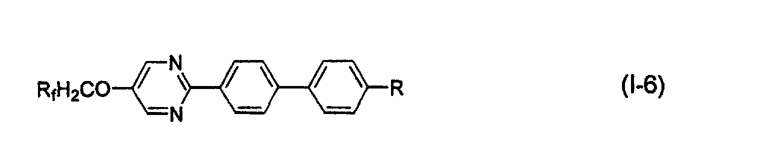 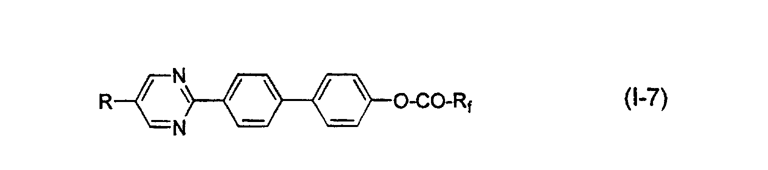 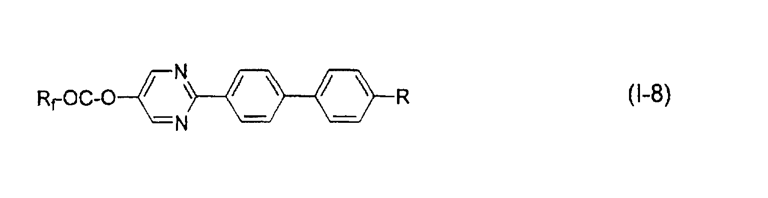 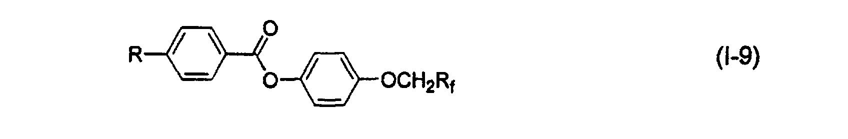 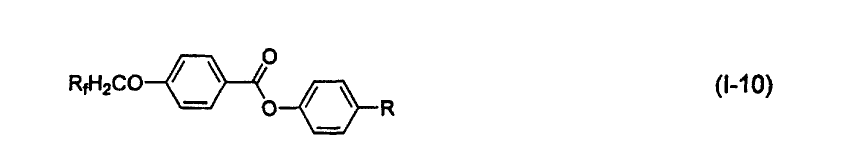 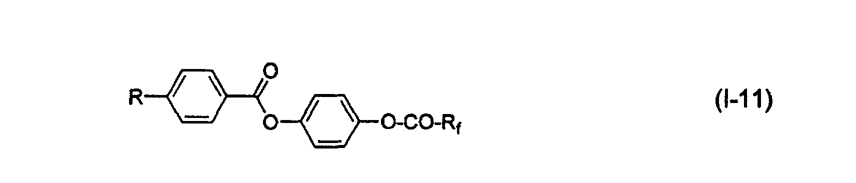 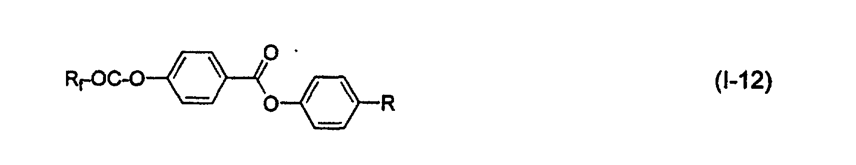 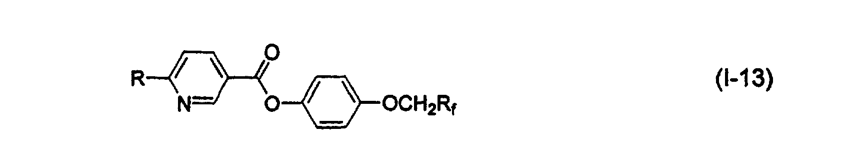 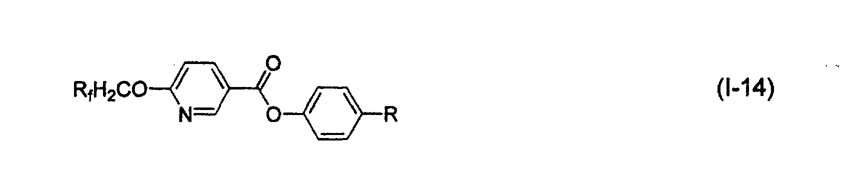 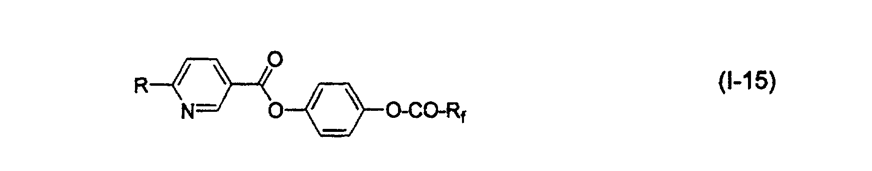 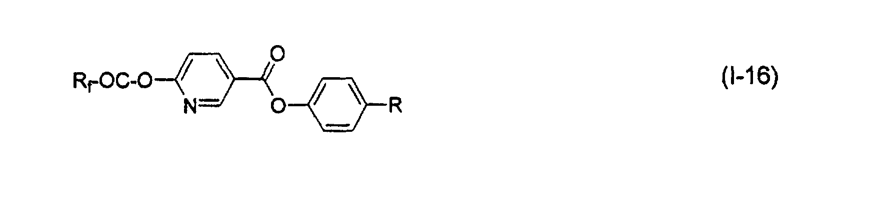 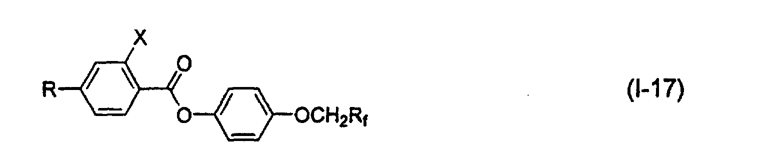 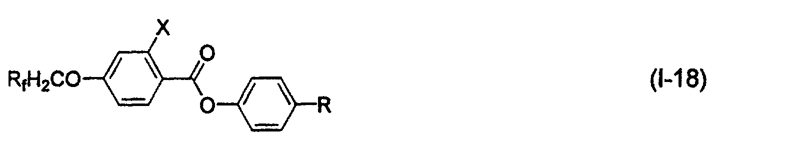 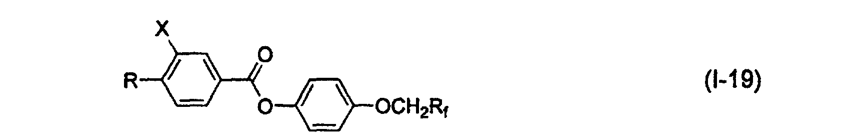 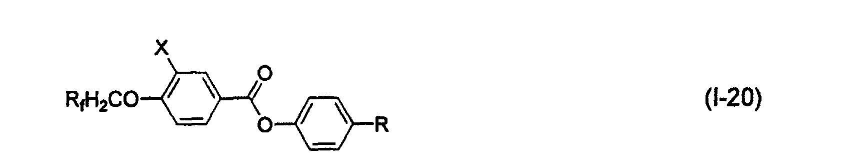 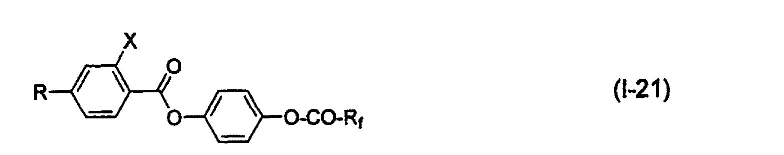 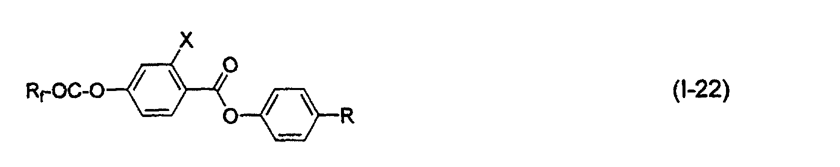 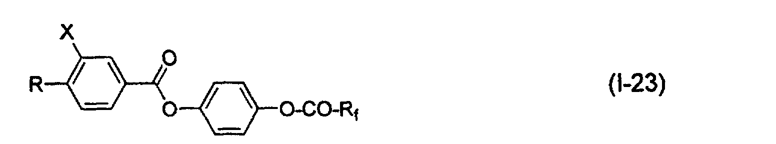 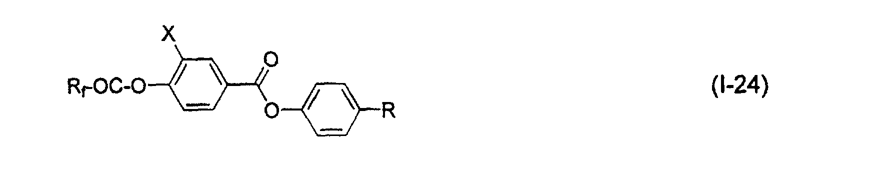 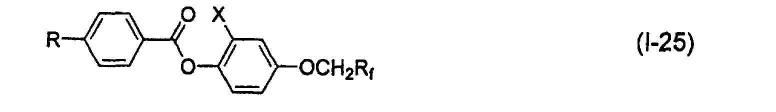 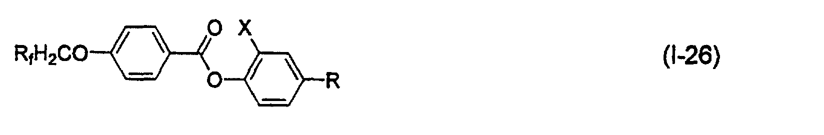 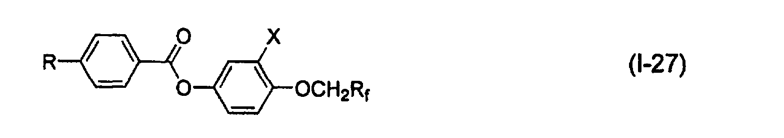 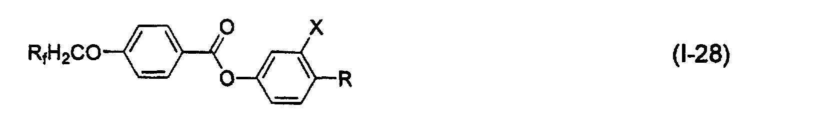 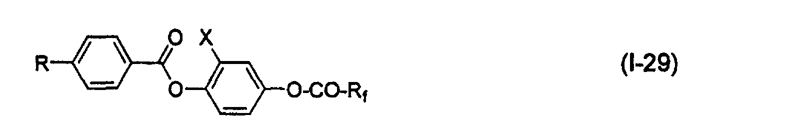 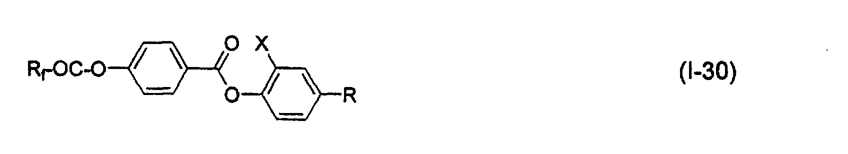 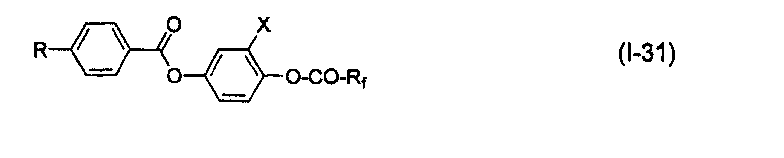 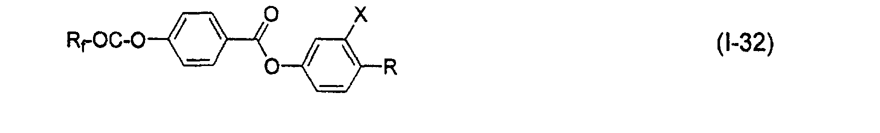 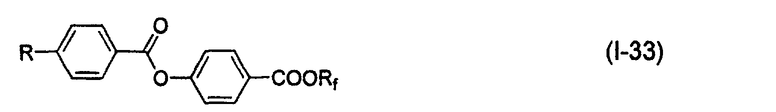 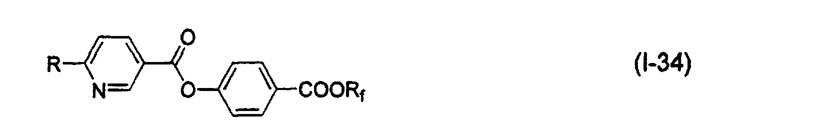 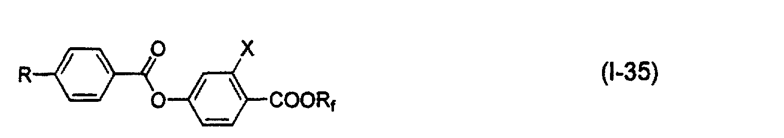 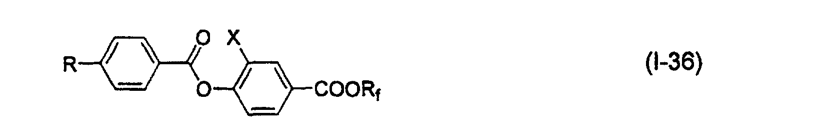 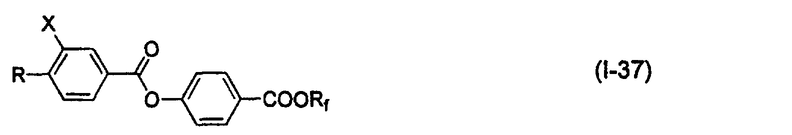 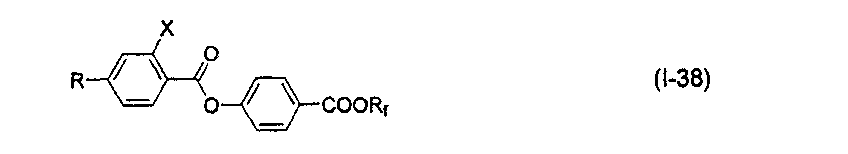 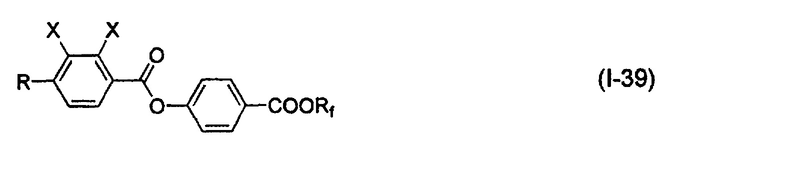 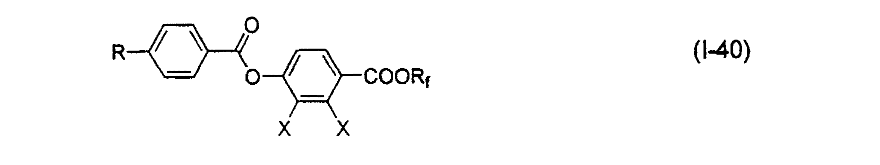 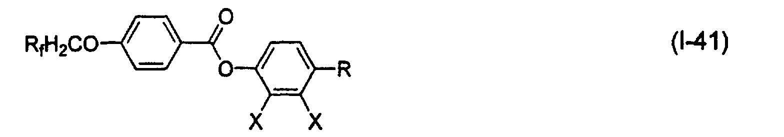 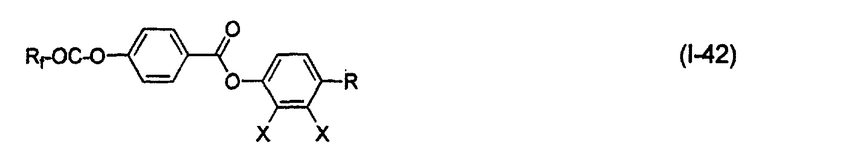 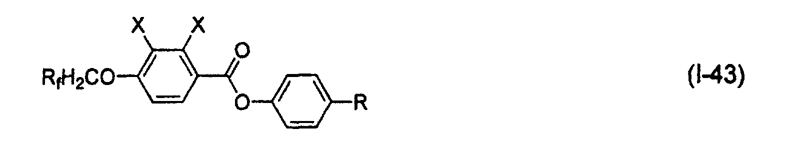 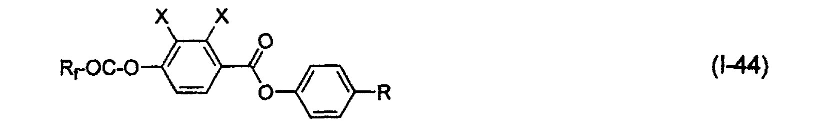 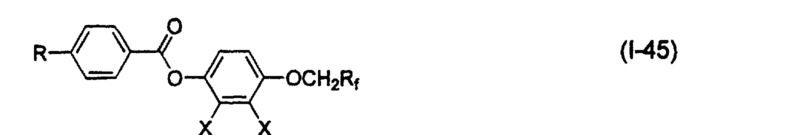 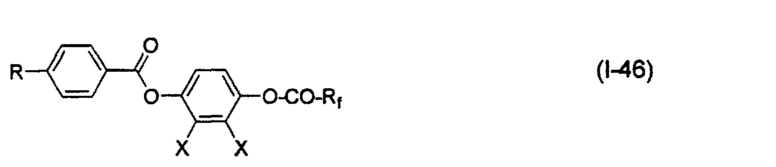 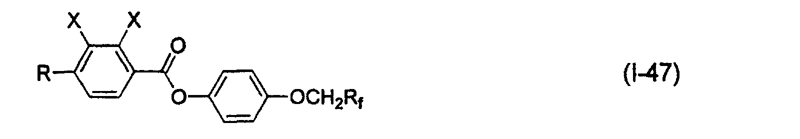 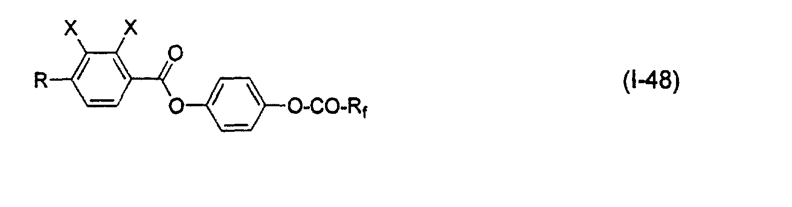 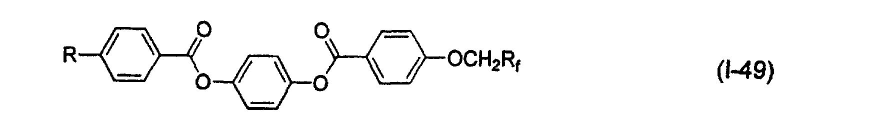 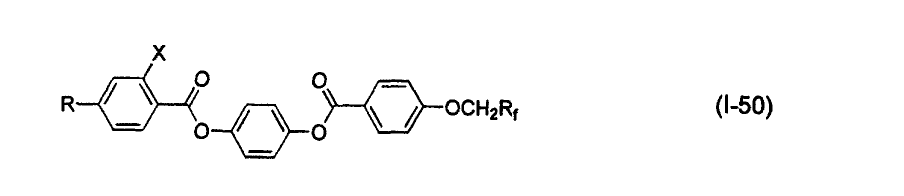 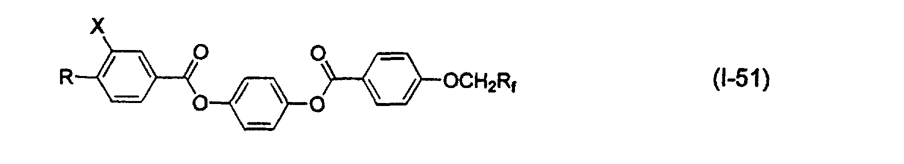 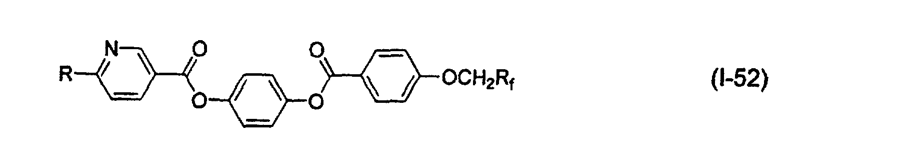 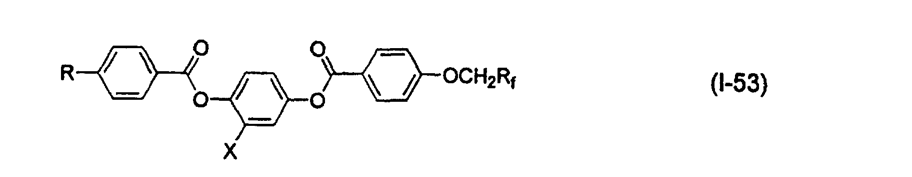 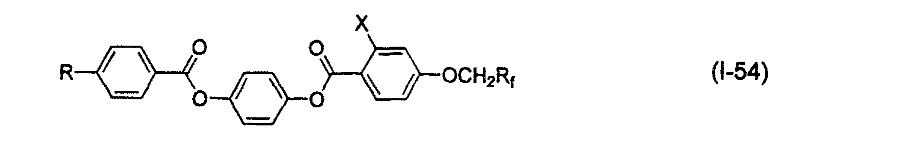 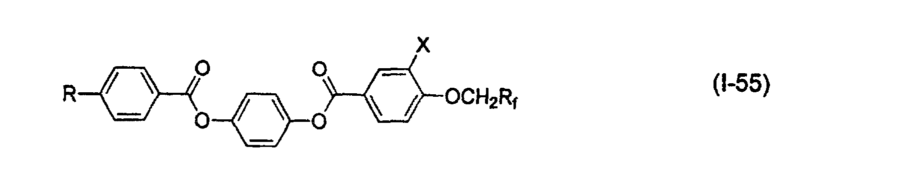 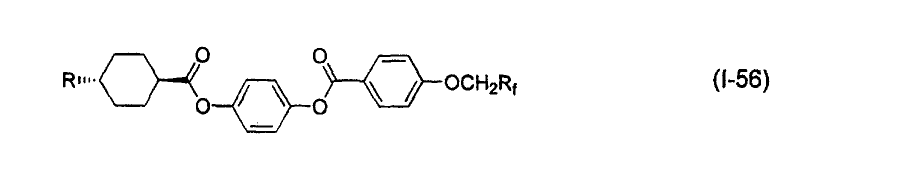 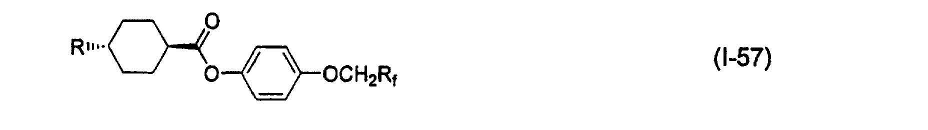 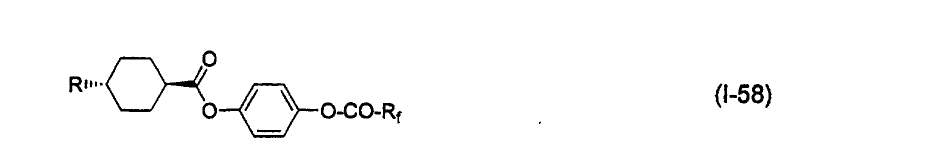 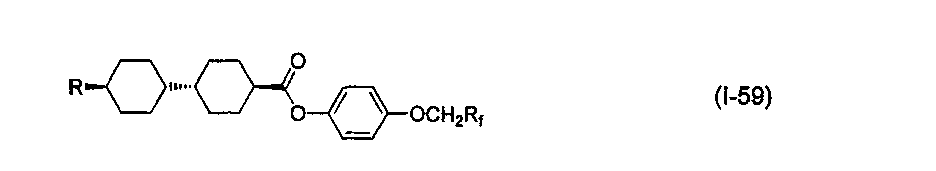 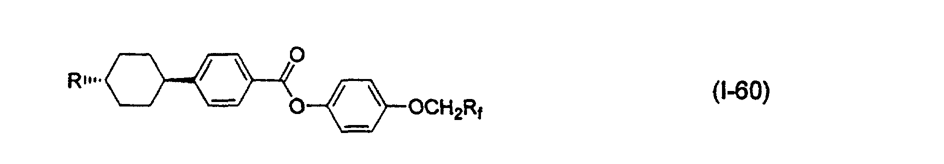 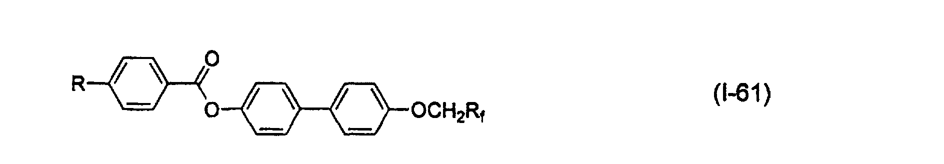 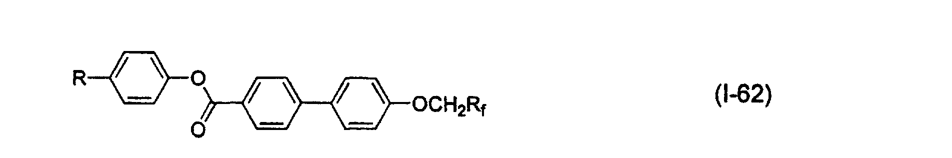 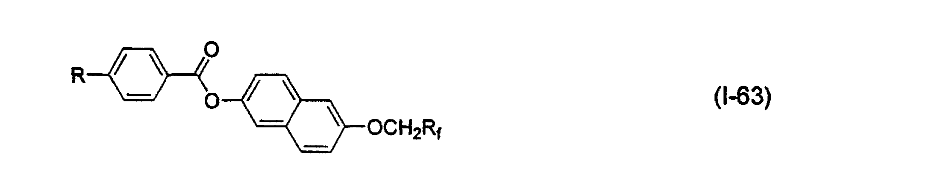 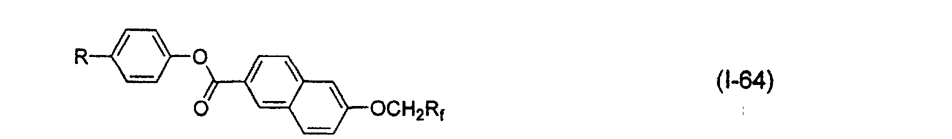
wobei X gleich F, Cl oder CN ist und R, R_{f} die für die Formel (I) angegebenen Bedeutungen und Bevorzugungen haben.

Die erfindungsgemäß verwendeten FLC-Mischungen bestehen aus mindestens 2, vorzugsweise 3 bis 30 besonders bevorzugt 4 bis 20 Komponenten.
Davon sind im allgemeinen mindestens 2, vorzugsweise 3 bis 25, besonders bevorzugt 4 bis 20 Verbindungen der Formel (I).

Die Mischungen enthalten im allgemeinen mindestens 5, vorzugsweise mindestens 20, besonders bevorzugt mindestens 50 Gew.-% an einer oder mehreren Verbindungen der Formel (I).

Die Arbeitsphase ist eine chiral getiltete Phase, vorzugsweise die S_{c}*-Phase. Vorzugsweise enthalten die Mischungen eine nicht optisch aktive Basismischung, vorzugsweise in einem Anteil von > 50 %, und eine oder mehrere optisch aktive Verbindungen (Dotierstoffe), die selbst flüssigkristallin sein können, aber nicht flüssigkristallin sein müssen.

Die Spontanpolarisation der Mischung liegt im Bereich von 0,1 bis 100 nCcm⁻², vorzugsweise 3 bis 60 nCcm⁻², besonders bevorzugt 5 bis 40 nCcm⁻².

Vorzugsweise beträgt im Bereich der Gebrauchstemperatur, der "layer leaning" Winkel, d.h. der Winkel zwischen smektischer Schichtennormale und der inneren Glas- bzw. Kunststoffoberfläche der Trägerplatten weniger als die Hälfte des Tiltwinkels der ferroelektrischen Flüssigkristallphase.

Der sogenannte "layer leaning" Winkel ist ein Maß für das Auftreten einer "chevron", d.h. geknickten Lagenstruktur. Er wird definiert als der Winkel zwischen der smektischen Schichtennormale und der inneren Substratoberfläche der Trägerplatten des Displays. Bei einem "layer leaning" Winkel von 0°C liegt eine "bookshelf" Anordnung vor, die eine sehr hohe Helligkeit und einen sehr hohen Kontrast ermöglicht. Darüber hinaus entstehen keine störenden "zig-zag" Defektlinien in der Flüssigkristallschicht. Je kleiner der "layer leaning" Winkel in der hier gebrauchten Definition, desto mehr stehen die smektischen Lagen senkrecht zur Trägerplatte und desto geringer ist die Ausbildung eines "chevrons". Ist der "layer leaning" Winkel jedoch gleich dem Tiltwinkel der smektischen Phase, so bildet sich ein Knick, also ein "chevron" maximaler Ausprägung bei minimaler Helligkeit und maximaler Störung durch "zig-zag" Defektlinien aus.

Vorzugsweise bestehen die Mischungen aus Verbindungen der Formel (I). Weitere Komponenten sind vorzugsweise mesogene, insbesondere smektogene und/oder netamogene Verbindungen, besonders bevorzugt mit thermodynamisch stabilen smektischen und/oder nematischen und/oder cholesterischen Phasen.

Ganz besonders bevorzugt als solche weiteren Komponenten sind Verbindungen der Formel (II)

R¹(-A⁵-M⁴)_{d}(-A⁶-M⁵)ₑ(-A⁷-M⁶)_{g}-A⁸-R² (II)

in der

R¹, R² gleich oder verschieden unabhängig voneinander die gleichen Bedeutungen und Bevorzugungen wie R in Formel (I) haben, mit der Maßgabe, daß höchstens einer der Reste R¹, R² Wasserstoff, -F, -Cl, -CF₃, -OCF₃ oder -CN sein kann, und

M⁴, M⁵, M⁶, A⁵, A⁶, A⁷, A⁸, d, e, g gleich oder verschieden unabhängig voneinander die gleichen Bedeutungen und Bevorzugungen wie respektive M¹, M², M³, A¹, A², A³, A⁴, a, b, c in Formel (I) haben.

Dazu gehören z. B.:
- Derivate des Phenylpyrimidins, wie beispielsweise in WO 86/06401, US-4 874 542 beschrieben,
- metasubstituierte Sechsringaromaten, wie beispielsweise in EP-A 0 578 054 beschrieben,
- Siliziumverbindungen, wie beispielsweise in EP-A 0 355 008 beschrieben,
- mesogene Verbindungen mit nur einer Seitenkette, wie beispielsweise in EP-A 0 541 081 beschrieben,
- Hydrochinonderivate, wie beispielsweise in EP-A 0 603 786 beschrieben,
- Phenylbenzoate und Biphenylbenzoate, wie beispielsweise bei P. Keller, Ferroelectrics 1984, 58, 3; Liq. Cryst. 1987, 2, 63; Liq. Cryst. 1989, 5, 153 und J. W. Goodby et al., Liquid Crystals and Ordered Fluids, Bd. 4, New York 1984 beschrieben,
- Thiadiazole, wie beispielsweise in EP-A 0 309 514 beschrieben,
- Biphenyle wie beispielsweise in EP-A-0 207 712 oder Adv. Liq. Cryst. Res. Appl. (Ed. Bata, L.) 3 (1980) beschrieben,
- Phenylpyridine wie beispielsweise in Ferroelectrics 1996, 180, 269 oder Liq. Cryst. 1993, 14, 1169 beschrieben,
- Benzanilide wie beispielsweise in Liq. Cryst. 1987, 2, 757 oder Ferroelectrics 1984, 58, 81 beschrieben,
- Terphenyle, wie beispielsweise in Mol. Cryst. Liq. Cryst. 1991, 195, 221; WO 89/02425 oder Ferroelectrics 1991, 114, 207 beschrieben,
- 4-Cyanocyclohexyle wie beispielsweise in Freiburger Arbeitstagung Fluessigkristalle 1986, 16, V8 beschrieben,
- 5-Alkylthiophencarbonsäureester wie beispielsweise in Butcher, J.L., Dissertation, Nottingham 1991 beschrieben und
- 1,2-Diphenylethane wie beispielsweise in Liq. Cryst. 1991, 9, 253 beschrieben,

Als chirale, nicht racemische Dotierstoffe beispielsweise:
- optisch aktive Phenylbenzoate, wie beispielsweise bei P. Keller, Ferroelectrics 1984, 58, 3 und J. W. Goodby et al., Liquid Crystals and Ordered Fluids, Bd. 4, New York 1984 beschrieben,
- optisch aktive Oxiranether, wie beispielsweise in EP-A 0 263 437 und WO-A 93/13093 beschrieben,
- optisch aktive Oxiranester, wie beispielsweise in EP-A 0 292 954 beschrieben,
- optisch aktive Dioxolanether, wie beispielsweise in EP-A 0 351 746 beschrieben,
- optisch aktive Dioxolanester, wie beispielsweise in EP-A 0 361 272 beschrieben,
- optisch aktive Tetrahydrofuran-2-carbonsäureester, wie beispielsweise in EP-A 0 355 561 beschrieben,
- optisch aktive 2-Fluoralkylether, wie beispielsweise in EP-A 0 237 007, EP-A-0 428 720 und US-5,051,506 beschrieben und
- optisch aktive α-Halogencarbonsäureester, wie beispielsweise in US 4,855,429 beschrieben.

Besonders bevorzugte weitere Komponenten der Formel (I) sind solche der Gruppen A bis M:
A. Phenylpyrimidinderivate der Formel (III),

   R¹-A¹-A²-R² (III)

   worin
   - R¹ und R²: jeweils Alkyl mit 1-15 C-Atomen, worin auch eine oder zwei nicht benachbarte CH₂-Gruppen durch -O-, -S-, -CO-, -O-CO-, -CO-O-, -O-CO-O-, -CO-S-, S-CO-, -CHHalogen, -CHCN- und/oder-CH=CH-ersetzt sein können,
   - A¹: 1,4-Phenylen, trans-1,4-Cyclohexylen oder eine Einfachbindung, und
   - A²: 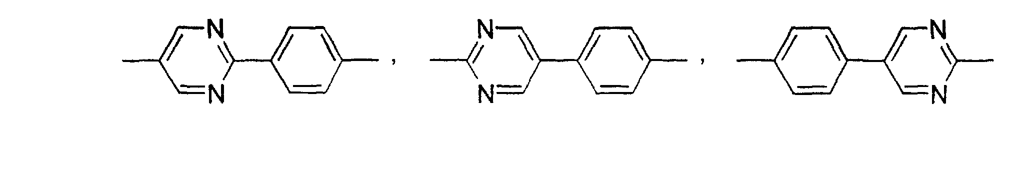 oder 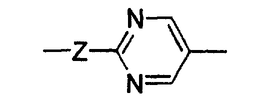 und
   - Z: -O-CO-, -CO-O-, -S-CO-, -CO-S-, -CH₂O-, -OCH₂- oder -CH₂CH₂-bedeutet.
B. Verbindungen mit nur einer Seitenkette der Formel (IV),

   R¹(-A¹)ₐ(-M¹)_{b}(-A²)_{c}(-M²)_{d}(-A³)ₑ(-M³)_{f}(-A⁴)-H (IV)

   worin bedeuten:
   - R¹: ein geradkettiger oder verzweigter Alkylrest mit 1 bis 22 bzw. 3 bis 22 C-Atomen, wobei auch eine oder zwei nicht benachbarte und nicht terminale CH₂- Gruppen durch -O-, -CO-, -CO-O-, -O-CO-, -O-CO-O-oder -Si(CH₃)₂- ersetzt sein können,
   - A¹, A², A³, A⁴: gleich oder verschieden 1,4-Phenylen, wobei ein oder zwei H-Atome durch F oder CN ersetzt sein können, Pyridin-2,5-diyl, wobei ein oder zwei H-Atome durch F ersetzt sein können, Pyrimidin-2,5-diyl, wobei ein oder zwei H-Atome durch F ersetzt sein können, trans-1,4-Cyclohexylen, (1,3,4)-Thiadiazol-2,5-diyl oder Naphthalin-2,6-diyl,
   - M¹, M², M³: gleich oder verschieden

   -CO-O-, -O-CO-, -CH₂-O-, -O-CH₂- oder -CH₂-CH₂-,
   - a, b, c, d, e, f: null oder eins,
   unter der Bedingung, daß die Summe aus a + c + e 0, 1, 2 oder 3 ist.
C. Metasubstituierte Verbindungen der Formel (V), 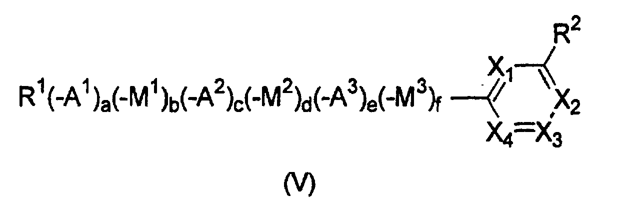 worin bedeuten:
   - R¹, R²: gleich oder verschieden
   ein geradkettiger oder verzweigter Alkylrest mit 1 bis 22 bzw. 3 bis 22 C-Atomen, wobei auch eine oder zwei nicht benachbarte und nicht terminale CH₂-Gruppen durch -O-, -CO-, -CO-, -O-CO-, -O-CO-O-oder -Si(CH₃)₂- ersetzt sein können,
   - A¹, A², A³: gleich oder verschieden
   1,4-Phenylen, wobei ein oder zwei H-Atome durch F ersetzt sein können, Pyridin-2,5-diyl, wobei ein oder zwei H-Atome durch F ersetzt sein können, Pyrimidin-2,5-diyl, wobei ein oder zwei H-Atome durch F ersetzt sein können, trans-1,4-Cyclohexylen, wobei ein oder zwei H-Atome durch -CN und/oder -CH₃ ersetzt sein können, (1,3,4)-Thiadiazol-2,5-diyl,
   und A¹ auch 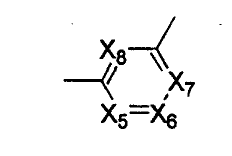
   - M¹, M², M³: gleich oder verschieden

   -O-, -CO-O-, -O-CO-, -CH₂-O-, -O-CH₂- oder -CH₂-CH₂-;
   - X¹, X², X³, X⁴, X⁵, X⁶, X⁷, X⁸: CH oder N, wobei die Zahl der N-Atome in einem Sechsring 0,1 oder 2 beträgt,
   - a, b, c, d, e, f: null oder eins,
   unter der Bedingung, daß die Summe aus a + c + e 0, 1, 2 oder 3 ist.
D. Siliziumverbindungen der Formel (VI),

   R¹(-A¹)ᵢ(-M¹)ₖ(-A²)ₗ(-M²)ₘ(-A³)ₙ-R² (VI)

   worin bedeuten:
   - R¹: ein geradkettiger oder verzweigter Alkylrest mit 1 bis 22 bzw. 3 bis 22 C- Atomen, wobei auch eine oder zwei nicht benachbarte und nicht terminale CH₂-Gruppen durch -O-, -CO-, -CO-O-, -O-CO- oder -O-CO-O- ersetzt sein können,
   - R²: ein geradkettiger oder verzweigter Alkylrest mit 1 bis 22 bzw. 3 bis 22 C-Atomen, wobei auch eine oder zwei nicht benachbarte und nicht terminale CH₂-Gruppen durch -O-, -CO-, -CO-O-, -O-CO- oder -O-CO-O- ersetzt sein können, mit der Maßgabe, daß eine nicht an Sauerstoff gebundene CH₂-Gruppe durch -Si(CH₃)₂- ersetzt ist,
   - A¹, A², A³: gleich oder verschieden
   1,4-Phenylen, wobei ein oder zwei H-Atome durch F ersetzt sein können, trans-1,4-Cyclohexylen, Pyridin-2,5-diyl, wobei ein oder zwei H-Atome durch F ersetzt sein können, Pyrimidin-2,5-diyl, wobei ein oder zwei H-Atome durch F ersetzt sein können oder (1,3,4)-Thiadiazol-2,5-diyl,
   - M¹, M²: gleich oder verschieden -CO-O-, -O-CO-, -CH₂-O-, -O-CH₂-,
   - i, k, l, m, n: null oder 1, mit der Maßgabe, daß i + l + n gleich 2 oder 3 ist.
E. Hydrochinonderivate der Formel (VII), 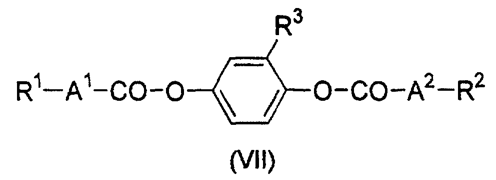 worin bedeuten:
   - R¹, R²: gleich oder verschieden
   ein geradkettiger oder verzweigter Alkylrest mit 1 bzw. 3 bis 16, vorzugsweise 1 bzw. 3 bis 10 C-Atomen, wobei auch eine oder zwei nicht benachbarte und nicht terminale CH₂-Gruppen durch -O-, -CO-, -O-CO-, -CO-O-, -O-CO-O-, vorzugsweise -O-, -O-CO-, -CO-O- ersetzt sein können,
   - R³: -CH₃, -CF₃ oder -C₂H₅, vorzugsweise -CH₃ oder -CF₃,
   - A¹, A²: gleich oder verschieden
   1,4-Phenylen, trans-1,4-Cyclohexylen, vorzugsweise 1,4-Phenylen.
F. Pyridylpyrimidine der Formel (VIII), 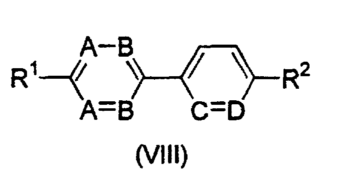 worin bedeuten:
   - A: gleich N und B gleich CH oder A gleich CH und B gleich N, C gleich N und D gleich CH oder C gleich CH und D gleich N, wobei eine oder zwei CH-Gruppen durch CF-Gruppen ersezt sein können,
   - R¹, R²: gleich oder verschieden,
   ein geradkettiger oder verzweigter Alkylrest mit 1 bis 22 bzw. 3 bis 22 C-Atomen, wobei auch eine oder zwei nicht benachbarte und nicht terminale CH₂-Gruppen durch -O-, -CO-, -CO-O-, -O-CO- oder -O-CO-O- ersetzt sein können.
G. Phenylbenzoate der Formel (IX),

   R¹(-A)ₐ(-M¹)_{b}(-A)_{c}(-M²)_{d}(-A)ₑ-R² (IX)

   wobei bedeuten:
   - R¹, R²: gleich oder verschieden
   ein geradkettiger Alkylrest mit 1 bis 22 C-Atomen, wobei auch eine oder zwei nicht benachbarte und nicht terminale CH₂-Gruppen durch -O-, -CO-, -CO-O-, -O-CO- oder -O-CO-O- ersetzt sein können,
   - A: gleich 1,4-Phenylen,
   - M¹, M²: gleich oder verschieden -CO-O-, -O-CO-,
   - a, b, c, d, e: null oder eins,
   unter der Bedingung, daß a + c + e = 2 oder 3 und b + d = 1 oder 2 ist.
H. Optisch aktive Phenylbenzoate der Formel (X),

   R¹(-A)ₐ(-M¹)_{b}(-A)_{c}(-M²)_{d}(-A)ₑ-R² (X)

   wobei bedeuten:
   - R¹, R²: gleich oder verschieden
   ein geradkettiger oder verzweigter Alkylrest mit 1 bis 22 bzw. 3 bis 22 C-Atomen, wobei auch eine oder zwei nicht benachbarte und nicht terminale CH₂-Gruppen durch -O-, -CO-, -CO-O-, -O-CO- oder -O-CO-O- ersetzt sein können, und worin wenigstens einer der Reste R¹, R² eine verzweigte, optisch aktive Alkylgruppe ist,
   - A: gleich 1,4-Phenylen,
   - M¹, M²: gleich oder verschieden
   -CO-O-, -O-CO- oder eine Einfachbindung,
   - a, b, c, d, e: null oder eins,
   unter der Bedingung, daß a + c + e = 2 oder 3 und b + d = 1 oder 2 ist.
I. Optisch aktive Oxiranether der Formel (XI), 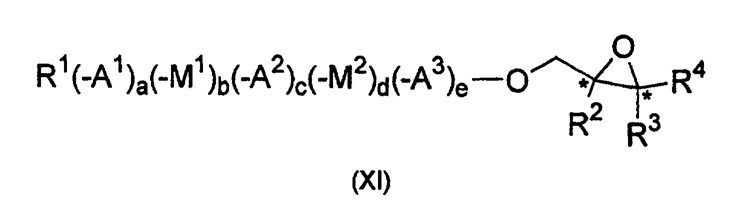 wobei die Symbole und Indizes folgende Bedeutung haben:
   - *: ein chirales Zentrum
   - R¹: ein geradkettiger oder verzweigter Alkylrest mit 1 bis 22 bzw. 3 bis 22 C-Atomen, wobei auch eine oder zwei nicht benachbarte und nicht terminale CH₂-Gruppen durch -O-, -CO-, -CO-O-, -O-CO-, -O-CO-O-oder -Si(CH₃)₂- ersetzt sein können,
   oder die nachfolgende, optisch aktive Gruppe, 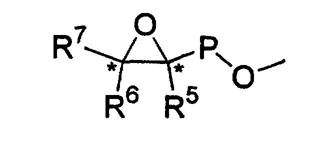
   - R², R³, R⁴, R⁵, R⁶, R⁷: gleich oder verschieden
   Wasserstoff oder ein geradkettiger oder verzweigter Alkylrest mit 1 bis 16 C-Atomen,
   - P: -CH₂- oder -CO-,
   - A¹, A², A³: sind gleich oder verschieden
   1,4-Phenylen, wobei ein oder zwei H-Atome durch F ersetzt sein können, Pyridin-2,5-diyl, wobei ein oder zwei H-Atome jeweils durch F ersetzt sein können, Pyrimidin-2,5-diyl, wobei ein oder zwei H-Atome durch F ersetzt sein können, trans-1,4-Cyclohexylen, wobei ein oder zwei H-Atome durch -CN und/oder -CH₃ ersetzt sein können, (1,3,4)-Thiadiazol-2,5-diyl,
   - M¹, M²: gleich oder verschieden

   -CO-O-, -O-CO-, -CH₂-O-, -O-CH₂-, -CH₂-CH₂-,
   - a, b, c, d, e: null oder eins.

   Die asymmetrischen C-Atome des Oxiranrings oder der Oxiranringe können gleich oder verschieden R oder S konfiguriert sein.
J. Optisch aktive Oxiranester der Formel (XII), 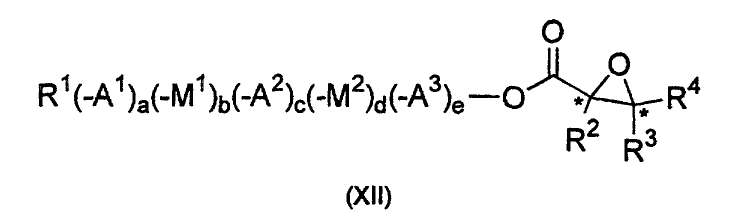 wobei die Symbole und Indizes folgende Bedeutung haben:
   - *: ein chirales Zentrum
   - R¹: ein geradkettiger oder verzweigter Alkylrest mit 1 bis 22 bzw. 3 bis 22 C-Atomen, wobei auch eine oder zwei nicht benachbarte und nicht terminale CH₂-Gruppen durch -O-, -CO-, -CO-O-, -O-CO-, -O-CO-O-oder -Si(CH₃)₂- ersetzt sein können,
   - R², R³, R⁴: gleich oder verschieden
   Wasserstoff oder ein geradkettiger oder verzweigter Alkylrest mit 1 bis 16 C-Atomen,
   - A¹, A², A³: gleich oder verschieden
   1,4-Phenylen, wobei ein oder zwei H-Atome durch F ersetzt sein können, Pyridin-2,5-diyl, wobei ein oder zwei H-Atome jeweils durch F ersetzt sein können, Pyrimidin-2,5-diyl, wobei ein oder zwei H-Atome durch F ersetzt sein können, trans-1,4-Cyclohexylen, wobei ein oder zwei H-Atome durch -CN und/oder -CH₃ ersetzt sein können, (1,3,4)-Thiadiazol-2,5-diyl,
   - M¹, M²: gleich oder verschieden

   -CO-O-, -O-CO-, -CH₂-O-, -O-CH₂-, -CH₂-CH₂-,
   - a, b, c, d, e: null oder eins.

   Die asymmetrischen C-Atome des Oxiranrings können gleich oder verschieden R oder S konfiguriert sein.
K. Optisch aktive Dioxolanether der Formel (XIII), 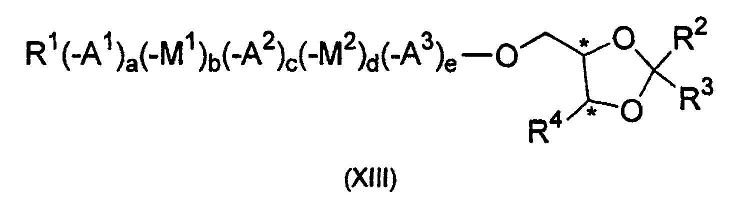 wobei die Symbole und Indizes folgende Bedeutung haben:
   - *: ein chirales Zentrum
   - R¹: ein geradkettiger oder verzweigter Alkylrest mit 1 bis 22 bzw. 3 bis 22 C-Atomen, wobei auch eine oder zwei nicht benachbarte und nicht terminale CH₂-Gruppen durch -O-, -CO-, -CO-O-, -O-CO-, -O-CO-O-oder -Si(CH₃)₂- ersetzt sein können,
   - R², R³, R⁴: gleich oder verschieden
   Wasserstoff, ein geradkettiger oder verzweigter Alkylrest mit 1 bis 16 bzw. 3 bis 10 C-Atomen oder ein Alkenylrest mit 2 bis 16 C-Atomen, wobei R² und R³ zusammen auch -(CH₂)₅- sein können,
   - A¹, A², A³: gleich oder verschieden
   1,4-Phenylen, wobei ein oder zwei H-Atome durch F ersetzt sein können, Pyridin-2,5-diyl, wobei ein oder zwei H-Atome durch F ersetzt sein können, Pyrimidin-2,5-diyl, wobei ein oder zwei H-Atome durch F ersetzt sein können, trans-1,4-Cyclohexylen, wobei ein oder zwei H-Atome durch -CN und/oder-CH₃ ersetzt sein können, (1,3,4)-Thiadiazol-2,5-diyl,
   - M¹, M²: gleich oder verschieden

   -CO-O-, -O-CO-, -CH₂-O-, -O-CH₂-, -CH₂-CH₂-,
   - a, b, c, d, e: null oder eins.

   Asymmetrische C-Atome des Dioxolanrings können, gleich oder verschieden, R oder S konfiguriert sein.
L. Optisch aktive Dioxolanester der Formel (XIV), 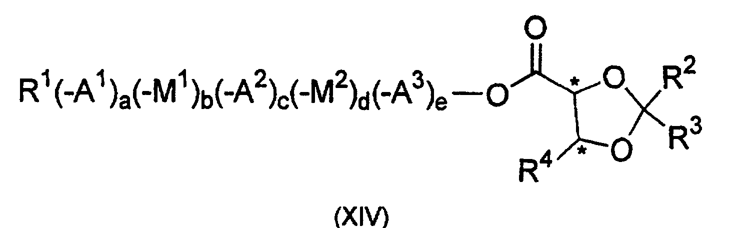 wobei die Symbole und Indizes folgende Bedeutung haben:
   - *: ein chirales Zentrum
   - R¹: ein geradkettiger oder verzweigter Alkyrest mit 1 bis 16 bzw. 3 bis 16 C-Atomen, wobei eine oder mehrere nicht benachbarte und nicht terminale CH₂ Gruppen durch -O-, -CO-, -O-CO- oder -CO-O- ersetzt sein können,
   - R², R³, R⁴: gleich oder verschieden
   Wasserstoff oder ein Alkyl- oder Alkenylrest mit 1 bis 10 bzw. 2 bis 10 C-Atomen, wobei R² und R³ zusammen auch -(CH₂)₅- sein können,
   - A¹, A², A³: sind gleich oder verschieden
   1,4-Phenylen, wobei ein oder zwei H-Atome durch F ersetzt sein können, Pyridin-2,5-diyl, wobei ein oder zwei H-Atome durch F ersetzt sein können, Pyrimidin-2,5-diyl, wobei ein oder zwei H-Atome durch F ersetzt sein können, trans-1,4-Cyclohexylen, wobei ein oder zwei H-Atome durch -CN und/oder -CH₃ ersetzt sein können, (1,3,4)-Thiadiazol-2,5-diyl,
   - M¹, M²: gleich oder verschieden

   -CO-O-, -O-CO-, -CH₂-O-, -O-CH₂-, -CH₂-CH₂-,
   - a, b, c, d, e: null oder eins.

   Asymmetrische C-Atome des Dioxolanrings können, gleich oder verschieden, R oder S konfiguriert sein.
M. Makrocvclische Verbindungen der Formel (XV). 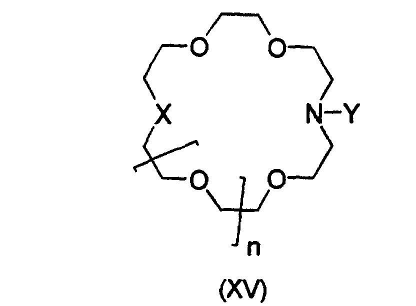 mit
   n : 0, 1
   Y : -CO-(t-Butyl), -CO-(Adamantyl), -CO-Alkyl
   X : -O-, -N(Y)-.

Die Herstellung der Flüssigkristallkomponenten der Formel (I) bis (XV) erfolgt nach an sich bekannten, dem Fachmann geläufigen Methoden, wie sie beispielsweise in Houben Weyl, Methoden der Organischen Chemie, Georg Thieme Verlag, Stuttgart oder auch den zitierten Schriften beschrieben werden.

Insbesondere wird die Herstellung von Verbindungen der Formel (I) z.B. beschrieben in E. P. Janulis et al., Ferroelectrics 1988, 85, 375-384; H. T. Nguyen et al., Liq. Cryst. 1991, 10, 389; S. Misaki et al., Mol. Cryst. Liq. Cryst. 1981, 66, 123-132; L. M. Yagupolski et al., Mol. Cryst. Liq. Cryst. 1980, 56 (Letters), 209-215; A. V. Ivashchenko et al., Mol. Cryst. Liq. Cryst. 1981, 67, 235-240; H. Liu, H. Nohira, Liq. Cryst. 1996, 20, 581-586; ibid. 1997, 22, 217-222; EP-A-0 255 236; WO-A 91/00897; WO-A 93/22396; WO-A 96/15092.

Die Herstellung der Mischung kann nach an sich bekannten Methoden erfolgen.

Das erfindungsgemäß verwendete ferroelektrische Flüssigkristall (FLC)-Display enthält zwei Trägerplatten, diese können aus Glas oder, wegen der Biegbarkeit vorzugsweise, Kunststoff bestehen oder auch jeweils eine aus Glas, die andere aus Kunststoff. Als Kunststoffe eignen sich, beispielsweise bekannte Kunststoffe wie Polyarylate, Polyethersulfone, Cycloolefin-Copolymere, Polyetherimide, Polycarbonat, Polystyrol, Polyester, Polymethylmetacrylate, sowie deren Copolymere oder Blends. Die Innenseiten dieser Trägerplatten sind mit leitfähigen transparenten Schichten, sowie Orientierungsschichten und möglicherweise weitereren Hilfsschichten, wie Isolationsschichten, versehen.

Die Orientierungsschicht(en) sind üblicherweise Filme aus geriebenen organischen Polymeren, z.B. Polyimiden, wie 6,6-Nylon oder schräg aufgedampftem Siliziumoxid.

Entscheidend für die elektro-optischen Eigenschaften und Speichereigenschaften des Displays ist die ca. 1-3 µm dicke FLC-Schicht, deren Schichtdicke, vorzugsweise durch Abstandshalter festgelegt wird. Diese Abstandshalter können eingemischte Teilchen, wie Kugeln, oder auch strukturierte Säulen im Displayinneren sein.

Die gesamte, üblicherweise mit einem Kleberahmen verschlossene Zelle kann elektrisch, beispielsweise durch Löten, Bonden, Pressen o.ä. kontaktiert werden. Das Display wird mit einer Spannung oder Spannungsimpulsen durch eine geeignete elektronische Schaltung angesteuert. Die Ansteuerung erfolgt im allgemeinen direkt oder als Multiplex-Ansteuerung (siehe z.B. Jean Dijon in Liquid Crystals, Application and Uses (Ed. B. Bahadur) Vol. 1, 1990, Chapter 13, pp. 305-360) oder T. Harada, M. Taguchi, K. lwasa, M. Kai SID 85 Digest, 131 (1985).

Der elektro-optische Effekt, der auf der Doppelbrechung des FLC Materials oder auf der anisotropen Absorption eines eingemischten dichroitischen Farbstoffs beruht, wird zwischen zwei gekreuzten Polarisatoren (Polarisationsfolien) sichtbar.

Die Herstellung des FLC-Displays für die erfindungsgemäße Chipkarte kann somit nach grundsätzlich bekannten Verfahren erfolgen, wie sie beispielsweise bei E. Lüder et al., 1997 International Sympossium, Seminar & Exhibition, Society of Information Display, Boston, Massachusetts, Artikel 9.4, SID 97 DIGEST, S. 109-112, beschrieben sind.

Zur Herstellung einer Chipkarte wird das FLC-Display auf oder in eine mit einem oder mehreren elektronischen Mikrochips versehenen Kunststoffkarte eingebettet bzw. aufgebracht.

Die Mikrochips enthalten die Programm- und/oder Speicherfunktionen, welche die gewünschte Funktion der Chipkarte gewährleisten. Solche Chips und ihre Herstellung sind dem Fachmann bekannt.

Die Karte besteht im allgemeinen aus Kunststoff, vorzugsweise aus Polyvinylchlorid (PVC), Acrylnitril-Butadien-Styrol-Copolymeren (ABS) oder Biopol® (ein biologisch abbaubares Polymer aus nachwachsenden Rohstoffen, Monsanto, USA).

Sie enthält zudem Mittel für einen Datenaustausch mit einem externen Schreib- und/oder Lesesystem, beispielsweise elektrisch leitende Kontakte oder eine "Antenne" in Form von Flachspulen. Die verwendeten Kunststoffkarten sind bekannt und größtenteils kommerziell erhältlich (z.B. Gemplus, http://www.gemplus.fr).

Übliche technische Spezifikationen für erfindungsgemäße Chip- oder Smartkarten finden sich beispielsweise in:
ICC-Card Specification for Payment Systems, Fassung 3 (1996), und der darin zitierten Literatur, insbesondere:
- Europay, MasterCard, and Visa (EMV): June 30, 1996
   Integrated Circuit Card Application Specification for Payment Systems
- ISO/IEC 7813:1990
   Identification cards - Financial transaction cards
- ISO 7816:1987
   Identification cards - Integrated circuit(s) cards with contacts
   - Part 1: Physical characteristics
- ISO 7816-2:1988
   Identification cards - Integrated circuit(s) cards with contacts
   - Part 2: Dimensions and location of contacts
- ISO/IEC 7816-3:1989
   Identification cards - Integrated circuit(s) cards with contacts
   - Part 3: Electronic Signals and transmission protocols
- ISO/IEC 7816-3:1992
   Identification cards - Integrated circuit(s) cards with contacts
   - Part 3, Amendment 1: Protocol type T=1, asynchronous half duplex block transmission protocol
- ISO/IEC 7816-3:1994
   Identification cards - Integrated circuit(s) cards with contacts
   - Part 3, Amendment 2: Protocol type selection (Draft International Standard)
- ISO/IEC 7816-4:1995
   Identification cards - Integrated circuit(s) cards with contacts
   - Part 4, Inter-industry commands for interchange
- ISO/IEC 7816-5:1994
   Identification cards - Integrated circuit(s) cards with contacts
   - Part 5: Numbering system and registration procedure for application identifiers
- ISOIIEC 7816-6:1995
   identification cards - Integrated circuit(s) cards with contacts
- Part 6: Inter-industry data elements (Draft International Standard).

Die erfindungsgemäße Chipkarte eignet sich beispielsweise zur Zugangskontrolle, als Scheckkarte, elektronische Fahrkarte, Telefonkarte, Parkhauskarte, "elektronische Brieftasche" oder für Pay-TV.

Auf die in dieser Anmeldung zitierten Literaturstellen wird ausdrücklich Bezug genommen; sie sind durch Zitat Bestandteil der Beschreibung.

Die Erfindung wird durch die nachfolgenden Beispiele weiter erläutert, ohne sie dadurch beschränken zu wollen.

### Beispiele

### Beispiel 1:

Synthese von 2-{4-[2,2-Difluor-2-(1,1,2,2-tetrafluor-2-nonafluorbutyloxy-ethoxy)-ethoxy]-phenyl}-5-octyloxypyrimidin

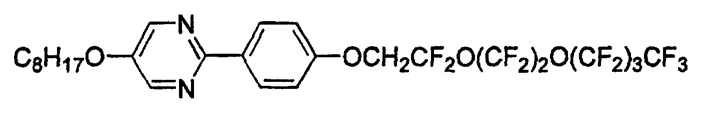

Eine Suspension von Natriumhydrid in trockenem Dimethylformamid wird vorgelegt und bei 0°C eine Lösung von 2-{4-[2,2-Difluor-2-(1,1,2,2-tetrafluor-2-nonafluorbutyloxy-ethoxy)-ethoxy]-phenyl}-pyrimidin-5-ol (erhalten durch Williamson-Veretherung von 5-Benzyloxy-2-(4-hydroxyphenyl)-pyrimidin mit Toluol-4-sulfonsäure-2,2-difiuor-2-(1,1,2,2-tetrafluor-2-nonafluorbutyloxy-ethoxy)-ethylester und anschließender Hydrierung) im gleichen Lösemittel zugetropft. Man rührt bei Raumtemperatur, bis die Gasentwicklung beendet ist und tropft anschließend die äquivalente Menge 1-Bromoctan zu. Es wird 4-6 h auf ca. 60°C erwärmt. Nach dem Abkühlen gibt man die Reaktionsmischung auf Eiswasser und extrahiert mehrmals mit Dichlormethan. Die vereinigten org. Extrakte werden mit ges. Natriumchloridlösung gewaschen und mit Natriumsulfat getrocknet. Das Lösemittel wird im Vakuum entfernt und das Rohprodukt säulenchromatographisch an Kieselgel und durch Umkristallisation aus Ethanol gereinigt.
Phasenübergänge (in °C): X 45 S_{c} 81 S_{A} 94 I.

### Beispiel 2: Mischungsbeispiel

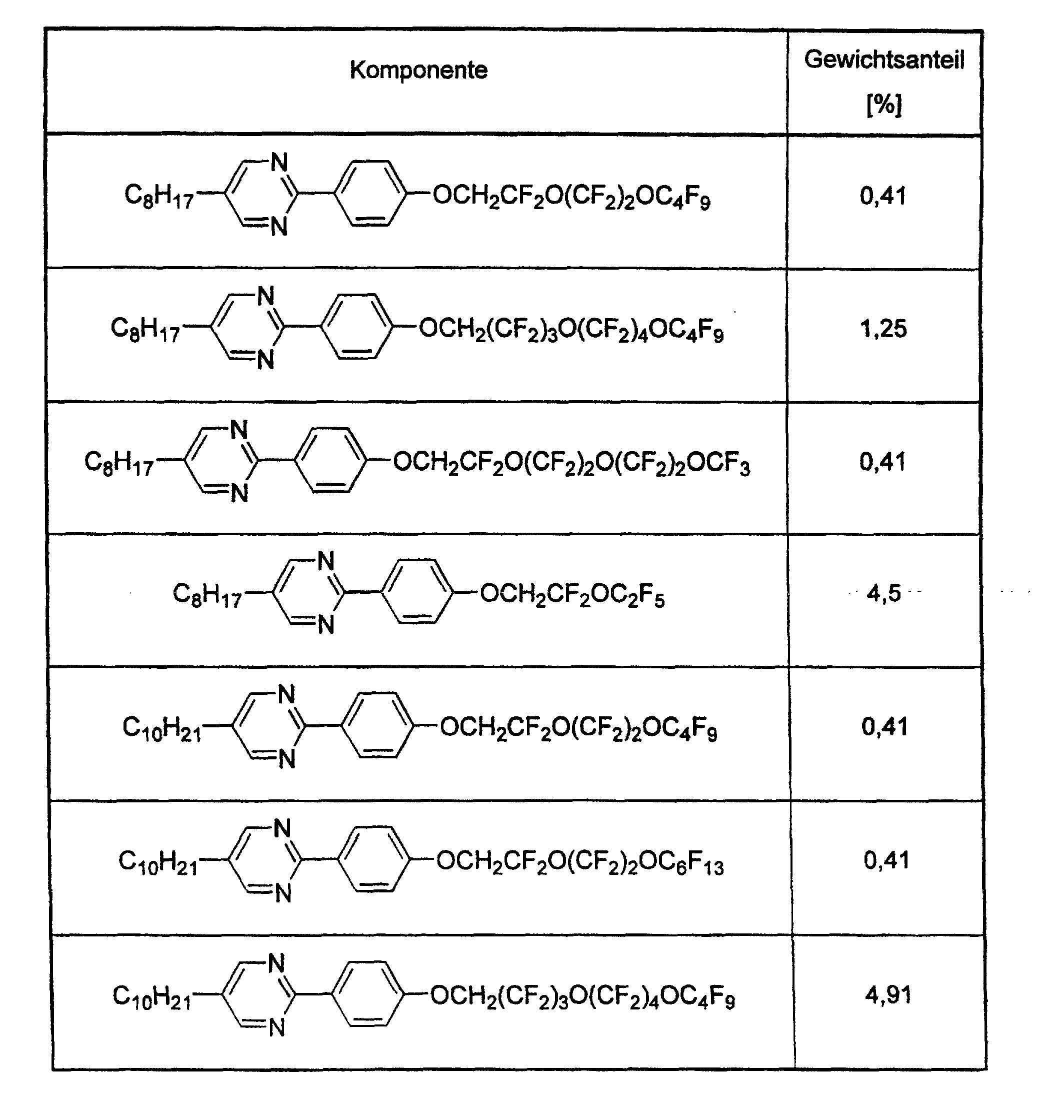

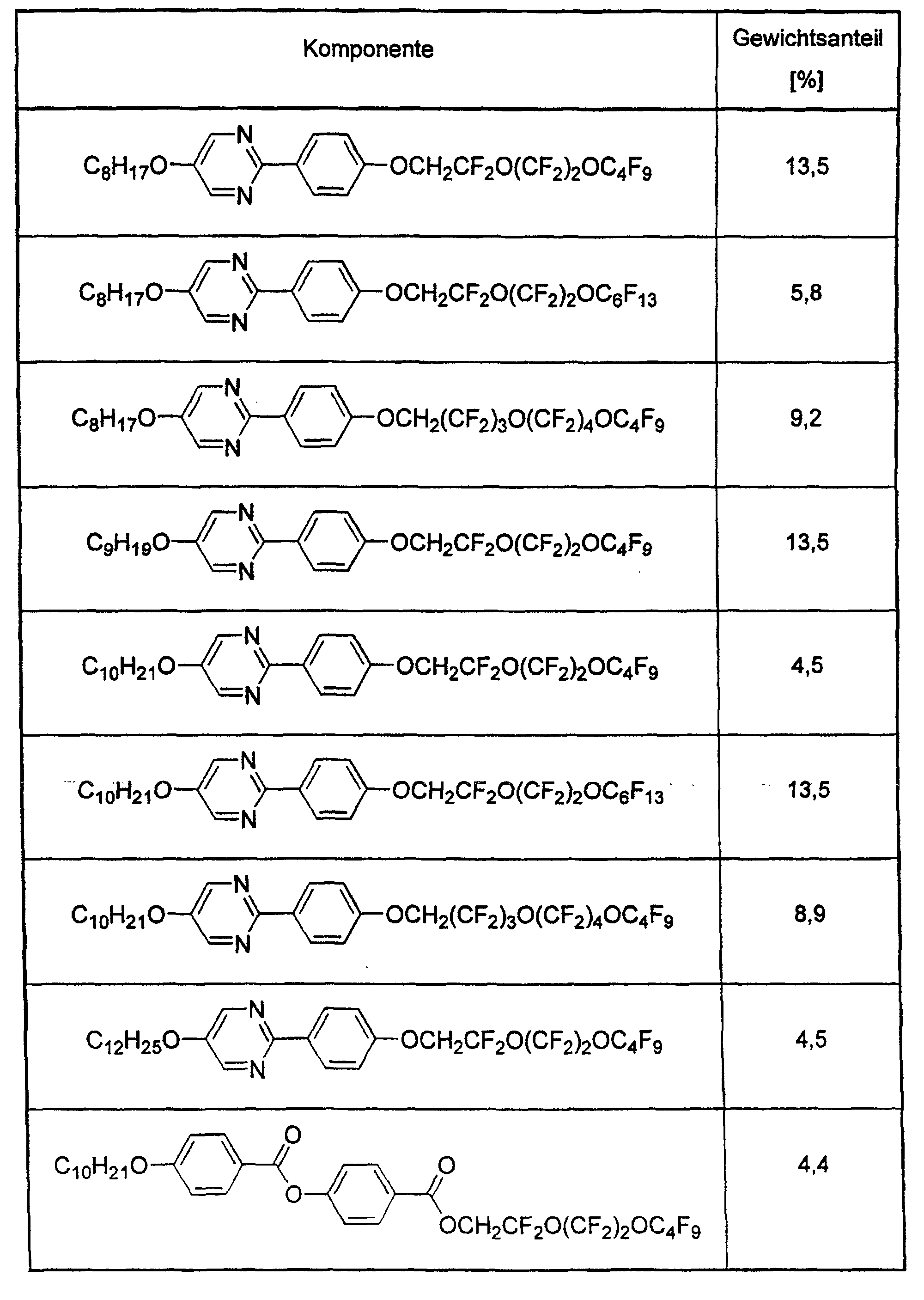

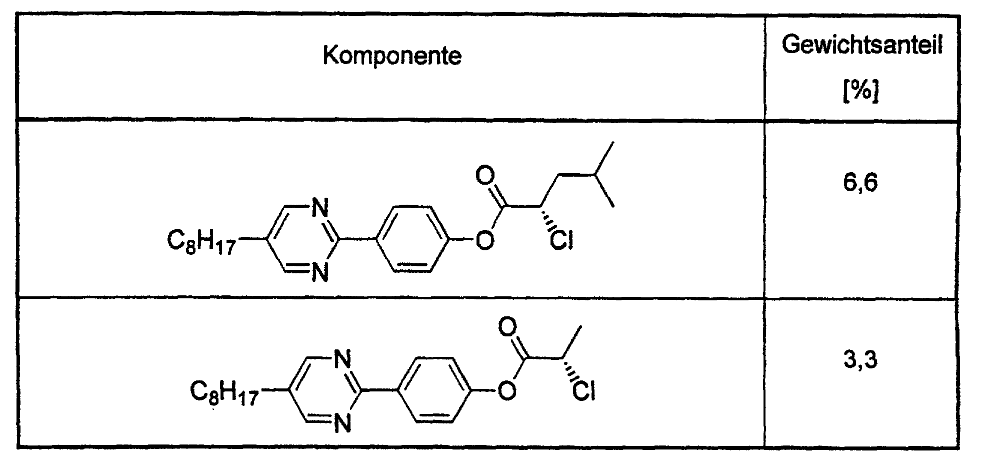

### Beispiel 3: Display und Chipkarte

Eine flexible Kunststoffolie (erhältlich z.B. von der Firma Sumitomo Bakelite, Produktbezeichnung FST 5352, Dicke 100 µm, 200 Ω / Indium-Zinnoxid-beschichtet) wird in einem fotolithographischen Prozeß strukturiert, so daß ein Elektrodenmuster erhalten wird. Die transparenten Leiterbahnen dieser Elektrodenstruktur werden zur elektrischen Ansteuerung des Displays verwendet.

Die Substrate werden mit einer Orientierungsschicht beschichtet und diese mit einer Walze gerieben. Zwei derartig strukturierte Folien, die die Ober- und Unterseite des Displays - also die Trägerplatten - bilden, werden mit Hilfe eines Kleberahmens zusammengefügt und mit der Mischung aus Beispiel 2 unter Zusatz einer Konzentration von 0,5 Gew% Abstandhalter-Kugeln vom Durchmesser 2 µm gefüllt. Der Kleber wird durch vorsichtiges Erhitzen gehärtet, die Zelle versiegelt, die Flüssigkristallmischung durch langsames Abkühlen auf Betriebstemperatur orientiert und zwischen einem Paar Polarisationsfolien in eine "Smartcard" eingebaut. Die nach außen geführten Kontakte der Elektroden der Schaltzelle werden mit den entsprechenden Kontakten oder Flachspulen der "Smartcard" verbunden. Bei Anlegen einer Spannung von 10 V läßt sich diese Zelle bei 25 °C betreiben.

## Patentansprüche

1. Chipkarte, enthaltend ein ferroelektrisches Flüssigkristalldisplay mit einem ferroelektrischen Flüssigkristall, wobei der Flüssigkristall eine oder mehrere mesogene Verbindungen enthält und wobei diese mesogenen Verbindungen eine Kemstruktur aus zwei oder mehr Ringverbindungen und eine oder zwei Seitenketten enthalten, **dadurch gekennzeichnet, daß** mindestens eine mesogene Verbindung mindestens eine teil- oder perfluorierte Seitenkette aufweist.

2. Chipkarte nach Anspruch 1, **dadurch gekennzeichnet, daß** es sich um eine Smartcard handelt.

3. Chipkarte nach Anspruch 1 oder 2, dadurch gegennzeichnet, daß der Flüssigkristall eine oder mehrere mesogene Verbindungen mit teil- oder perfluorierten Seitenketten der Formel (I) enthält,
R(-A¹-M¹)ₐ(-A²-M²)_{b}(-A³-M³)_{c}-A⁴-B-R_{f} (I)
in der die Symbole und Indizes folgende Bedeutungen haben:
R ist
a) Wasserstoff, -F, -Cl, -CF₃, -OCF₃ oder -CN,
b) ein geradkettiger oder verzweigter Alkylrest (mit oder ohne asymmetrisches C-Atom) mit 1 bis 20 C-Atomen, wobei
b1) eine oder mehrere nicht benachbarte und nicht terminale CH₂-Gruppen durch -O-, -S-, -CO-, -CO-O-, -O-CO-, -O-CO-O- oder -Si(CH₃)₂- ersetzt sein können und/oder
b2) eine oder mehrere CH₂-Gruppen durch -CH=CH-, -C≡C-, Cyclopropan-1,2-diyl, 1,4-Phenylen, 1,4-Cyclohexylen oder 1,3-Cyclopentylen ersetzt sein können und/oder
b3) ein oder mehrere H-Atome durch F, CN und/oder Cl ersetzt sein können und/oder
b4) die terminale CH₃-Gruppe durch eine der folgenden chiralen Gruppen (optisch aktiv oder racemisch) ersetzt sein kann: 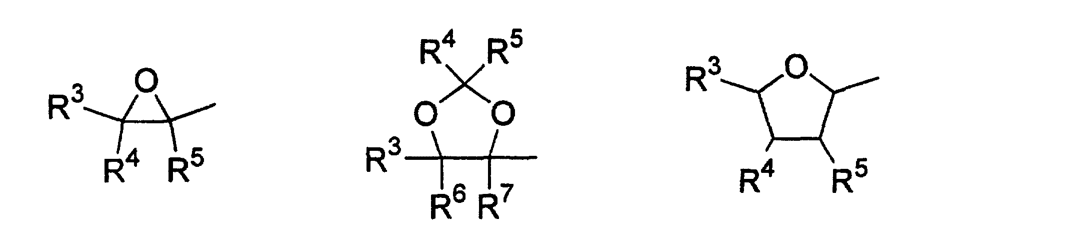 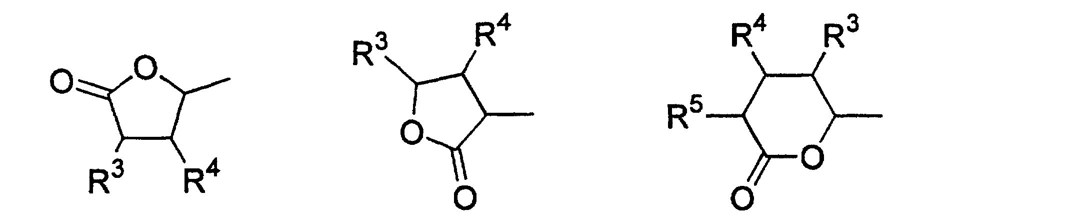 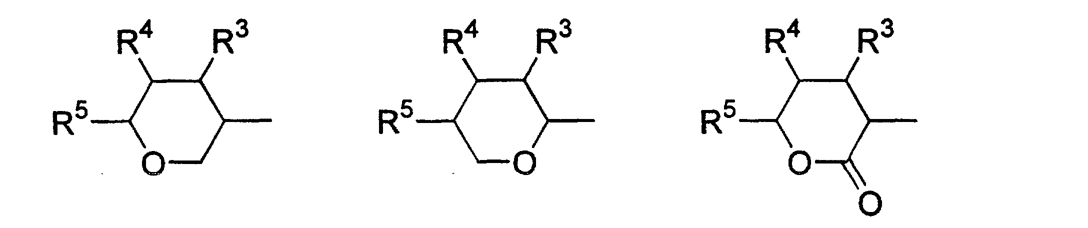 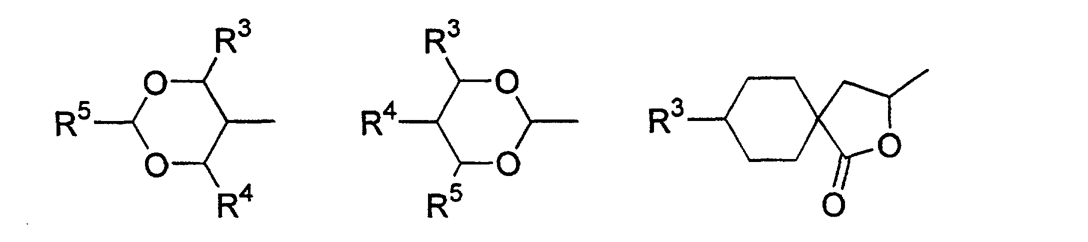 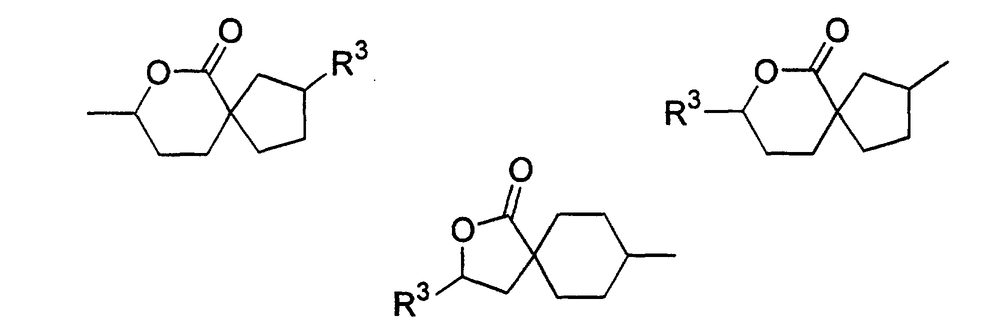 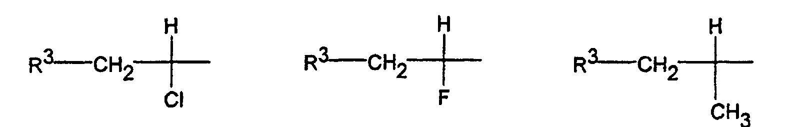 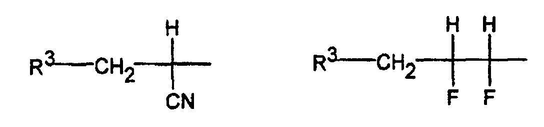
c) B-R_{f}
R³, R⁴, R⁵, R⁶, R⁷ sind gleich oder verschieden
a) Wasserstoff
b) ein geradkettiger oder verzweigter Alkylrest (mit oder ohne asymmetrisches Kohlenstoffatom) mit 1 bis 16 C-Atomen, wobei
b1) eine oder mehrere nicht benachbarte und nicht terminale CH₂-Gruppen durch -O- ersetzt sein können und/oder
b2) eine oder zwei CH₂-Gruppen durch -CH=CH- ersetzt sein können,
c) R⁴ und R⁵ zusammen auch -(CH₂)₄- oder -(CH₂)₅-, wenn sie an ein Oxiran-, Dioxolan-, Tetrahydrofuran-, Tetrahydropyran-, Butyrolacton- oder Valerolacton-System gebunden sind;
R_{f} ist
ein geradkettiger oder verzweigter teil- oder perfluorierter Alkylrest (mit oder ohne asymmetrisches C-Atom) mit 1 bis 20 C-Atomen, wobei
a) eine oder mehrere nicht benachbarte und nicht terminale CH₂- oder CF₂-Gruppen durch -O-, -S-, -CO-, -CO-O-, -O-CO-, -O-CO-O- oder -Si(CH₃)₂-ersetzt sein können und/oder
b) eine oder mehrere CH₂- oder CF₂-Gruppen durch -CH=CH-, -C≡C-, Cyclopropan-1,2-diyl, 1,4-Phenylen, 1,4-Cyclohexylen oder 1,3-Cyclopentylen ersetzt sein können;
B ist
-O-, -S-, -(CH₂)ₙ₊₁-O-, -O-(CH₂)ₙ₊₁-, -(CH₂)ₙ₊₁-S-, -S-(CH₂)ₙ₊₁-, -CO-(CH₂)ₙ-, -CO-O-(CH₂)ₙ-, -O-CO-(CH₂)ₙ-, -CO-S-(CH₂)ₙ-, -S-CO-(CH₂)ₙ-, -CS-O-(CH₂)ₙ-, -O-CS-(CH₂)ₙ-, -SO₂-(CH₂)ₙ-, -OSO₂-(CH₂)ₙ-, -CH=CH-, -C≡C-, -(CH₂)ₙ₊₁-, -CH=N-, -N(CₖH₂ₖ₊₁)-, -(CH₂)ₙ-N(CₖH₂ₖ₊₁)-CO-, -(CH₂)ₙ-N(CₖH₂ₖ₊₁)-SO₂-, -O-[(CH₂)ₘ₊₁-O]ₗ-(CH₂)ₙ-, -[(CH₂)ₘ₊₁-O]ₗ-(CH₂)ₙ- oder eine Einfachbindung;
m, n sind gleich oder verschieden unabhängig voneinander eine ganze Zahl von 0 bis 15, k ist eine ganze Zahl von 0 bis 4 und l ist eine ganze Zahl von 1 bis 6, mit der Maßgabe, daß m+n ≤ 15 ist;
M¹, M², M³ sind gleich oder verschieden
-CO-O-, -O-CO-, -CO-S-, -S-CO-, -CS-O-, -O-CS-, -CS-S-, -S-CS-, -CH₂-O-, -O-CH₂-, -CH₂-S-, -S-CH₂-, -CH₂-CH₂-, -CH=CH-, -C≡C-, -CH₂-CH₂-CO-O-, -O-CO-CH₂-CH₂-, -CH=N- oder eine Einfachbindung;
A¹, A², A³, A⁴ sind gleich oder verschieden
1,4-Phenylen, wobei ein oder mehrere H-Atome durch F, Cl, CH₃, C₂H₅, OCH₃, CF₃, OCF₃ und/oder CN ersetzt sein können, 1,3-Phenylen, wobei eine oder zwei CH-Gruppen durch N ersetzt sein können, Pyrazin-2,5-diyl, wobei ein oder zwei H-Atome durch F, Cl und/oder CN ersetzt sein können, Pyridazin-3,6-diyl, wobei ein oder zwei H-Atome durch F, Cl und/oder CN ersetzt sein können, Pyridin-2,5-diyl, wobei ein oder mehrere H-Atome durch F, Cl und/oder CN ersetzt sein können, Pyrimidin-2,5-diyl, wobei ein oder zwei H-Atome durch F, Cl und/oder CN ersetzt sein können, 1,4-Cyclohexylen, wobei ein oder zwei H-Atome durch CN und/oder CH₃ und/oder F ersetzt sein können, (1,3,4)-Thiadiazol-2,5-diyl, 1,3-Dioxan-2,5-diyl, 1,3-Dithian-2,5-diyl, 1,3-Thiazol-2,4-diyl, wobei ein H-Atom durch F, Cl und/oder CN ersetzt sein kann, 1,3-Thiazol-2,5-diyl, wobei ein H-Atom durch F, Cl und/oder CN ersetzt sein kann, Thiophen-2,4-diyl, wobei ein H-Atom durch F, Cl und/oder CN ersetzt sein kann, Thiophen-2,5-diyl, wobei ein oder zwei H-Atome durch F, Cl und/oder CN ersetzt sein können, Naphthalin-2,6-diyl, Naphtalin-1,4-diyl oder Naphtalin-1,5-diyl, wobei jeweils ein oder mehrere H-Atome durch F, Cl und/oder CN ersetzt sein können und/oder eine oder zwei CH-Gruppen durch N ersetzt sein können, Phenanthren-2,7-diyl oder 9,10-Dihydrophenanthren-2,7-diyl, wobei jeweils ein, zwei oder mehrere H-Atome durch F ersetzt sein können und/oder eine oder zwei CH-Gruppen durch N ersetzt sein können, Indan-2,5-diyl, Indan-1-on-2,5-diyl, Benzothiazol-2,6-diyl, Benzothiazol-2,5-diyl, Benzoxazol-2,6-diyl, Benzoxazol-2,5-diyl, Benzofuran-2,5-diyl, Benzofuran-2,6-diyl, 2,3-Dihydrobenzofuran-2,5-diyl, Piperazin-1,4-diyl, Piperazin-2,5-diyl oder 1,3-Dioxaborinan-2,5-diyl;
a, b, c sind null oder eins,
mit der Maßgabe, daß die Verbindung der Formel (I) nicht mehr als vier fünf- oder mehrgliedrige Ringsysteme enthalten darf.

4. Chipkarte nach Anspruch 3, **dadurch gekennzeichnet, daß** die Verbindung(en) der Formel (I) aus der Gruppe der folgenden Verbindungen (I-1) bis (I-64) ausgewählt wird/werden: 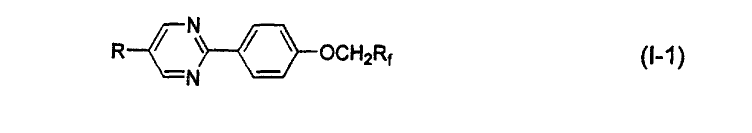 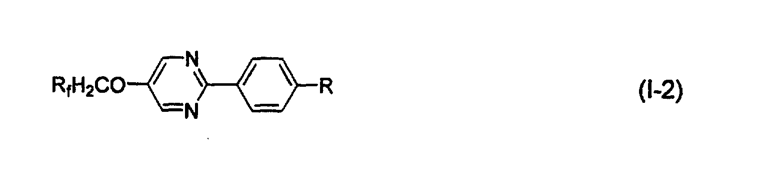 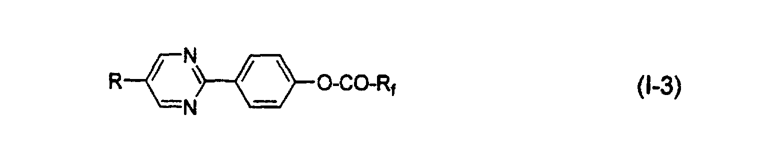 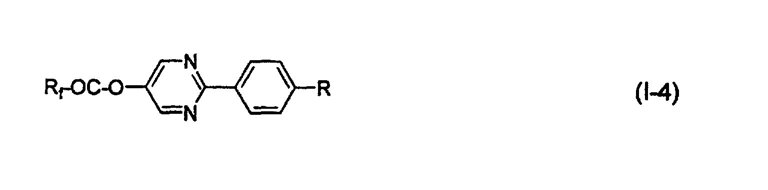 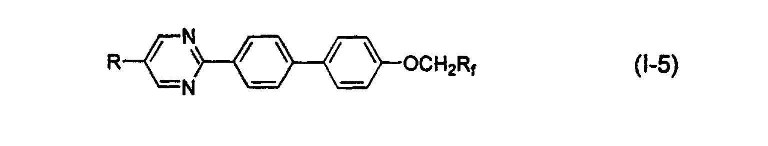 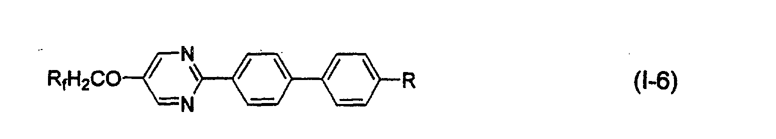 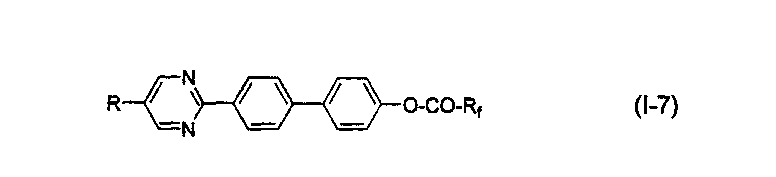 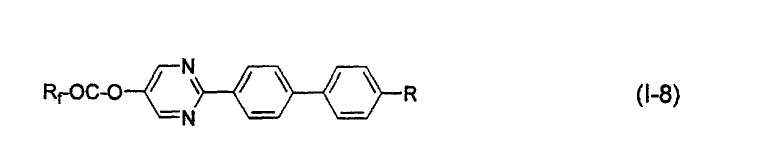 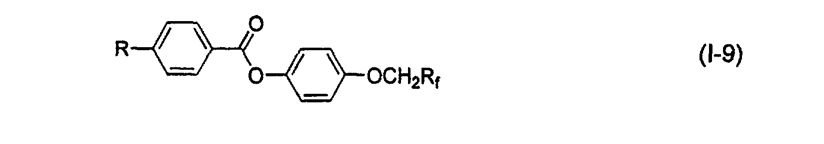 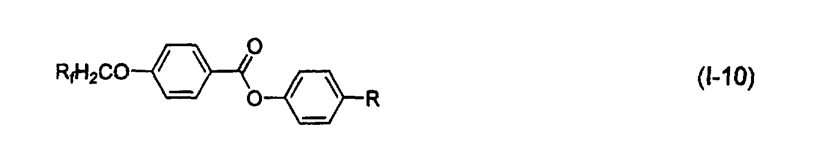 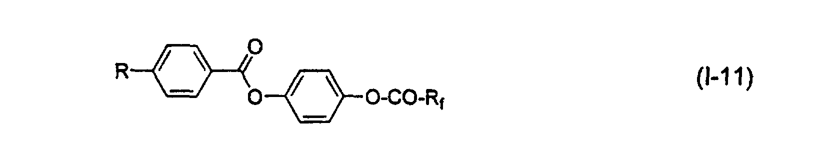 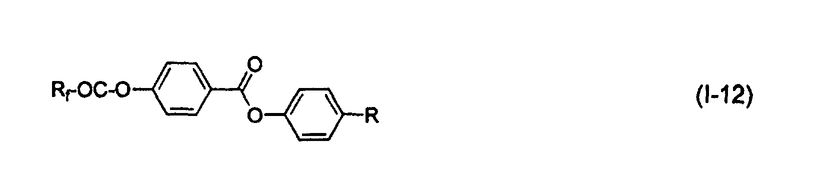 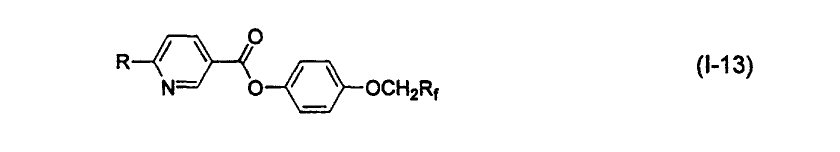 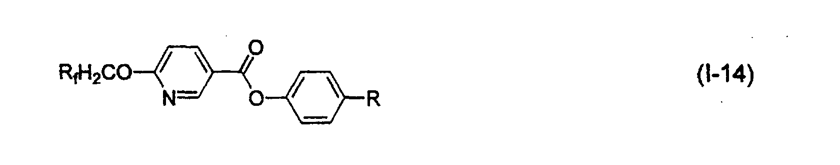 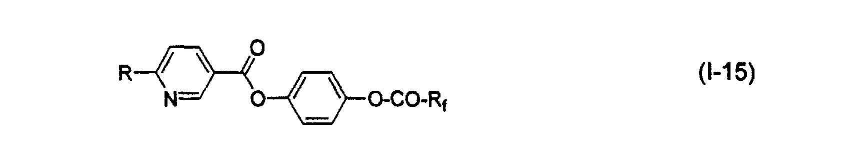 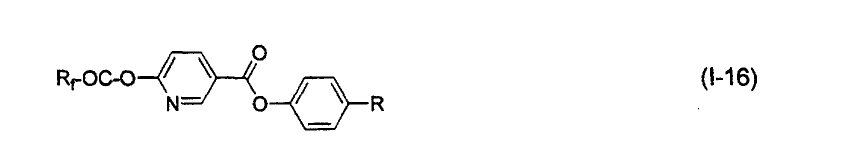 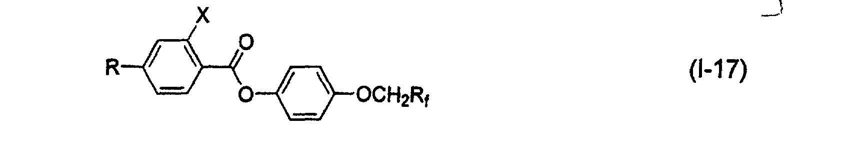 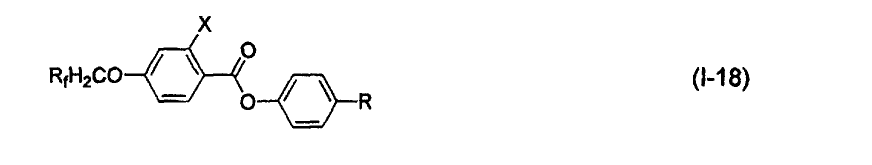 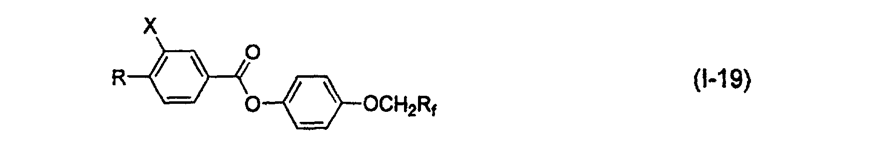 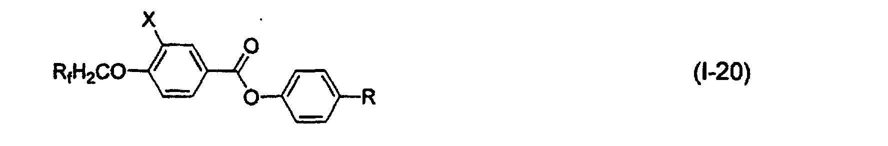 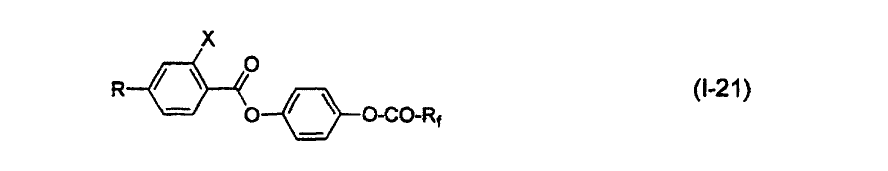 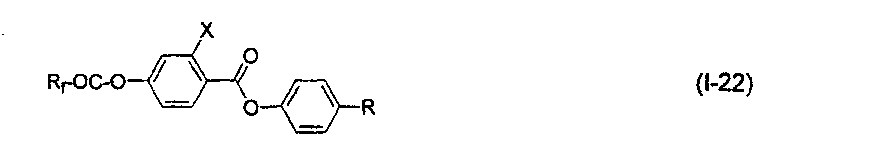 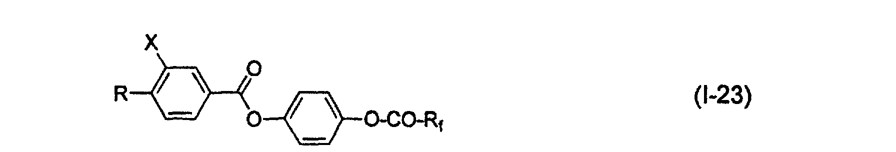 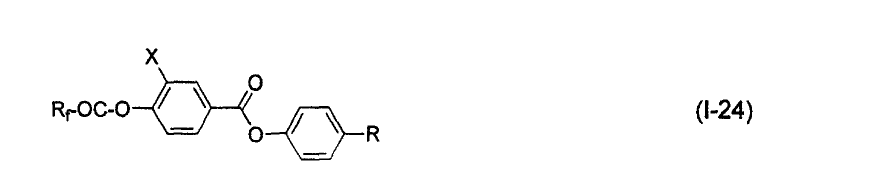 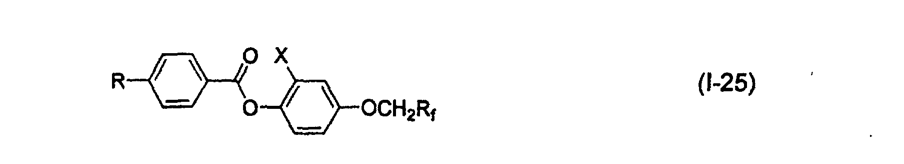 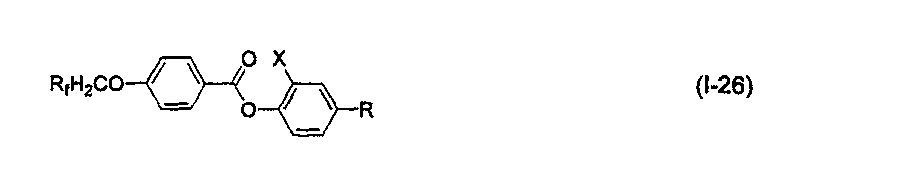 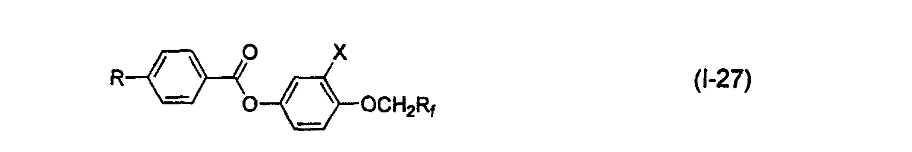 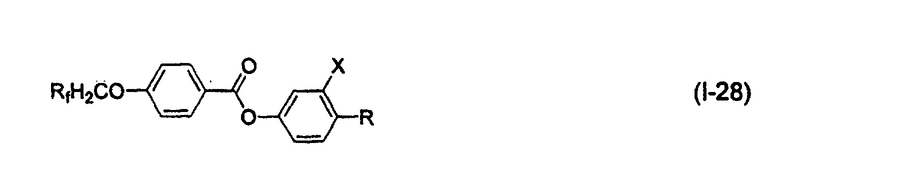 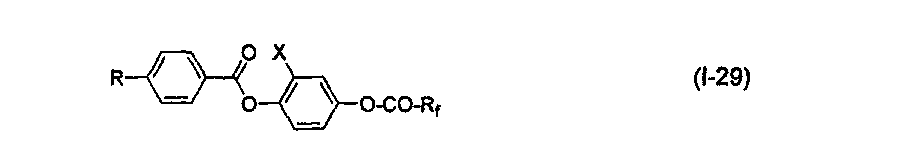 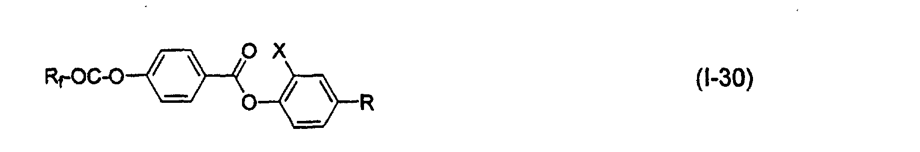 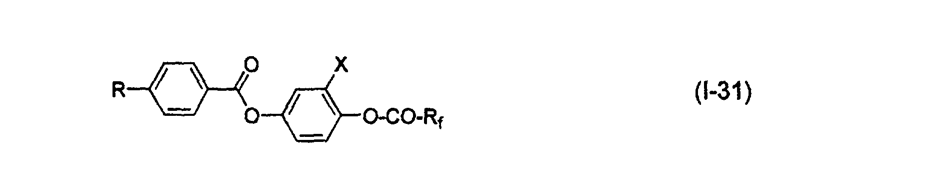 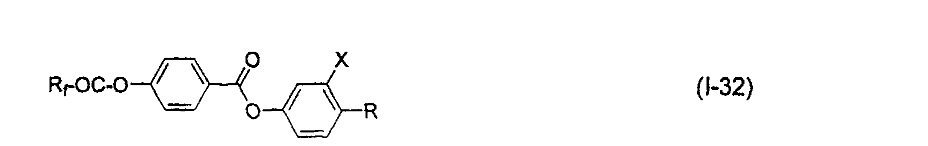 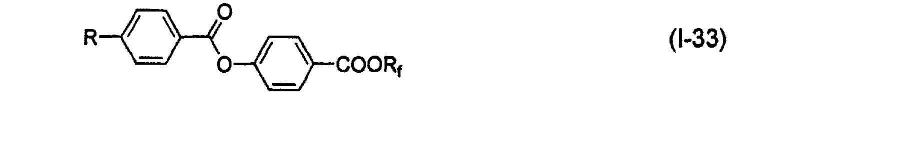 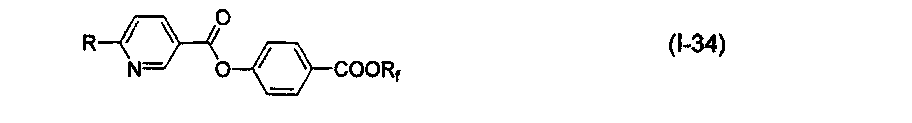 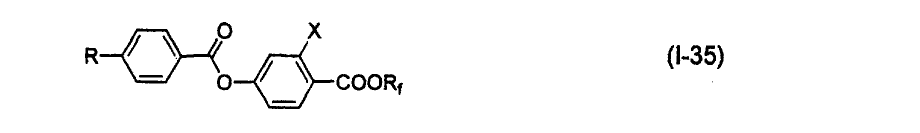 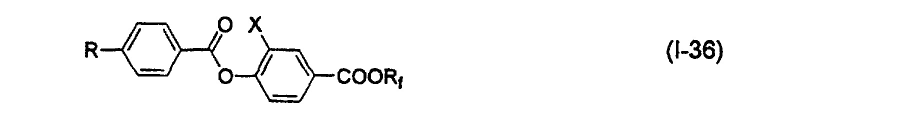 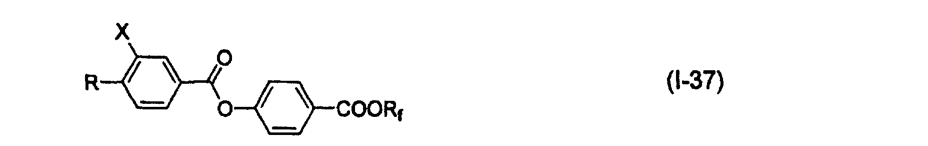 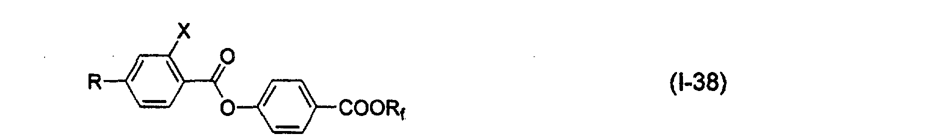 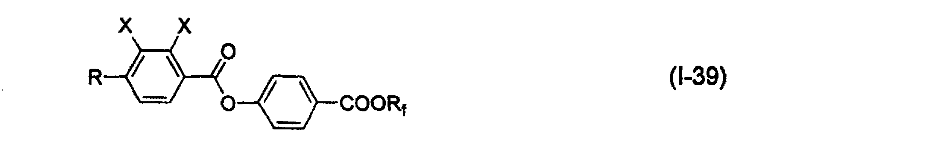 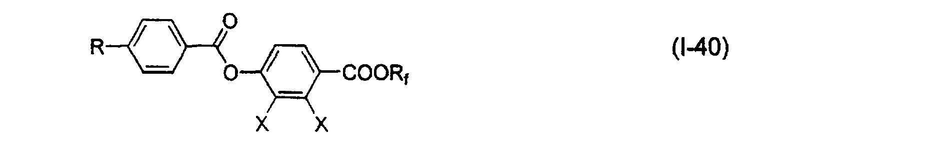 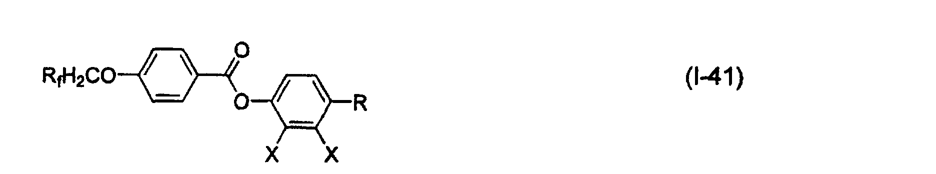 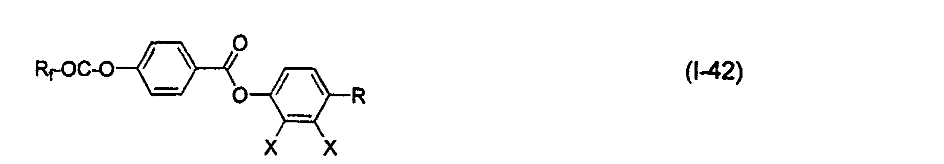 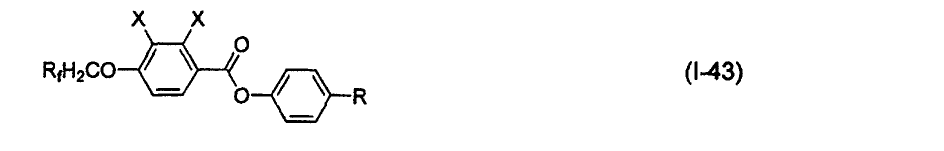 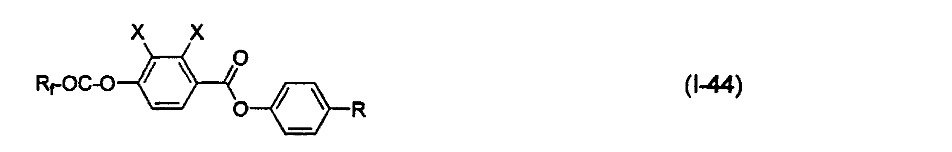 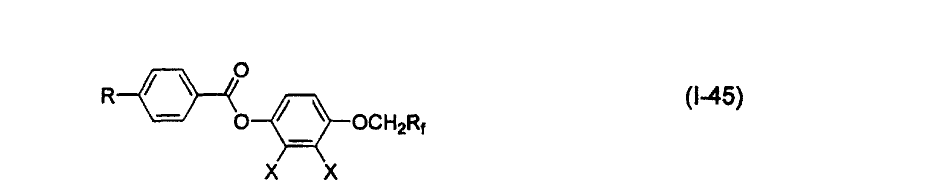 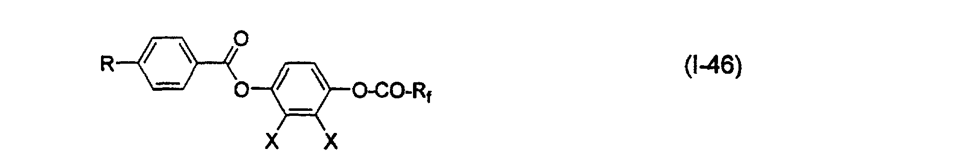 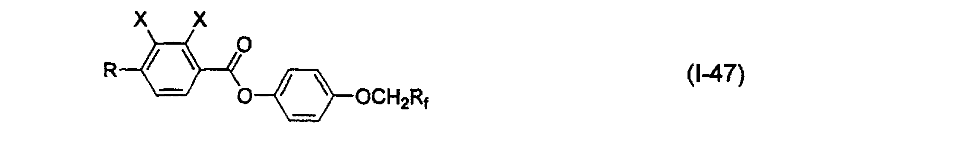 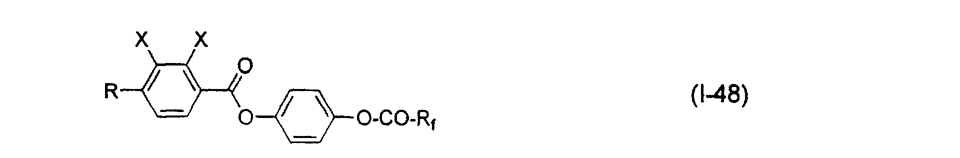 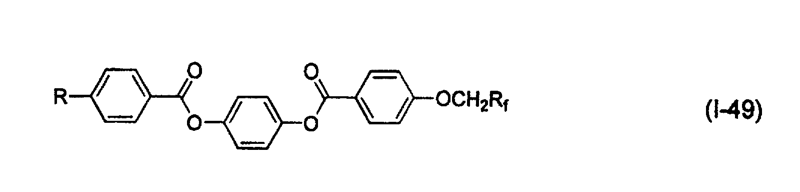 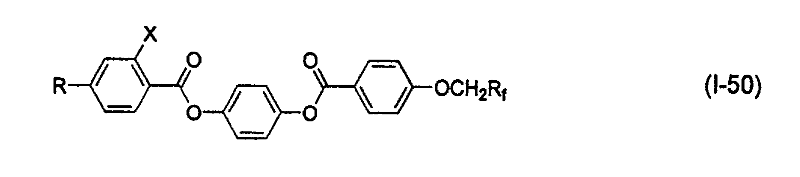 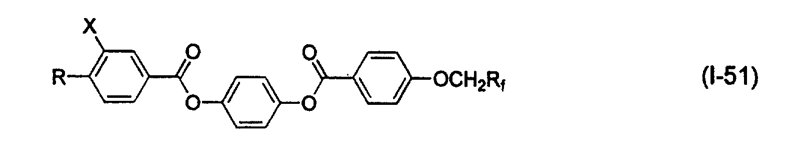 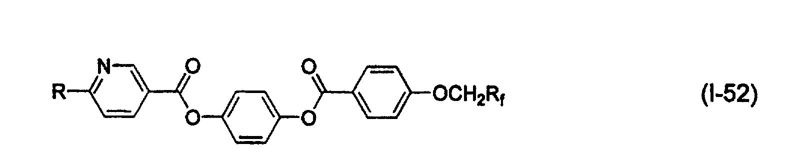 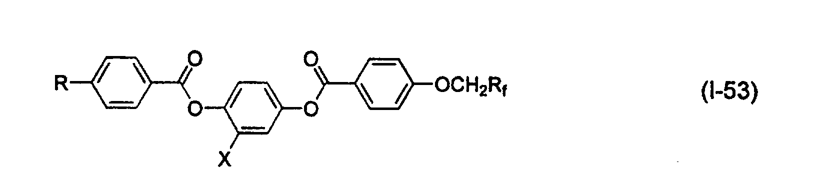 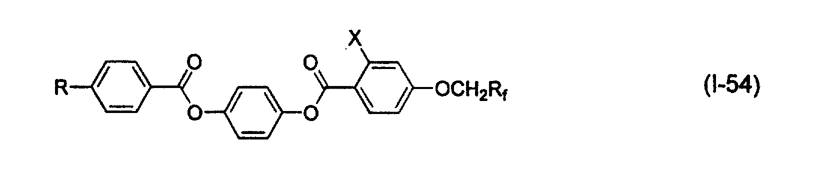 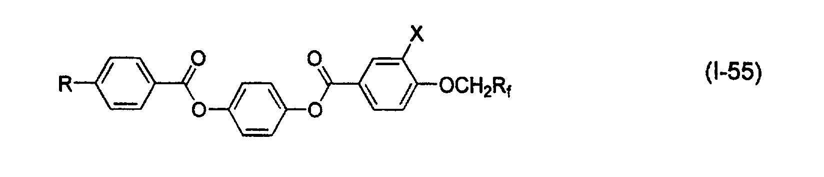 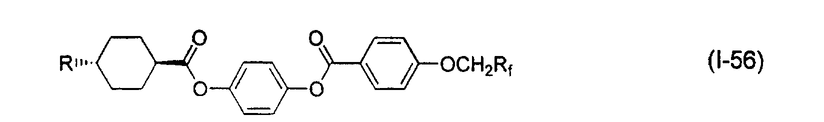 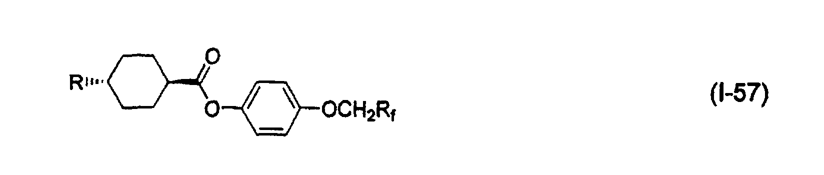 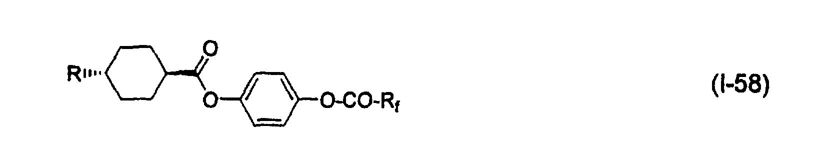 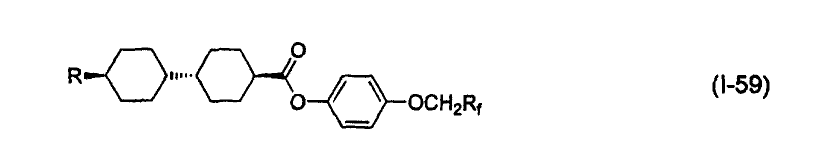 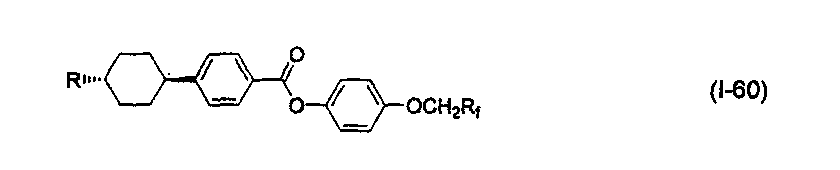 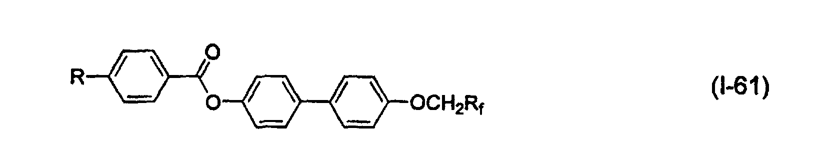 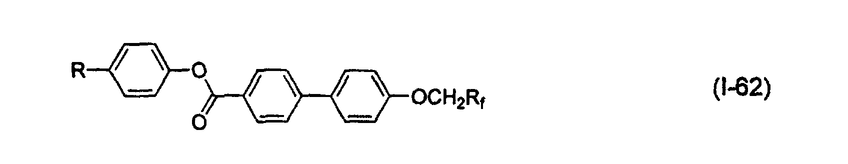 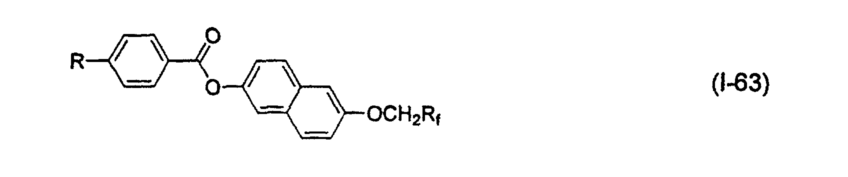 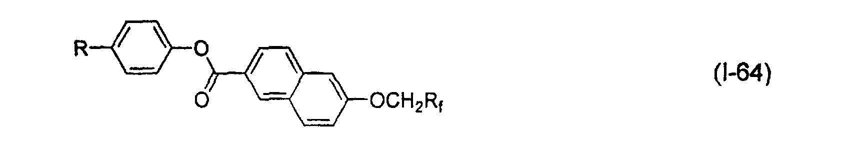 wobei X gleich F, Cl oder CN ist und R, R, die für die Formel (I) in Anspruch 3 angegebenen Bedeutungen haben.

5. Chipkarte nach Anspruch 3 oder 4, **dadurch gekennzeichnet, daß** der Flüssigkristall mindestens 5 Gew.-% an einer oder mehreren Verbindungen der Formel (I) enthält.

6. Chipkarte nach einem oder mehreren der Ansprüche 3 bis 5, **dadurch gekennzeichnet, daß** der Flüssigkristall 4 bis 20 Verbindungen der Formel (I) enthält.

7. Chipkarte nach einem oder mehreren der Ansprüche 1 bis 6, **dadurch gekennzeichnet, daß** der Elektrodenabstand des ferroelektrischen Flüssigkristalldisplays mindestens 1,5 µm beträgt.

8. Verfahren zur Herstellung einer Chipkarte nach einem oder mehreren der Ansprüche 1 bis 7 bei dem man ein ferroelektrisches Flüssigkristalldisplay mit einem ferroelektrischen Flüssigkristall in oder auf eine Kunststoffkarte einbetten bzw. aufbringt, wobei die Kunststoffkarte mit einem integrierten Schaltkreis, welcher Informationen elektronisch speichern und/oder bearbeiten kann, und Mitteln zur Informationsübertragung zwischen der Karte und einem elektronischen Lese- und/der Schreibsystem versehen ist, **dadurch gekennzeichnet, daß** der Flüssigkristall eine oder mehrere mesogene Verbindungen enthält und wobei diese mesogenen Verbindungen eine Kernstruktur aus zwei oder mehr Ringverbindungen und eine oder zwei Seitenketten enthalten, **dadurch gekennzeichnet, daß** mindestens eine mesogene Verbindung mindestens eine teil- oder perfluorierte Seitenkette aufweist.

9. Verwendung eines ferroefektrischen Flüssigkristalldisplays, enthaltend einen ferroelektrischen Flüssigkristall, wobei der Flüssigkristall eine oder mehrere mesogene Verbindungen enthält und wobei diese mesogenen Verbindungen eine Kemstruktur aus zwei oder mehr Ringverbindungen und eine oder zwei Seitenketten enthalten, **dadurch gekennzeichnet, daß** mindestens eine mesogene Verbindung mindestens eine teil- oder perfluorierte Seitenkette aufweist, zur Herstellung von Chipkarten mit einer permanent ablesbaren Anzeige.

## Claims

1. A chip card containing a ferroelectric liquid-crystal display containing a ferroelectric liquid-crystal, where the liquid crystal comprises one or more mesogenic compounds and where these mesogenic compounds include a core structure comprising two or more ring compounds and one or two side chains, wherein at least one mesogenic compound has at least one partially or perfluorinated side chain.

2. A chip card as claimed in claim 1, in the form of a smart card.

3. A chip card as claimed in claim 1 or 2, wherein the liquid crystal comprises one or more mesogenic compounds having a partially or perfluorinated side chain of the formula (I)
R¹(-A¹-M¹)ₐ(-A²-M²)_{b}-(-A³-M³)_{c}-A⁴-B-R_{f} (I)
where the symbols and indices are defined as follows:
R is
a) hydrogen, -F, -Cl, -CF₃, -OCF₃ or -CN,
b) a straight-chain or branched alkyl radical (with or without an asymmetrical carbon atom) having 1 to 20 carbon atoms, where
b1) one or more non-adjacent and non-terminal -CH2- groups may be replaced by -O-, -S-, -CO-, -CO-O-, -O-CO-, -O-CO-O- or -Si(CH₃)₂-, and/or
b2) one or more -CH₂- groups may be replaced by -CH=CH-, -C≡C-, cyclopropane-1,2-diyl, 1,4-phenylene, 1,4-cyclohexylene or 1,3-cyclopentylene, and/or
b3) one or more H atoms may be replaced by F, CN and/or Cl, and/or
b4) the terminal CH₃ group may be replaced by one of the following chiral groups (optically active or racemic): 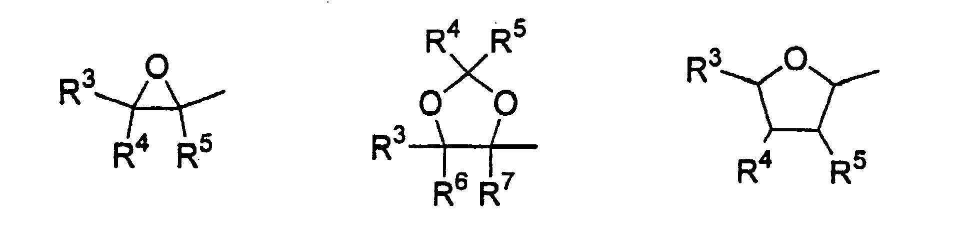 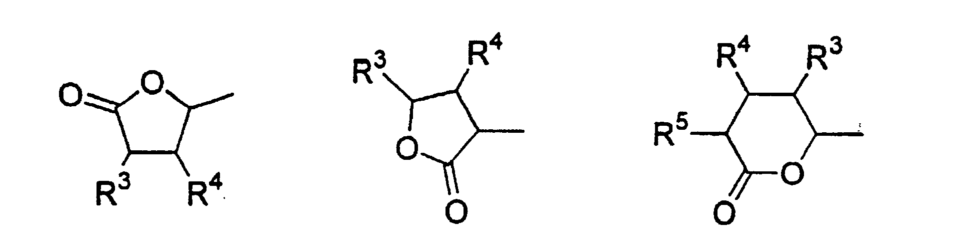 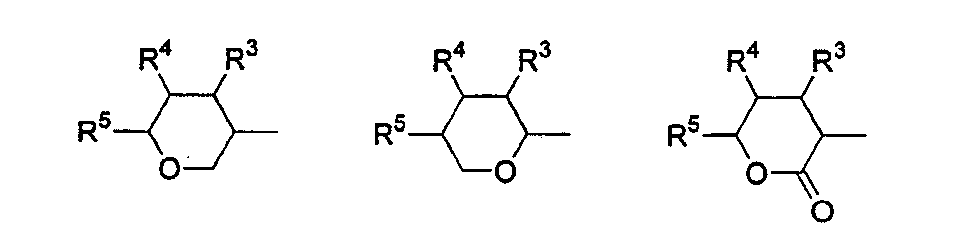 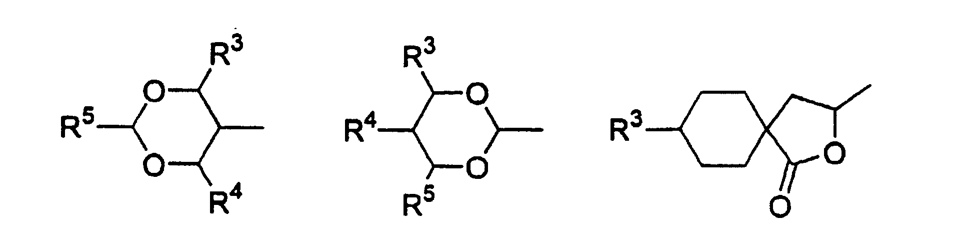 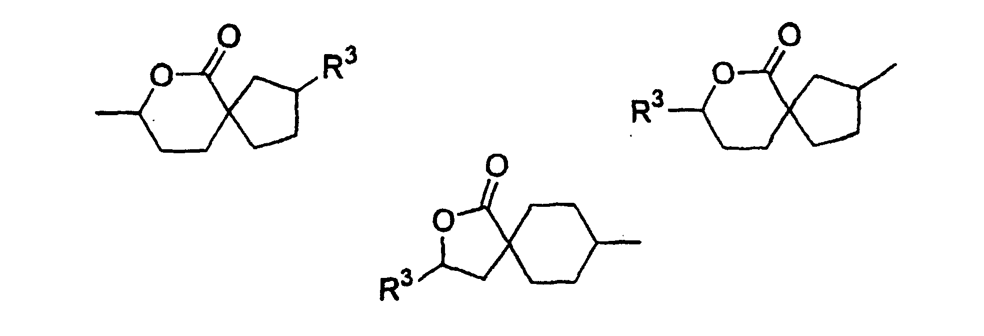 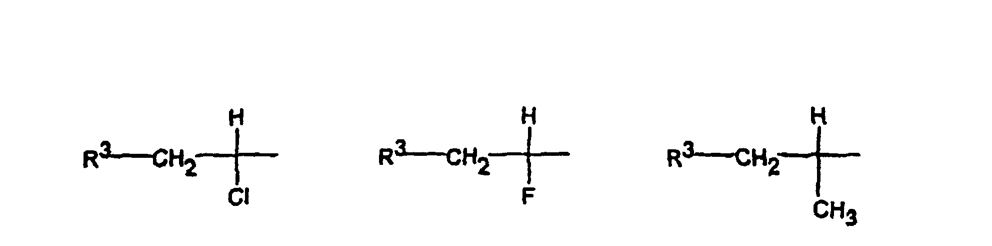 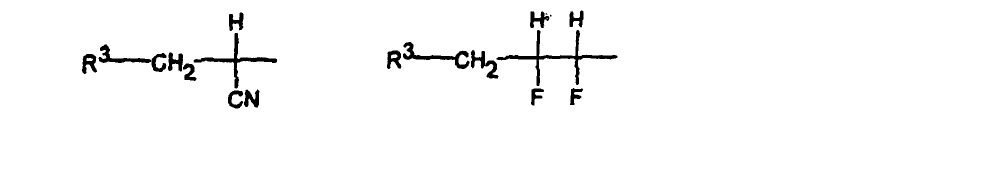
c) B-R_{f}
R³, R⁴, R⁵, R⁶ and R⁷ are identical or different and are
a) hydrogen
b) a straight-chain or branched alkyl radical (with or without an asymmetrical carbon atom) having 1 to 16 carbon atoms, where
b1) one or more non-adjacent and non-terminal -CH₂- groups may be replaced by -O-, and/or
b2) one or two -CH₂- groups may be replaced by -CH=CH-,
c) R⁴ and R⁵ together may alternatively be -(CH₂)₄- or -(CH₂)₅- if they are bonded to an oxirane, dioxolane, tetrahydrofuran, tetrahydropyran, butyrolactone or valerolactone system;
R_{f} is
a straight-chain or branched partially or perfluorinated alkyl radical (with or without an asymmetrical carbon atom) having 1 to 20 carbon atoms, where
a) one or more non-adjacent and non-terminal -CH₂- or -CF₂-groups may be replaced by -O-, -S-, -CO-, -CO-O-, -O-CO-, -O-CO-O- or -Si(CH₃)₂-, and/or
b) one or more -CH₂- or -CF₂- groups may be replaced by -CH=CH-, -C≡C-, cyclopropane-1,2-diyl, 1,4-phenylene, 1;4-cyclohexylene or 1,3-cyclopentylene;
B is
-O-, -S-, -(CH₂)ₙ₊₁-O-, -O-(CH₂)ₙ₊₁-, -(CH₂)ₙ₊₁-S-, -S-(CH₂)ₙ₊₁-, -CO-(CH₂)ₙ-, -CO-O-(CH₂)ₙ-, -O-CO-(CH₂)ₙ-, -CO-S-(CH₂)ₙ-, -S-CO-(CH₂)ₙ-, -CS-O-(CH₂)ₙ-, -O-CS-(CH₂)ₙ-, -SO₂-(CH₂)ₙ-, -OSO₂-(CH₂)ₙ-, -CH=CH-, -C≡C-, -(CH₂)ₙ₊₁-, -CH=N-, -N(CₖH₂ₖ₊₁)-, -(CH₂)ₙ-N(CₖH₂ₖ₊₁)-CO-, -(CH₂)ₙ-N(CₖH₂ₖ₊₁)-SO₂-, -O-[(CH₂)ₘ₊₁-O]ₗ-(CH₂)ₙ-, -[(CH₂)ₘ₊₁-O]ₗ-(CH₂)ₙ- or a single bond;
m and n are identical or different and are, independently of one another, an integer from 0 to 15, k is an integer from 0 to 4, and I is an integer from 1 to 6, with the proviso that m + n ≤ 15;
M¹, M² and M³ are identical or different and are -CO-O-, -O-CO-, -CO-S-, -S-CO-, -CS-O-, -O-CS-, -CS-S-, -S-CS-, -CH₂-O-, -O-CH₂-, -CH₂-S-, -S-CH₂-, -CH₂-CH₂-, -CH=CH-, -C≡C-, -CH₂-CH₂-CO-O-, -O-CO-CH₂-CH₂-, -CH=N- or a single bond;
A¹, A², A³ and A⁴ are identical or different and are
1,4-phenylene, in which one or more H atoms may be replaced by F, Cl, CH₃, C₂H₅, OCH₃, CF₃, OCF₃ and/or CN, 1,3-phenylene, in which one or two CH groups may be replaced by N, pyrazine-2,5-diyl, in which one or two H atoms may be replaced by F, Cl and/or CN, pyridazine-3,6-diyl, in which one or two H atoms may be replaced by F, Cl and/or CN, pyridine-2,5-diyl, in which one or more H atoms may be replaced by F, Cl and/or CN, pyrimidine-2,5-diyl, in which one or two H atoms may be replaced by F, Cl and/or CN, 1,4-cyclohexylene, in which one or two H atoms may be replaced by CN and/or CH₃ and/or F, 1,3,4-thiadiazole-2,5-diyl, 1,3-dioxane-2,5-diyl, 1,3-dithiane-2,5-diyl, 1,3-thiazole-2,4-diyl, in which one H atom may be replaced by F, Cl and/or CN, 1,3-thiazole-2,5-diyl, in which one H atom may be replaced by F, Cl and/or CN, thiophene-2,4-diyl, in which one H atom may be replaced by F, Cl and/or CN, thiophene2,5-diyl, in which one or two H atoms may be replaced by F, Cl and/or CN, naphthalene-2,6-diyl, or and/or CN, naphthalene-2,6-diyl, naphthalene-1,4-diyl or naphthalene-1,5-diyl, in each of which one or more H atoms may be replaced by F, Cl and/or CN and/or one or two CH groups may be replaced by N, phenanthrene-2,7-diyl or 9,10-dihydrophenanthrene-2,7-diyl, in each of which one, two or more H atoms may be replaced by F and/or one or two CH groups may be replaced by N, indane-2,5-diyl, indan-1-one-2,5-diyl, benzothiazole-2,6-diyl, benzothiazole-2,5-diyl, benzoxazole-2,6-diyl, benzoxazole-2,5-diyl, benzofuran-2,5-diyl, benzofuran-2,6-diyl, 2,3-dihydrobenzofuran-2,5-diyl, piperazine-1,4-diyl, piperazine-2,5-diyl or 1,3-dioxaborinane-2,5-diyl;
a, b and c are zero or one,
with the proviso that the compound of the formula (I) cannot contain more than four five- or multimembered ring systems.

4. A chip card as claimed in claim 3, wherein the compound(s) of the formula (I) is/are selected from the following compounds (I-1) to (I-64): 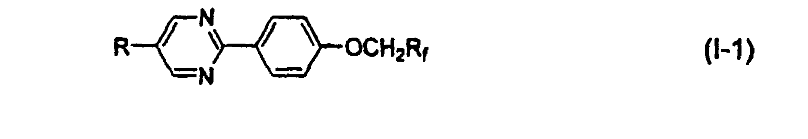 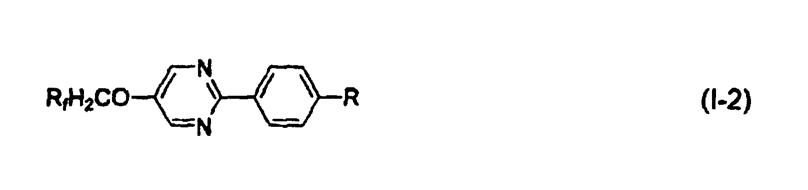 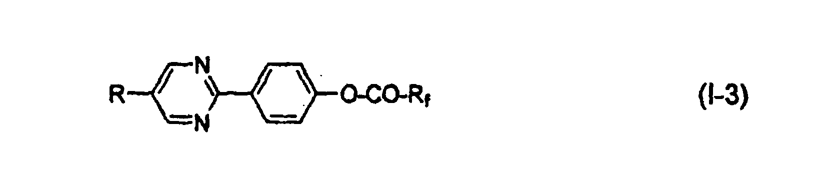 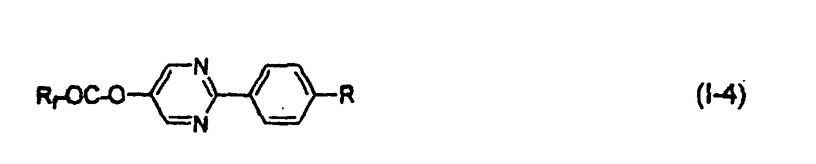 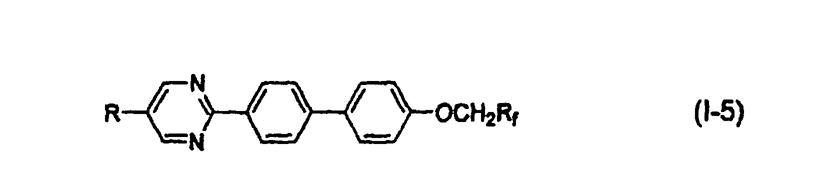 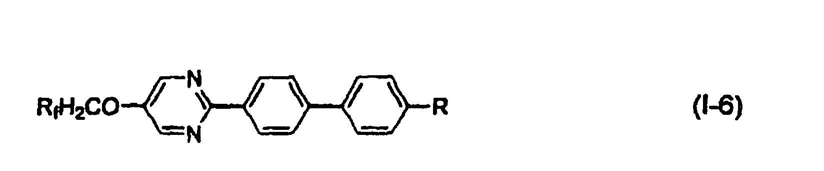 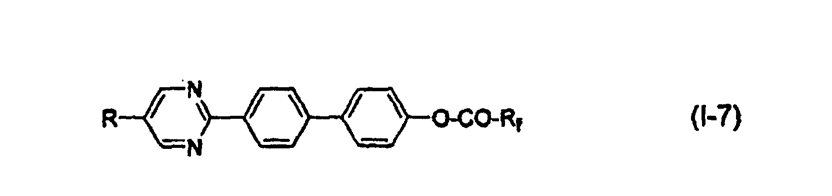 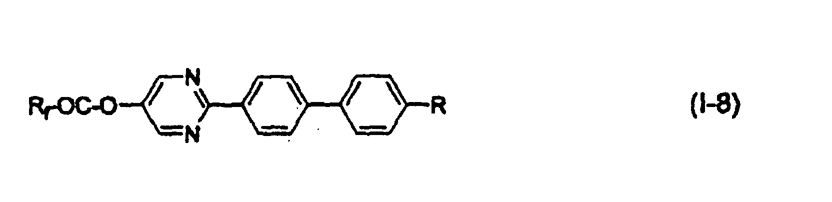 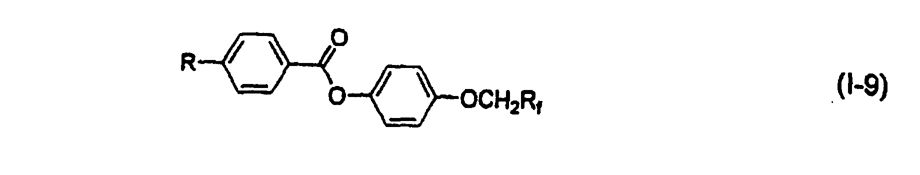 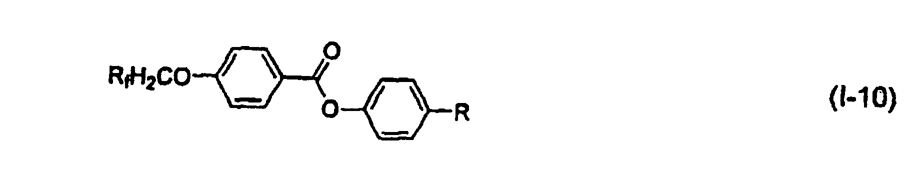 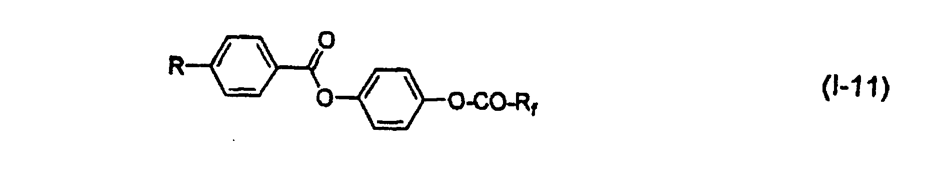 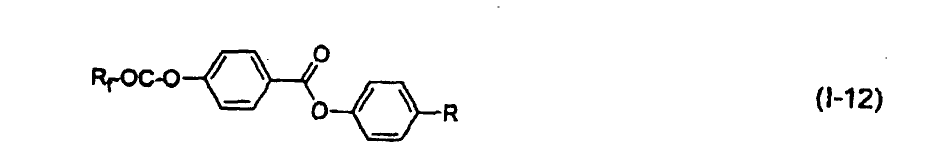 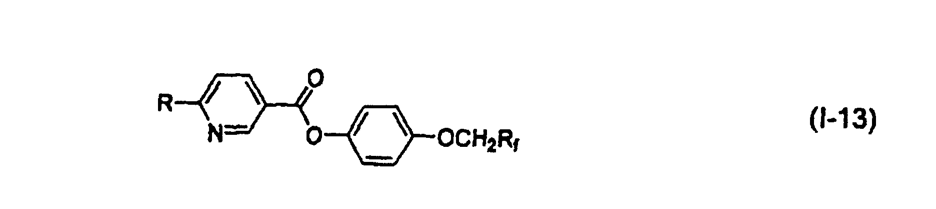 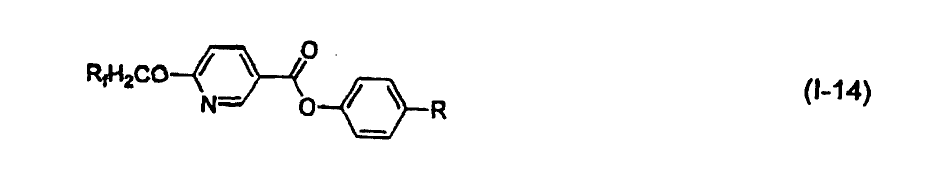 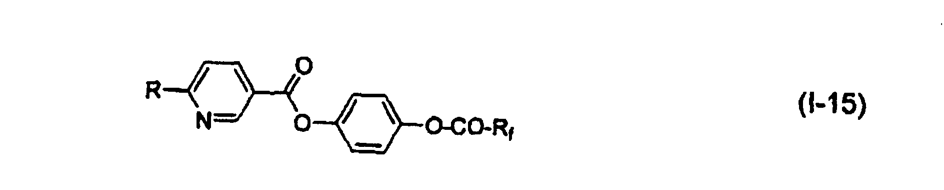 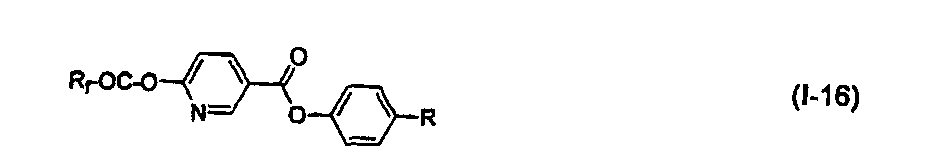 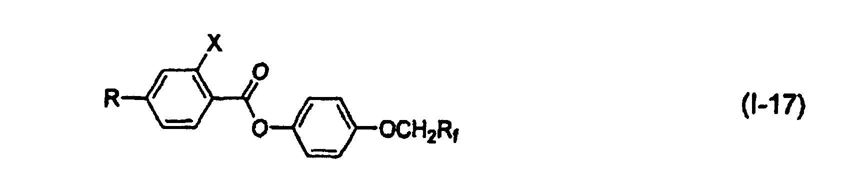 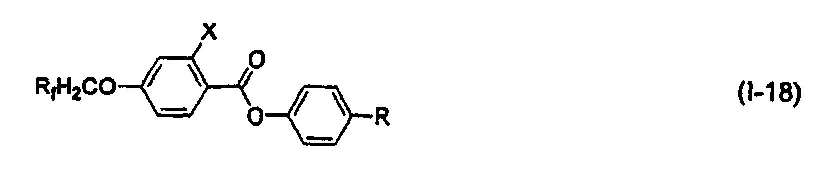 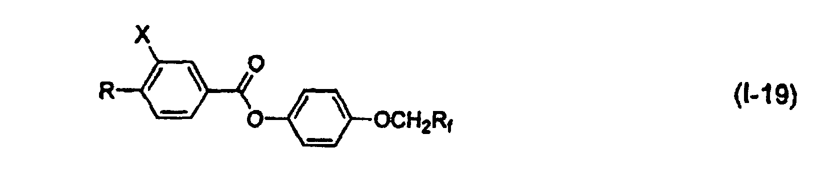 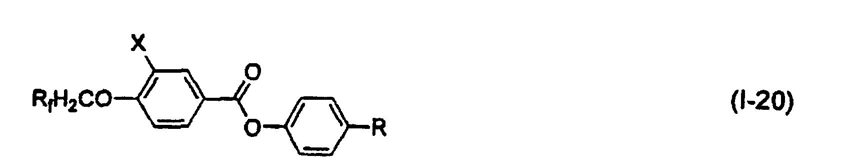 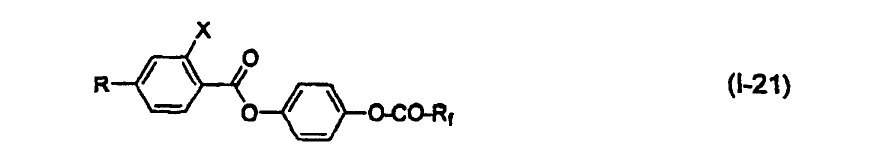 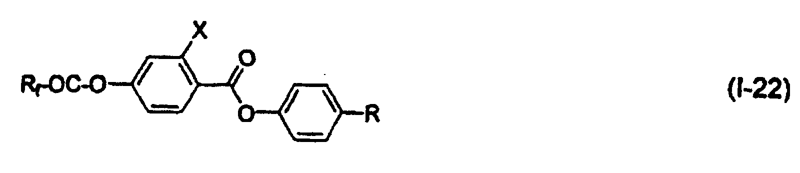 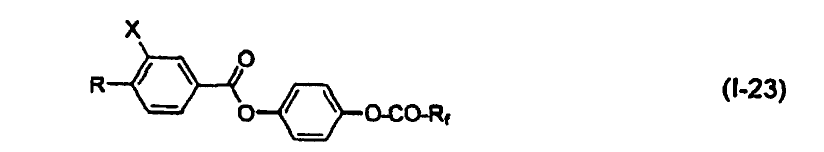 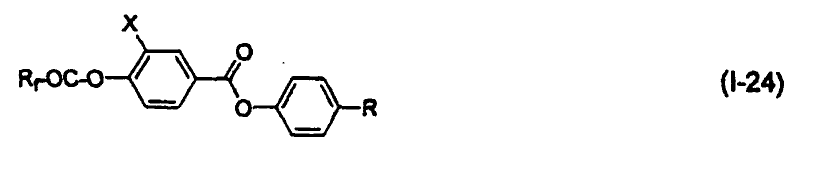 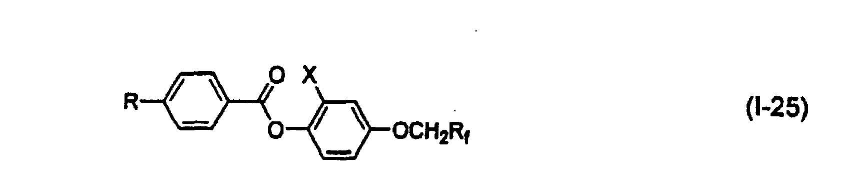 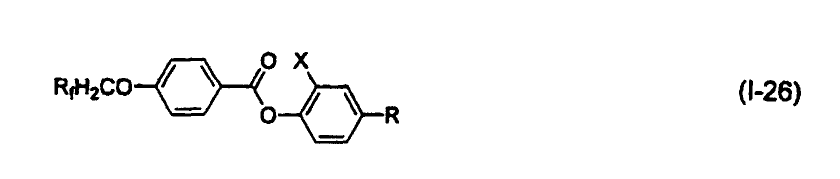 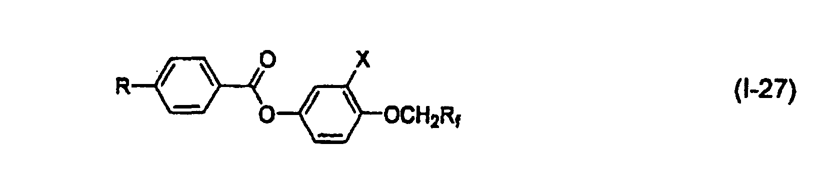 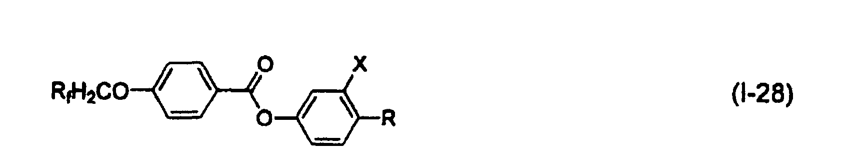 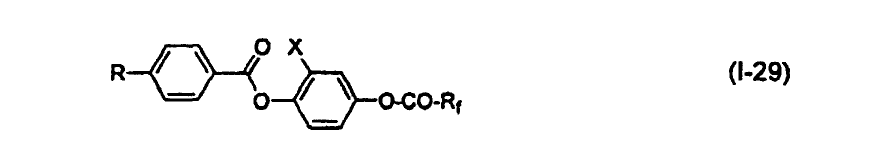 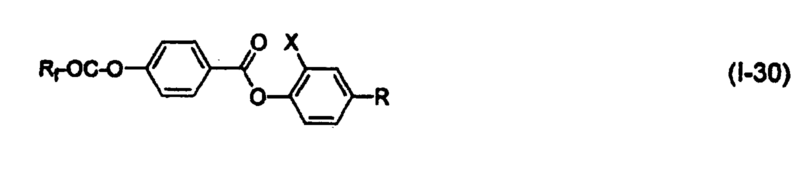 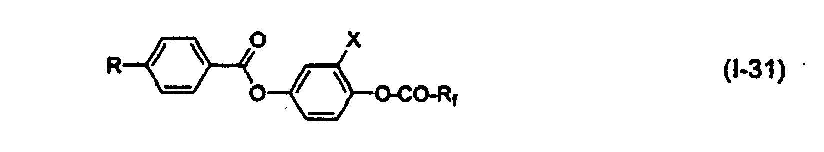 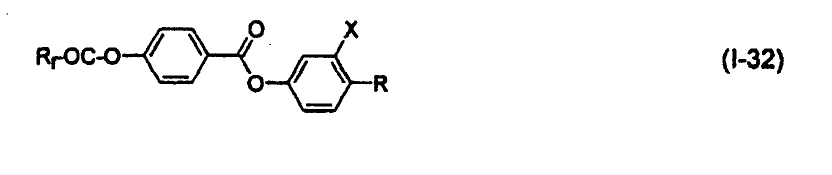 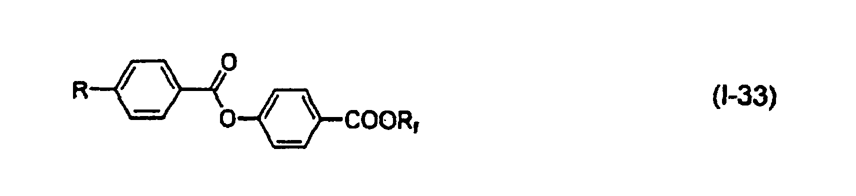 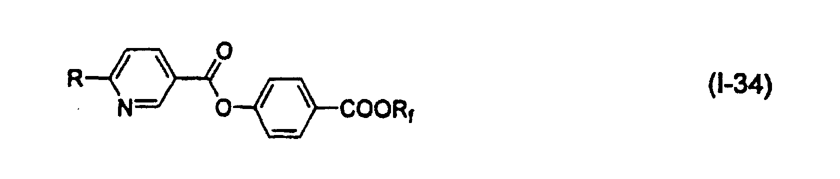 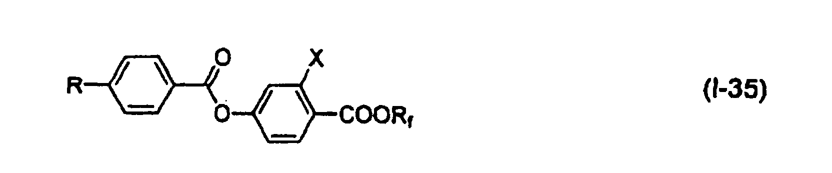 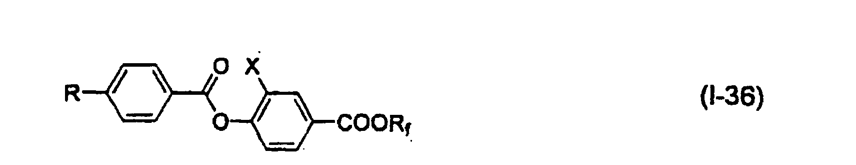 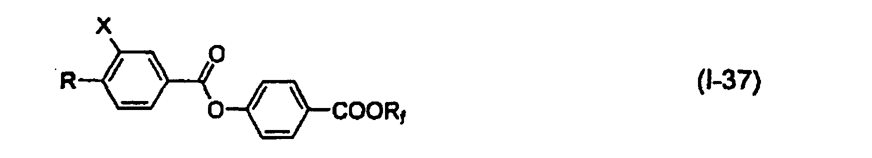 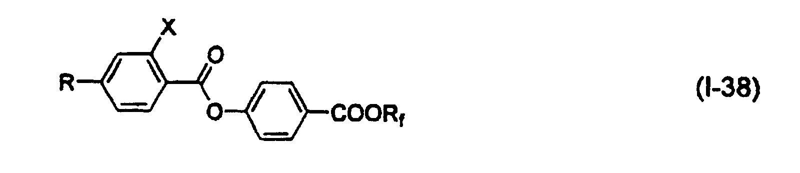 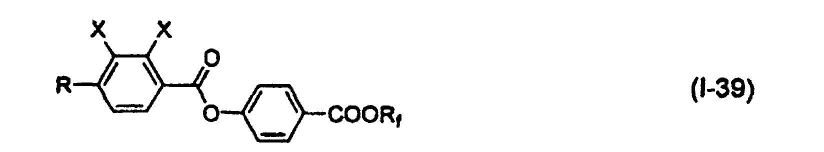 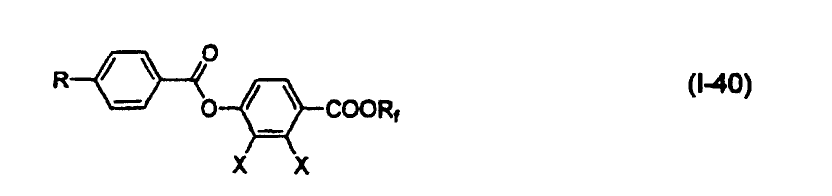 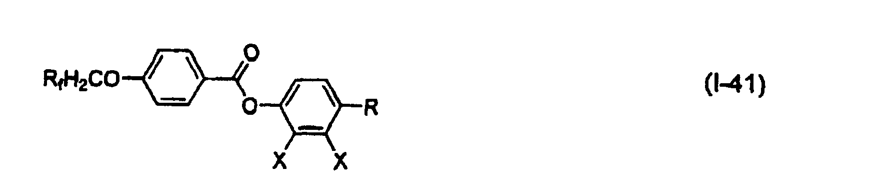 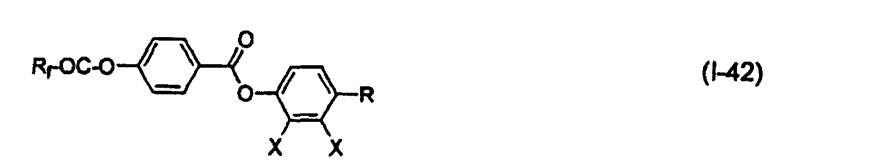 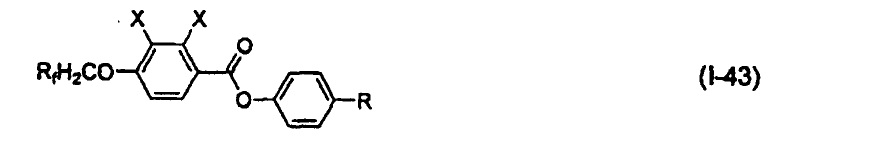 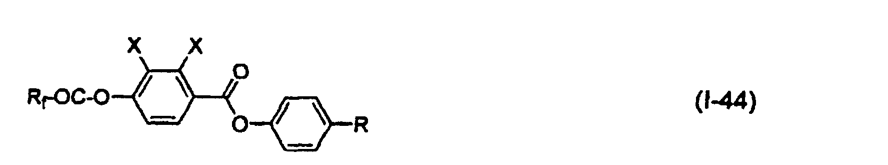 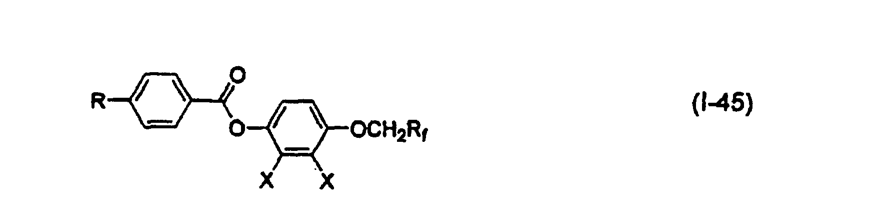 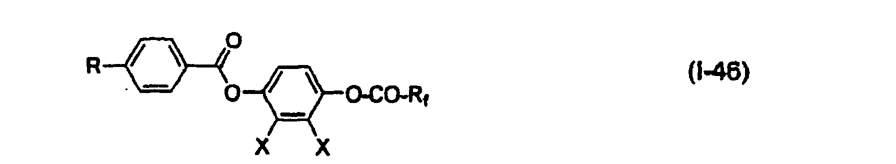 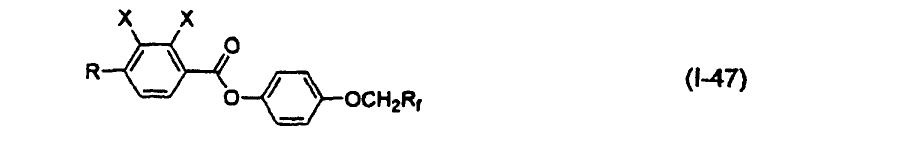 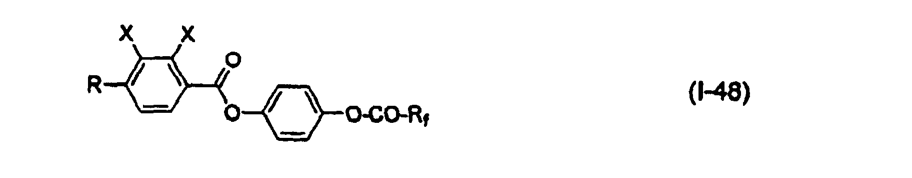 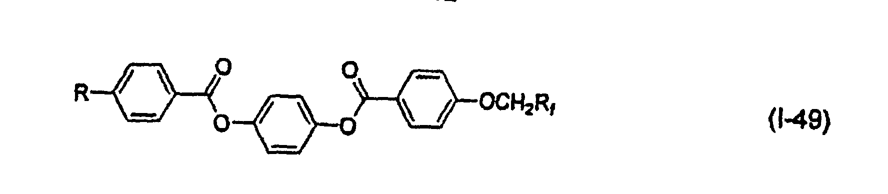 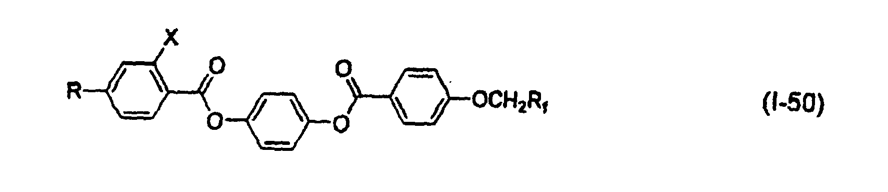 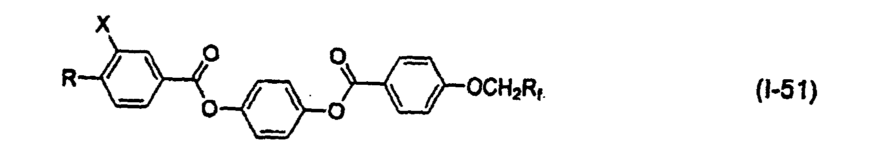 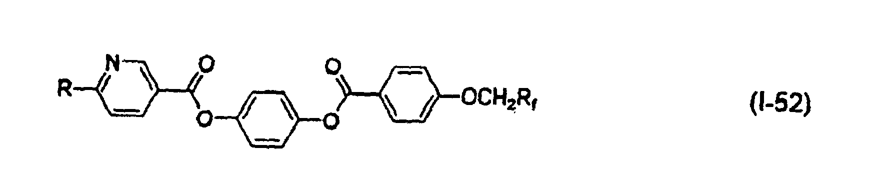 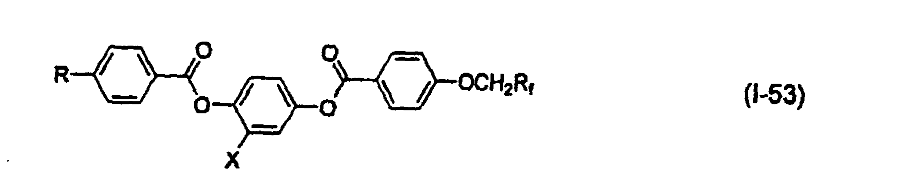 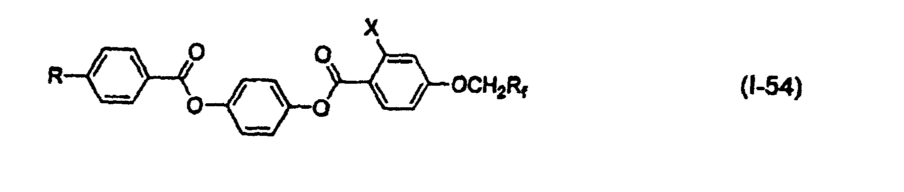 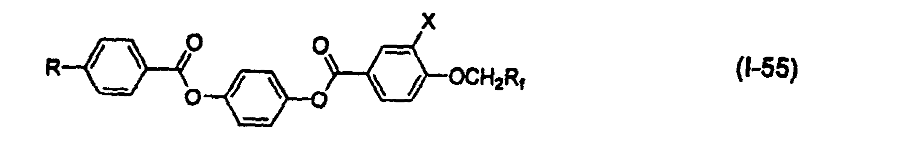 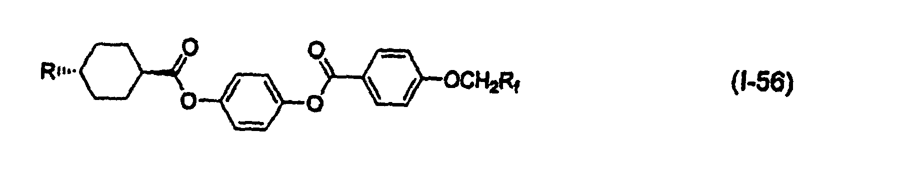 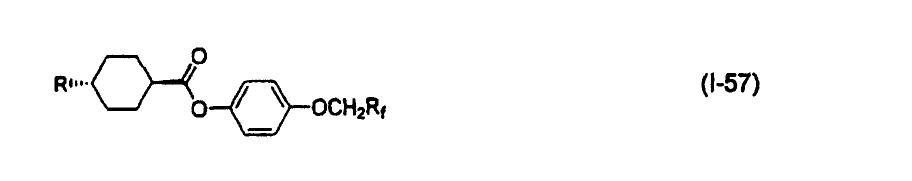 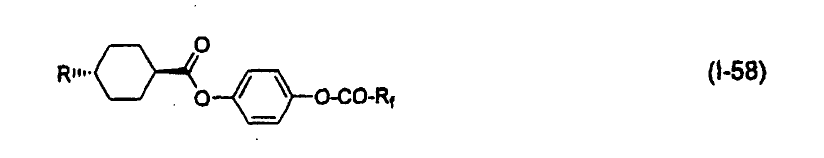 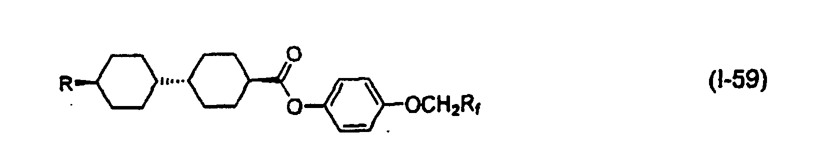 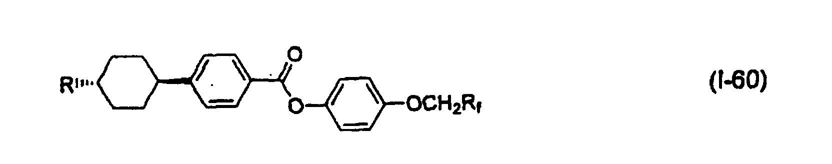 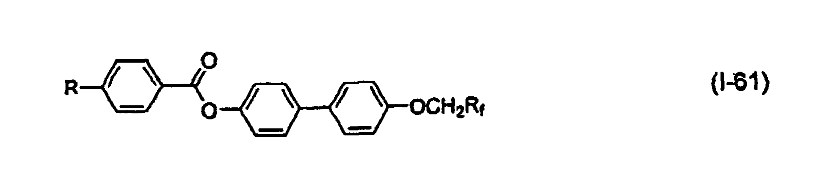 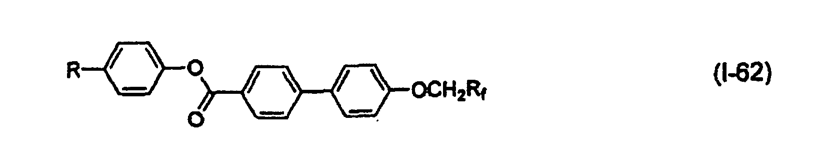 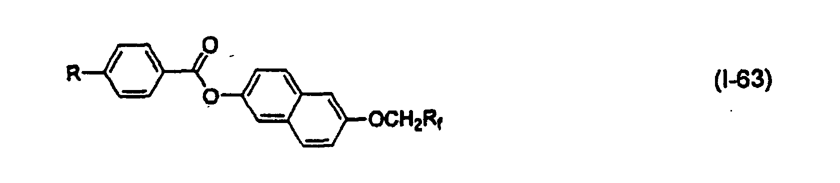 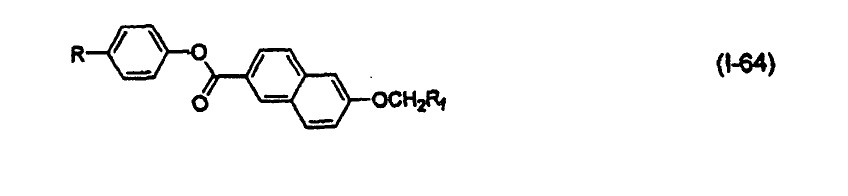 in which X is F, Cl or CN, and R and R_{f} have the meanings given for the formula (I) in claim 3.

5. A chip card as claimed in claim 3 or 4, wherein the liquid crystal comprises at least 5% by weight of one or more compounds of the formula (I).

6. A chip card as claimed in one or more of claims 3 to 5, wherein the liquid crystal comprises from 4 to 20 compounds of the formula (I).

7. A chip card as claimed in one or more of claims 1 to 6, wherein the electrode separation of the ferroelectric display is at least 1.5 µm.

8. A process for the production of a chip card as claimed in one or more of claims 1 to 7, in which a ferroelectric liquid-crystal display containing a ferroelectric liquid crystal is embedded in or applied to a plastic card, where the plastic card is provided with an integrated circuit which is able to store and/or process information electronically, and means for information transmission between the card and an electronic read and/or write system, wherein the liquid crystal comprises one or more mesogenic compounds and where these mesogenic compounds include a core structure comprising two or more ring compounds and one or two side chains, wherein at least one mesogenic compound has at least one partially or perfluorinated side chain.

9. The use of a ferroelectric liquid-crystal display containing a ferroelectric liquid crystal where the liquid crystal comprises one or more mesogenic compounds and where these mesogenic compounds include a core structure comprising two or more ring compounds and one or two side chains, wherein at least one mesogenic compound has at least one partially or perfluorinated side chain, for the production of chip cards having a permanently readable display.

## Revendications

1. Carte à puce, contenant un afficheur à cristal liquide ferroélectrique avec un cristal liquide ferroélectrique, le cristal liquide contenant un ou plusieurs composés mésogènes et ces composés mésogènes contenant une structure à noyaux constituée par deux ou plusieurs composés cycliques et une ou deux chaînes latérales, **caractérisée en ce que** au moins un composé mésogène présente au moins une chaîne latérale partiellement fluorée ou perfluorée.

2. Carte à puce selon la revendication 1, **caractérisée en ce qu'**il s'agit d'une carte Smart.

3. Carte à puce selon la revendication 1
ou 2, **caractérisée en ce que** le cristal liquide contient un ou plusieurs composés mésogènes avec des chaînes latérales partiellement fluorées ou perfluorées de formule (I),
R(-A¹-M¹)ₐ(-A²-M²)_{b}(-A³-M³)_{c}-A⁴-B-R_{f} (I)
où les symboles et les indices possèdent les significations suivantes :
R représente
a) un atome d'hydrogène, -F, -Cl, -CF₃, -OCF₃ ou -CN,
b) un reste alkyle linéaire ou ramifié (avec ou sans atome de carbone asymétrique) ayant 1 à 20 atomes de carbone,
b1) un ou plusieurs groupes CH₂ non adjacents et non terminaux pouvant être remplacés par -O-, -S-, -CO-, -CO-O-, -O-CO-, -O-CO-O- ou -Si(CH₃)₂- et/ou
b2) un ou plusieurs groupes CH₂ pouvant être remplacés par -CH=CH-, -C≡C-, cyclopropane-1,2-diyle, 1,4-phénylène, 1,4-cyclohexylène ou 1,3-cyclopentylène et/ou
b3) un ou plusieurs atomes de H pouvant être remplacés par F, CN et/ou Cl et/ou
b4) les groupes CH₃ terminaux pouvant être remplacés par un groupe chiral (optiquement actifs ou racémiques) : 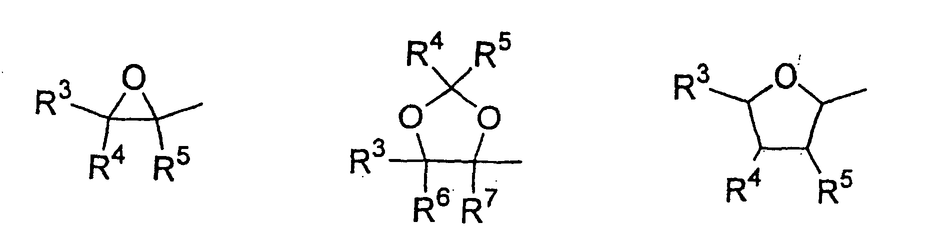 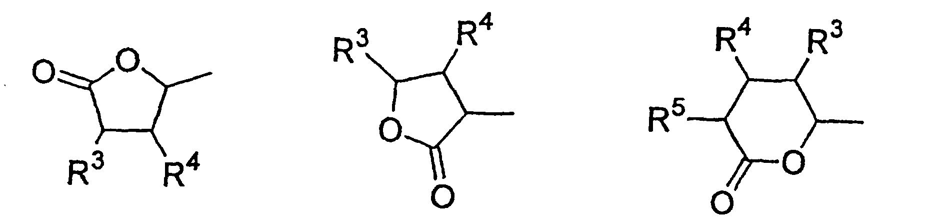 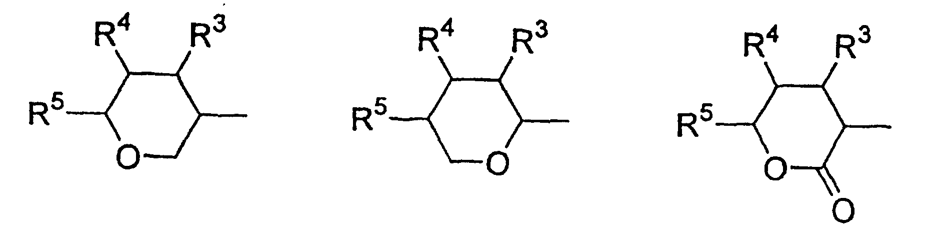 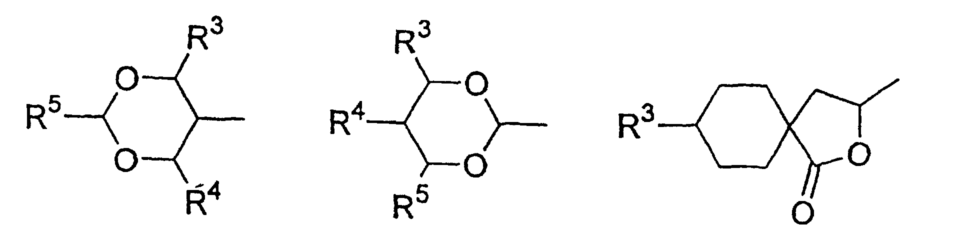 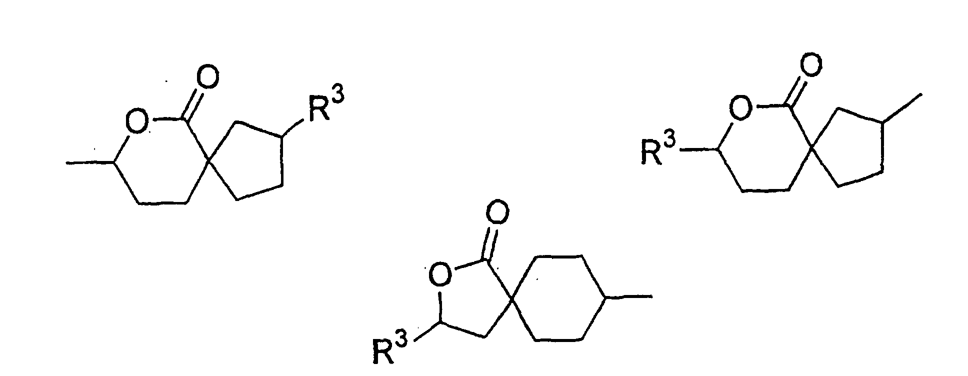 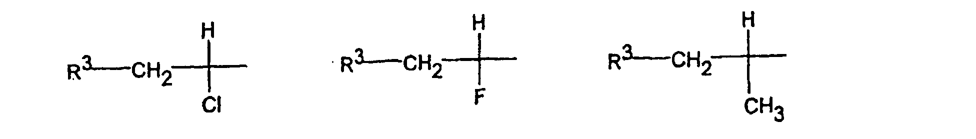 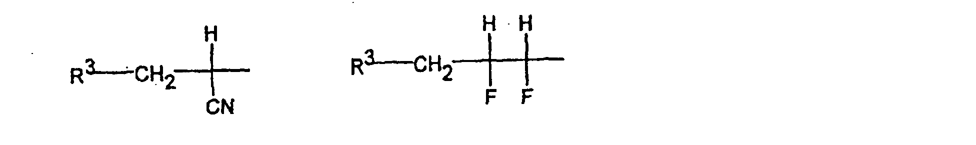
c) représente B-R_{f},
R³, R⁴, R⁵, R⁶, R⁷ sont identiques ou différents et représentent
a) un atome d'hydrogène,
b) un reste alkyle linéaire ou ramifié (avec ou sans atome de carbone asymétrique) ayant 1 à 16 atomes de carbone, où
b1) un ou plusieurs groupes CH₂ non adjacents et non terminaux pouvant être remplacés par -O- et/ou
b2) un ou deux groupes CH₂ pouvant être remplacés par -CH=CH-,
c) R⁴ et R⁵ conjointement, également
-(CH₂)₄- ou -(CH₂)₅-, lorsqu'ils sont liés à un système oxiranne, dioxolanne, tétra-hydrofuranne, tétrahydropyrane, butyrolactone ou valérolactone ;
R_{f} représente
un reste alkyle linéaire ou ramifié, partiellement fluoré ou perfluoré (avec ou sans atomes de carbone asymétrique) présentant 1 à 20 atomes de carbone, où
a) un ou plusieurs groupes CH₂ ou CF₂ non adjacents et non terminaux pouvant être remplacés par -O-, -S-, -CO-, -CO-O-, -O-CO-, -O-CO-O- ou -Si(CH₃)₂- et/ou
b) un ou plusieurs groupes CH₂ ou CF₂ pouvant être remplacés par -CH=CH-, -C≡C-, cyclopropane-1,2-diyle, 1,4-phénylène, 1,4-cyclohexylène ou 1,3-cyclopentylène ;
B représente
-O-, -S-, - (CH₂)ₙ₊₁-O-, -O-(CH₂)ₙ₊₁-, -(CH₂)ₙ₊₁-S-, -S-(CH₂)ₙ₊₁-, -CO-(CH₂)ₙ-, -CO-O-(CH₂)ₙ-, -O-CO-(CH₂)ₙ-, -CO-S-(CH₂)ₙ-, -S-CO- (CH₂)ₙ-, -CS-O-(CH₂)ₙ-, -O-CS-(CH₂)ₙ-, -SO₂-(CH₂)ₙ-, -OSO₂-(CH₂)ₙ-, -CH=CH-, -C≡C-, -(CH₂)ₙ₊₁-, -CH=N-, -N(CₖH₂ₖ₊₁)-, -(CH₂)ₙN(CₖH₂ₖ₊₁)-CO-, - (CH₂)ₙ-N(CₖH₂ₖ₊₁)-SO₂-, -O-[(CH₂)ₘ₊₁-O]ₗ-(CH₂)ₙ-, -[CH₂)ₘ₊₁-O]₁-(CH₂)ₙ- ou une simple liaison ;
m, n sont des entiers identiques ou différents, indépendamment l'un de l'autre, de 0 à 15, k est un entier de 0 à 4 et l est un entier de 1 à 6,à condition que m+n ≤ 15 ;
M¹, M², M³ sont identiques ou différents
-CO-O, -O-CO-, -CO-S-, -S-CO-, -CS-O-, -O-CS-, -CS-S-, -S-CS-, -CH₂-O-, -O-CH₂-, -CH₂-S, -S-CH₂-, -CH₂-CH₂-, -CH=CH-, -C≡C-, -CH₂-CH₂-CO-O-, -O-CO-CH₂-CH₂-, -CH=N- ou une simple liaison,
A¹, A², A³, A⁴ représentent, identiques ou différents, 1,4-phénylène, un ou plusieurs atomes de H pouvant être remplacés par F, Cl, CH₃, C₂H₅, OCH₃, CF₃, OCF₃ et/ou CN, 1,3-phénylène, un ou deux groupes CH pouvant être remplacés par N, pyrazine-2,5-diyle, un ou deux atomes de H pouvant être remplacés par F, Cl et/ou CN, pyridazine-3,6-diyle, un ou deux atomes de H pouvant être remplacés par F, Cl et/ou CN, pyridine-2,5-diyle, un ou plusieurs atomes de H pouvant être remplacés par F, Cl et/ou CN, pyrimidine-2,5-diyle un ou deux atomes de H pouvant être remplacés par F, Cl et/ou CN, 1,4-cyclohexylène, un ou deux atomes de H pouvant être remplacés par CN et/ou CH₃ et/ou F, (1,3,4)-thiadiazol-2,5-diyle, 1,3-dioxane-2,5-diyle, 1,3-dithiane-2,5-diyle, 1,3-thiazol-2,4-diyle, un atome de H pouvant être remplacé par F, Cl et/ou CN, 1,3-thiazol-2,5-diyle, un atome de H pouvant être remplacé par F, Cl et/ou CN, thiophène-2,4-diyle, un atome de H pouvant être remplacé par F, Cl et/ou CN, thiophène-2,5-diyle, un ou deux atomes de H pouvant être remplacés par F, Cl et/ou CN, naphtalène-2,6-diyle, naphtalène-1,4-diyle ou naphtalène-1,5-diyle, un ou plusieurs atomes de H pouvant être chaque fois remplacés par F, Cl et/ou CN et/ou un ou deux groupes CH pouvant être remplacés par N, phénanthrène-2,7-diyle ou 9,10-dihydro-phénanthrène-2,7-diyle, un, deux ou plusieurs atomes de H pouvant chaque fois être remplacés par F et/ou un ou deux groupes CH par N, indane-2,5-diyle, indan-1-one-2,5-diyle, benzothiazol-2,6-diyle, benzothiazol-2,5-diyle, benzoxazol-2,6-diyle, benzoxazol-2,5-diyle, benzofuranne-2,5-diyle, benzofuranne-2,6-diyle, 2,3-dihydrobenzofuranne-2,5-diyle, pipérazine-1,4-diyle, pipérazine-2,5-diyle ou 1,3-dioxaborinane-2,5-diyle ;
a, b, c valent zéro ou un,
à condition que le composé de formule (I) ne puisse pas contenir plus de quatre systèmes cyliques de cinq chaînons ou plus.

4. Carte à puce selon la revendication 3, **caractérisée en ce que** le(s) composé(s) de formule (I) est/sont choisis dans le groupe des composés (I-1) à (I-64) suivants : 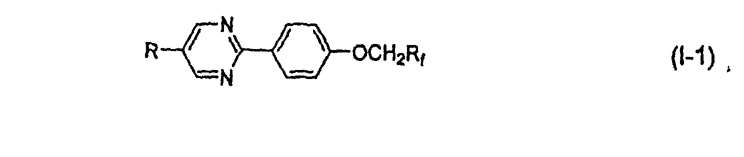 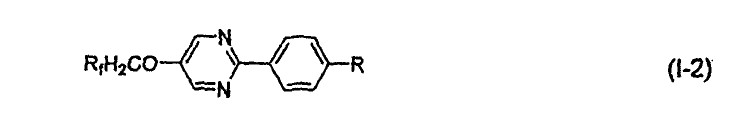 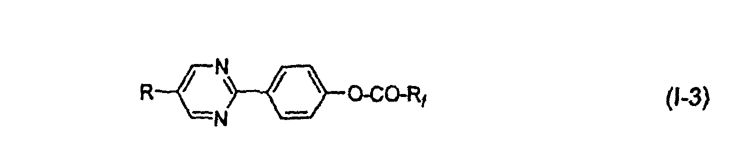 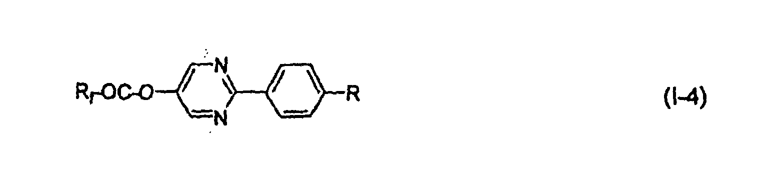 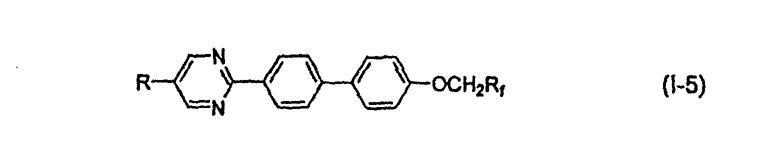 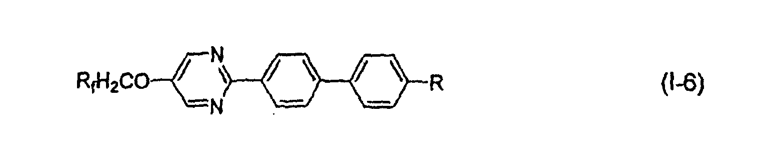 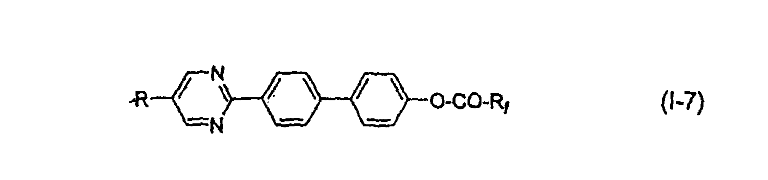 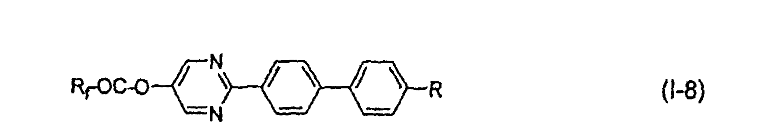 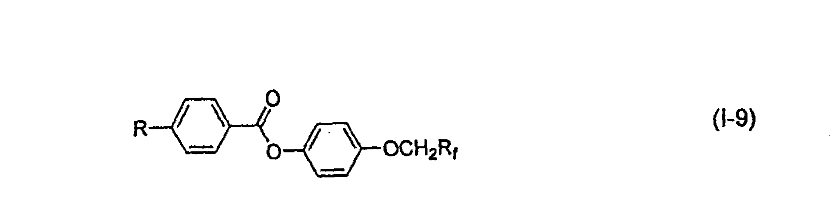 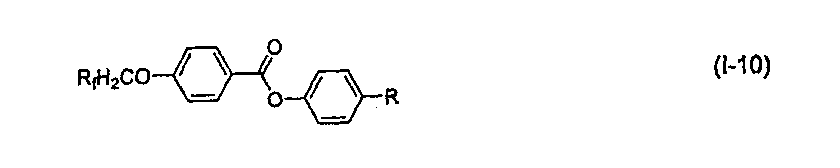 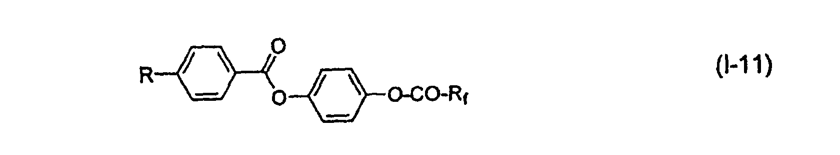 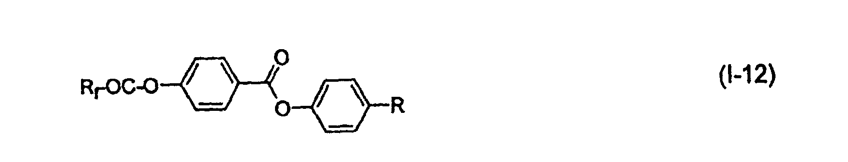 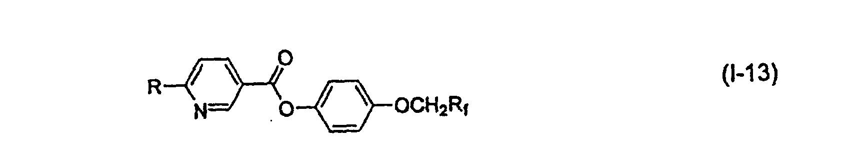 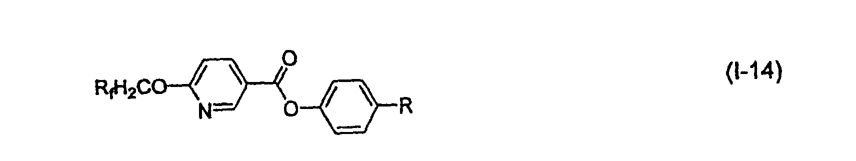 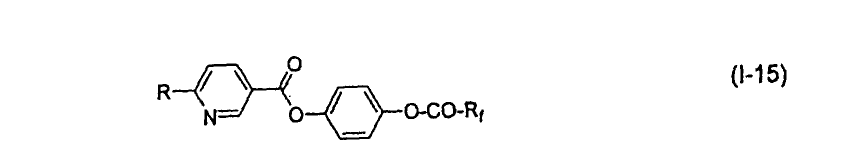 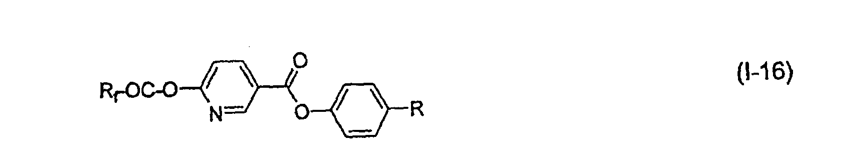 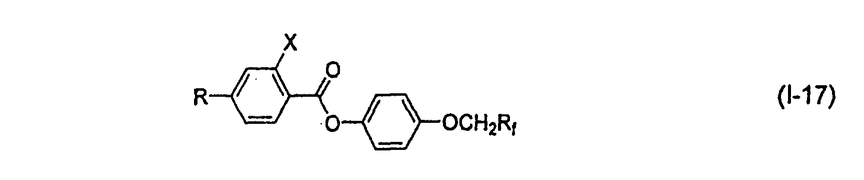 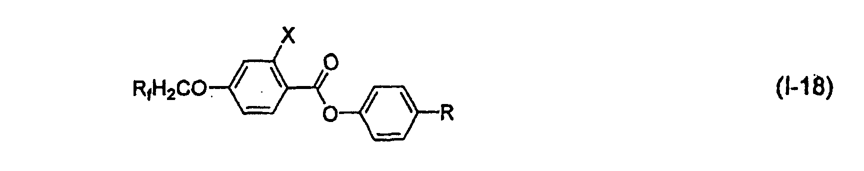 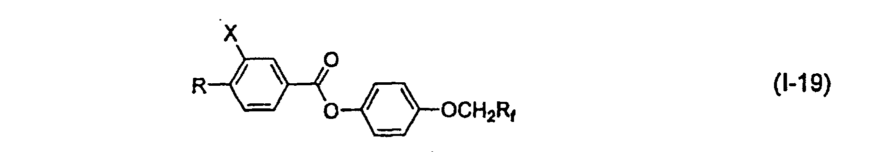 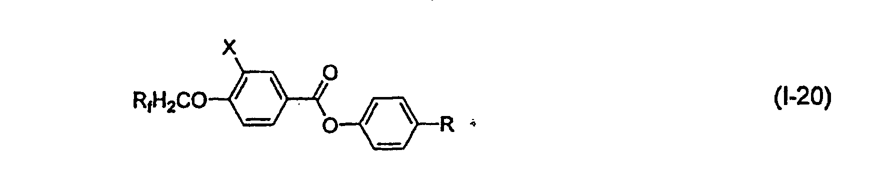 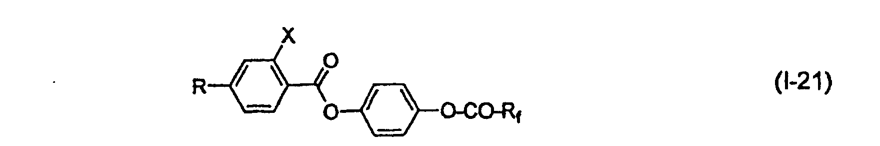 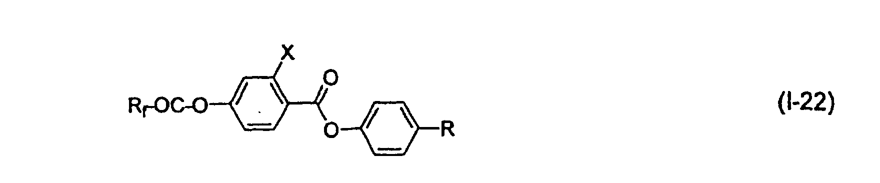 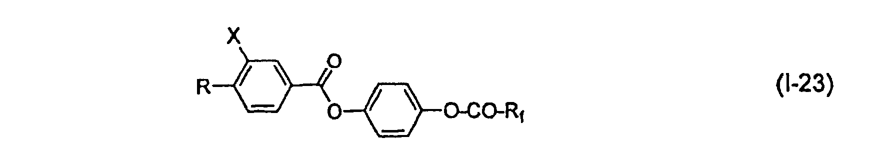 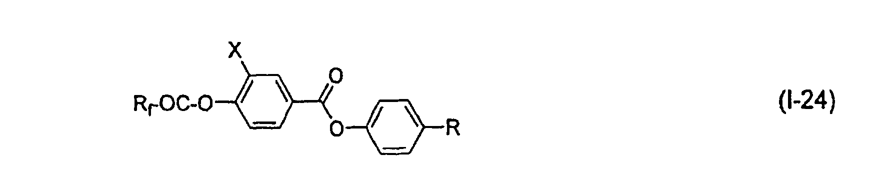 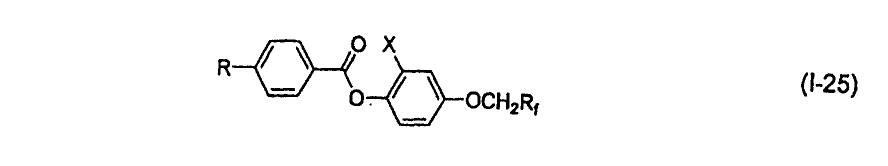 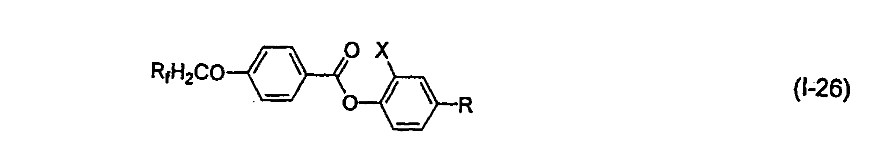 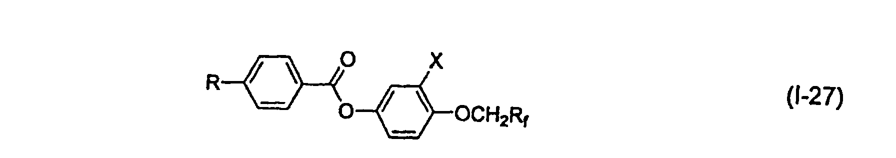 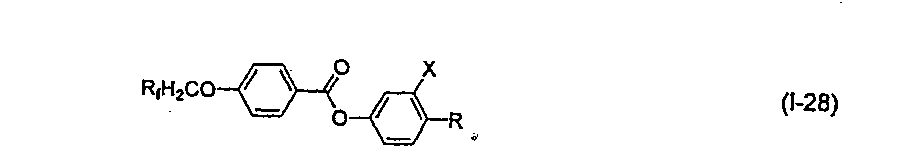 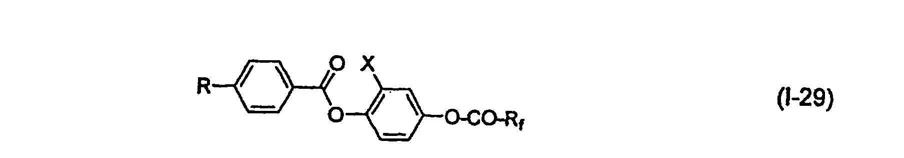 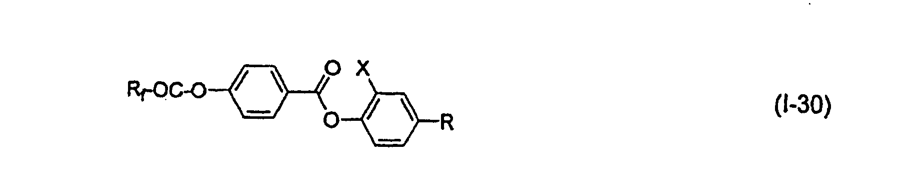 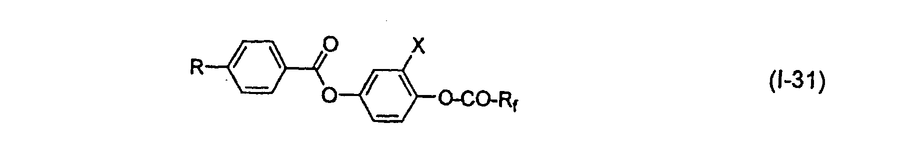 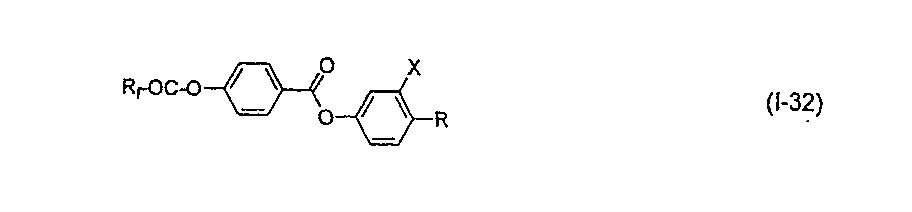 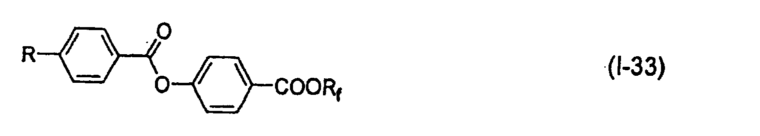 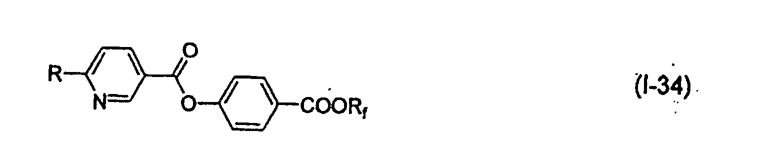 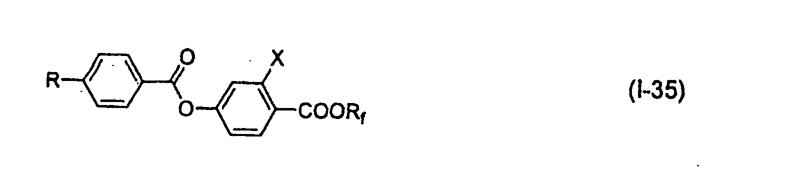 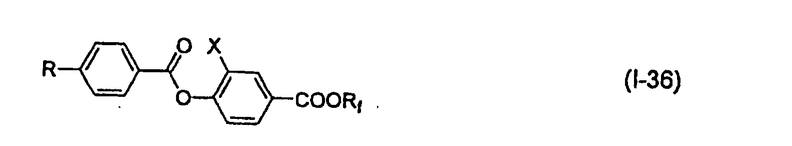 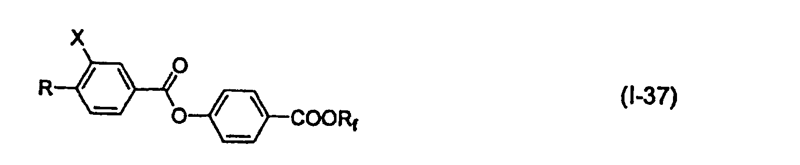 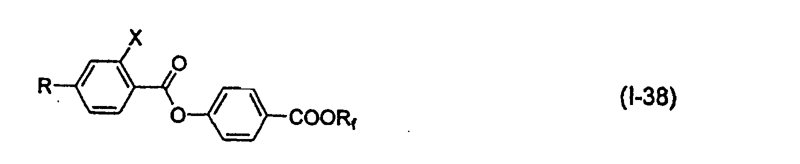 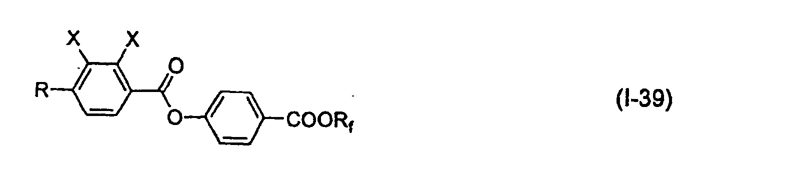 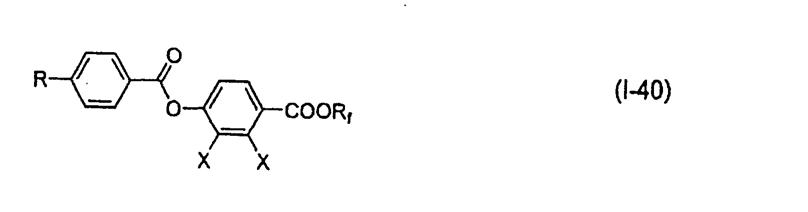 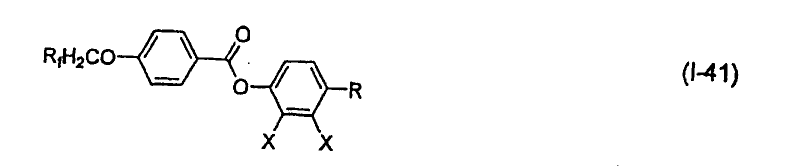 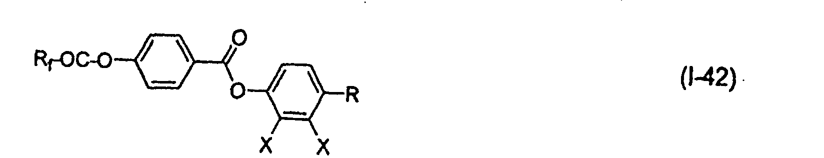 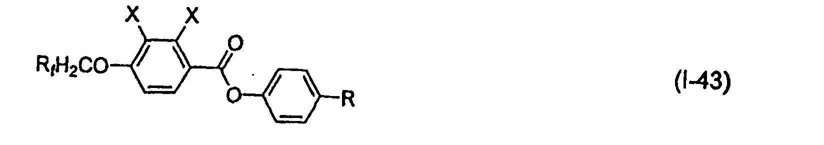 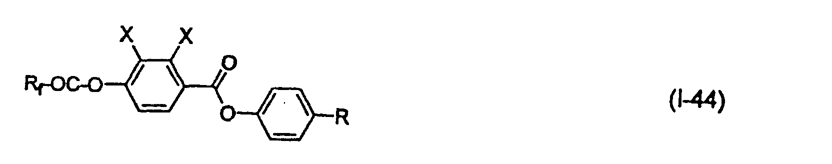 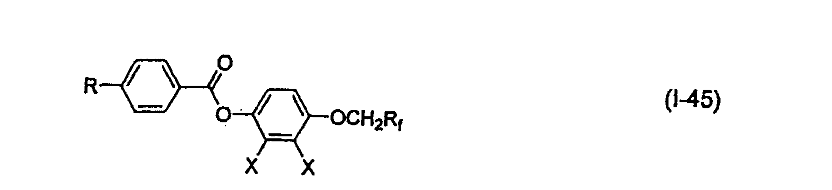 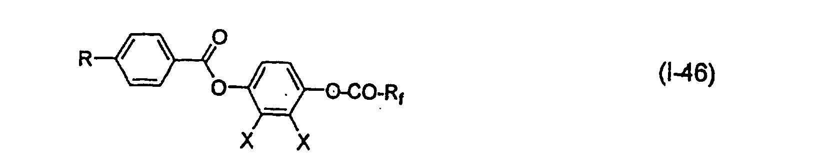 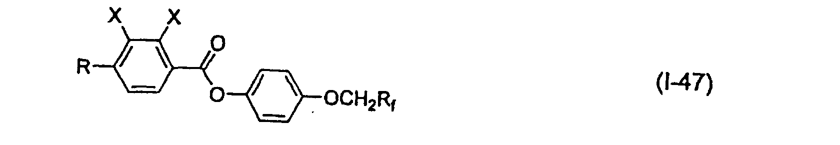 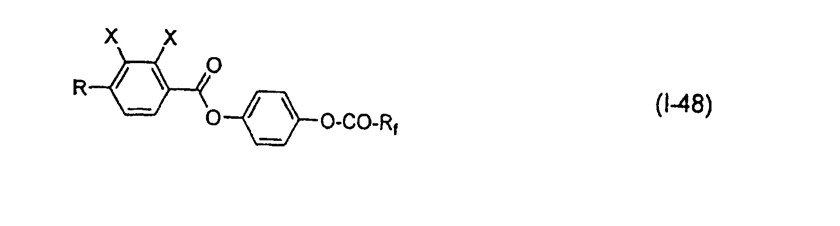 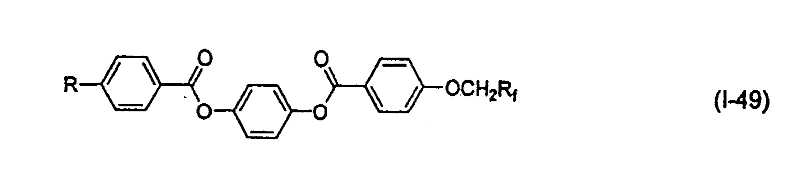 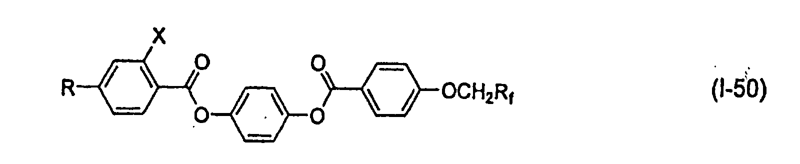 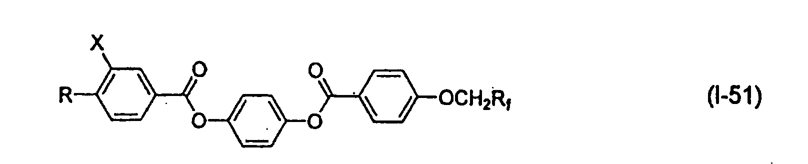 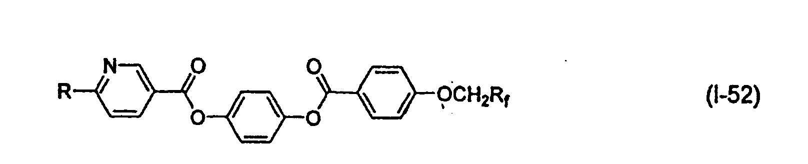 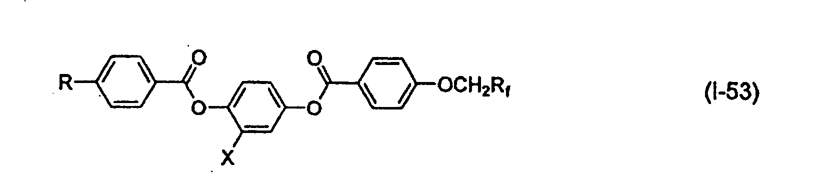 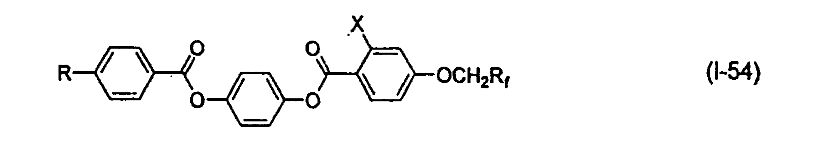 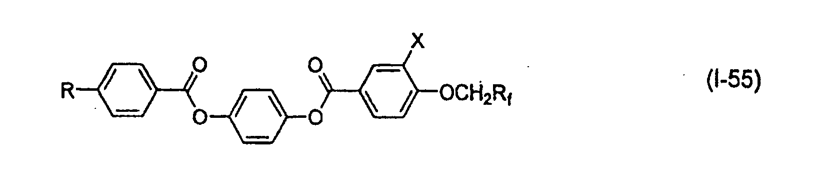 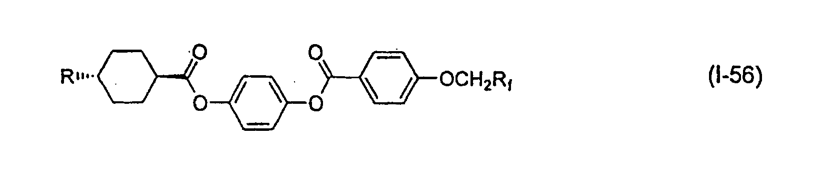 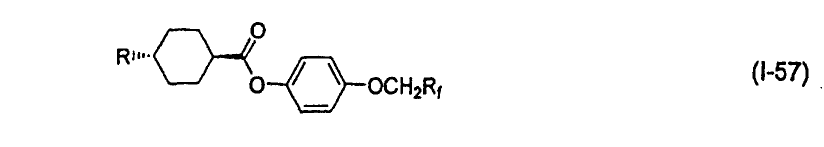 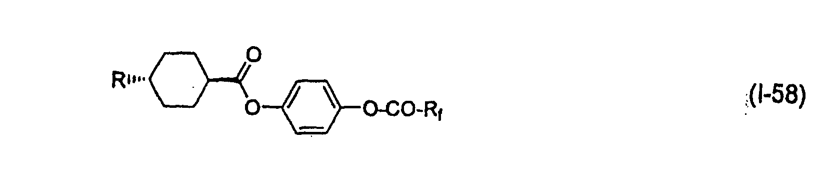 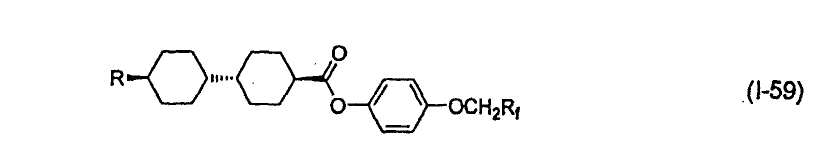 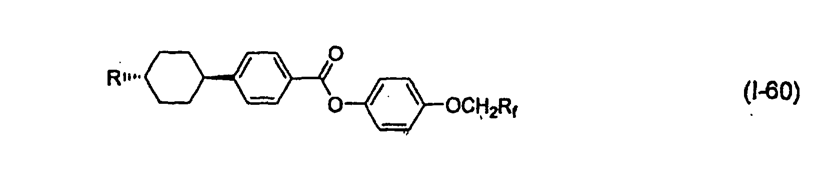 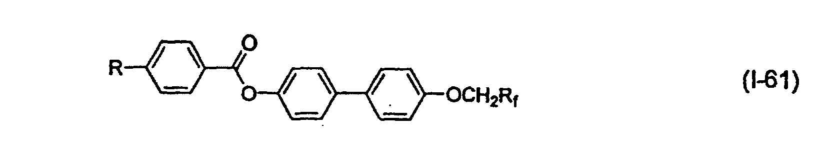 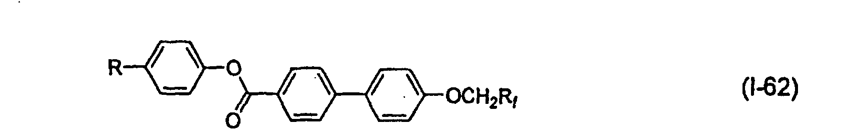 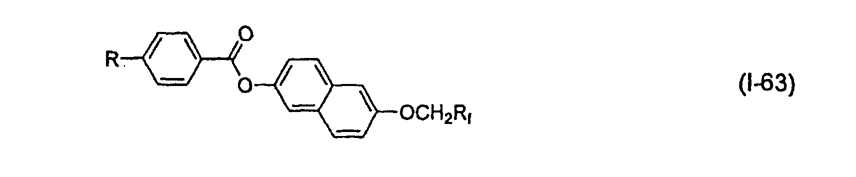 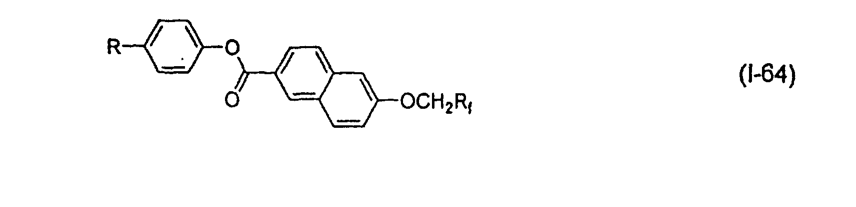 X représentant F, Cl ou CN et R, R₁ possèdent les significations données à la formule (I) à la revendication 3.

5. Carte à puce selon la revendication 3 ou 4, **caractérisée en ce que** le cristal liquide présente une teneur d'au moins 5 % en masse en un ou plusieurs composés de formule (I).

6. Carte à puce selon une ou plusieurs des revendications 3 à 5, **caractérisée en ce que** le cristal liquide contient 4 à 20 composés de formule (I).

7. Carte à puce selon une ou plusieurs des revendications 1 à 6, **caractérisée en ce que** l'écart des électrodes de l'afficheur à cristal liquide ferroélectrique est d'au moins 1,5 µm.

8. Procédé pour la prépaparation d'une carte à puce selon une ou plusieurs des revendications 1 à 7, dans lequel un afficheur à cristal liquide ferroélectrique avec un cristal liquide ferroélectrique est noyé dans ou déposé sur une carte plastique, la carte plastique étant pourvue d'un circuit intégré qui peut stocker et/ou traiter des informations à l'aide de moyens électroniques, et des agents pour le transfert d'informations entre la carte et un système électronique de lecture et/ou d'écriture, **caractérisé en ce que** le cristal liquide contient un ou plusieurs composés mésogènes et où ces composés mésogènes possèdent une structure à noyaux de deux ou plusieurs composés cycliques et une ou deux chaînes latérales, **caractérisé en ce que** au moins un composé mésogène présente au moins une chaîne latérale partiellement fluorée ou perfluorée.

9. Utilisation d'un afficheur à cristal liquide ferroelectrique, contenant un cristal liquide ferroélectrique, le cristal liquide ferroélectrique contenant un ou plusieurs composés mésogènes et où ces composés mésogènes présentent une structure à noyaux de deux ou plusieurs composés cycliques et une ou deux chaînes latérales, **caractérisée en ce que** au moins un composé mésogène présente au moins une chaîne latérale partiellement fluorée ou perfluorée, pour la fabrication de cartes à puce avec un affichage à lisibilité permanente.
